# EUROPÄISCHE PATENTSCHRIFT

(11) **EP 2 536 497 B1**
(45) Veröffentlichungstag und Bekanntmachung des Hinweises auf die Patenterteilung: **28.12.2016**
(21) Anmeldenummer: 11701021.5
(22) Anmeldetag: 24.01.2011
(51) Int. Cl.: B01J 20/20, B01J 20/22, B01J 20/26, B01J 20/28, B01J 20/30, B01J 20/32, B01D 53/02, B01D 53/04, C02F 1/28

(54) **AGGLOMERATE VON ADSORBERPARTIKELN UND METHODEN ZUR HERSTELLUNG SOLCHER ADSORBERPARTIKEL**
AGGLOMERATES OF ADSORBENT PARTICLES AND METHODS FOR THE PRODUCTION OF SUCH ADSORBENT PARTICLES
AGGLOMÉRÉS DE PARTICULES ADSORBANTES ET MÉTHODES POUR LA PRODUCTION DE CES PARTICULES ADSORBANTES

(30) Priorität: 15.02.2010 DE 102010008110; 24.06.2010 DE 102010024990
(43) Veröffentlichungstag der Anmeldung: 26.12.2012
(73) Patentinhaber: Blücher GmbH, 40699 Erkrath (DE)
(72) Erfinder: GIEBELHAUSEN, Jann-Michael, 14712 Rathenow (DE); FICHTNER, Sven, 14776 Brandenburg (DE); BÖHRINGER, Bertram, 42115 Wuppertal (DE)
(74) Vertreter: Von Rohr Patentanwälte Partnerschaft mbB
(86) Internationale Anmeldenummer: PCT/EP2011/000268
(87) Internationale Veröffentlichungsnummer: WO 2011/098210

(56) Entgegenhaltungen:
- DE-B1- 2 804 154
- DE-U1-202008 016 507
- US-A- 3 217 715
- US-A- 5 639 550
- US-A- 5 767 060
- US-A1- 2005 260 396

## Beschreibung

Die vorliegende Erfindung betrifft das Gebiet der Adsorptionsfiltertechnologie.

Insbesondere betrifft die vorliegende Erfindung ein Verfahren zur Herstellung von adsorptiven Systemen bzw. adsorptiven Strukturen auf Basis von Agglomeraten von unterschiedlichen Adsorbentien, insbesondere Adsorberpartikeln, sowie die durch das Verfahren erhältlichen adsorptiven Systeme und deren Verwendung.

Des weiteren betrifft die vorliegende Erfindung adsorptive Formkörper, welche ausgehend von dem adsorptiven System nach der Erfindung bzw. einer Vielzahl an erfindungsgemäßen adsorptiven Systemen bzw. Strukturen erhältlich sind.

Zudem betrifft die vorliegende Erfindung Filter als solche, welche die entsprechenden erfindungsgemäßen adsorptiven Formkörper umfassen.

Zur Aufreinigung oder Aufbereitung von fluiden Medien, wie insbesondere Gasen, Gasströmen oder Gasgemischen, wie z. B. Luft, oder aber Flüssigkeiten, wie z. B. Wasser, kommen oft partikuläre Systeme auf Basis von Teilchen mit spezifischer Wirkung (z. B. Adsorbentien, Ionenaustauscher, Katalysatoren etc.) zum Einsatz. So ist beispielsweise die Verwendung von Adsorberpartikeln zur Entfernung von Gift- oder Schadstoffen und Gerüchen aus Gas- oder Luftströmen oder aber aus Flüssigkeiten aus dem Stand der Technik bekannt.

Die Verwendung loser Schüttungen der vorgenannten Teilchen, insbesondere in Form von sogenannten Schüttfiltern, ist dabei die zentrale Anwendungsform, um die betreffenden Partikel, wie z. B. Adsorberpartikel, mit dem betreffenden Gas oder der betreffenden Flüssigkeit in Kontakt zu bringen.

Da bei kleinen Partikeln, wie z. B. Adsorberpartikeln, im Verhältnis zur Teilchengröße bzw. zum Teilchendurchmesser eine größere Oberfläche zur Verfügung steht als bei größeren Partikeln, ist bei den kleineren Partikeln erwartungsgemäß die Wirkungsweise besser. Allerdings führen die kleinen Partikel in loser Schüttung zu einem hohen Druckverlust, und zudem wird durch die kleinen Partikel die Bildung von Kanälen gefördert, was eine gewisse Durchbruchgefahr mit sich bringt. Aus diesem Grund ist die bei Schüttungen verwendete Teilchengröße oftmals nur ein Kompromiß, so daß meist nicht die für die Anwendung optimalen Teilchengrößen zum Einsatz kommen können. Insbesondere kommen zu Zwecken der Erreichung wirtschaftlicher Betriebsbedingungen, insbesondere eines akzeptablen Druckverlustes, oftmals nur größere Partikel (z. B. Adsorberpartikel) zum Einsatz, als es für eine optimale Nutzung der Adsorptionseffizienz wünschenswert wäre, so daß oft ein beträchtlicher Teil der theoretisch vorhandenen Kapazität nicht genutzt werden kann.

Aus der DE 38 13 564 A1 und aus der zu derselben Patentfamilie gehörenden EP 0 338 551 A2 ist eine Aktivkohlefilterschicht für ABC-Schutzmasken bekannt, welche ein hochluftdurchlässiges, im wesentlichen formstabiles dreidimensionales Trägergerüst umfaßt, an welchem eine Schicht von körnigen, insbesondere kugelförmigen Aktivkohleteilchen eines Durchmessers von 0,1 bis 1 mm fixiert ist, wobei es sich bei dem Trägergerüst um ein Geflecht aus Drähten, Monofilamenten oder Stegen oder um einen großporigen retikulierten Polyurethanschaumstoff handeln kann. Nachteilig bei dem dort beschriebenen System ist die Tatsache, daß ein zusätzliches Trägermaterial benötigt wird, welches in einem relativ aufwendigen Bearbeitungsprozeß mit den betreffenden Partikeln beaufschlagt werden muß. Zudem beschränkt das einmal gewählte Trägergerüst dann die betreffende Anwendung.

Weiterhin ist aus der DE 42 39 520 A1 ein Hochleistungsfilter bekannt, welches aus einem dreidimensionalen Trägergerüst besteht, auf welchem mittels einer Haftmasse Adsorberteilchen fixiert sind, wobei das Trägergerüst durch einen thermisch stabilen und sehr hydrolysebeständigen Kunststoff ummantelt ist, dessen Gewicht ca. 20 bis 500 Gew.-%, bezogen auf den Träger, beträgt. Insbesondere handelt es sich bei dem Trägergerüst um einen großporigen retikulierten Polyurethanschaumstoff, welcher durch ein Silikonharz, Polypropylen, hydrolysefestes Polyurethan, ein Acrylat, einen Synthesekautschuk oder Fluorpolymere ummantelt ist. Der Herstellungsprozeß für diese Strukturen ist relativ aufwendig. Zudem erfordert die dort beschriebene Technologie das Vorhandensein eines zusätzlichen Trägers.

Des weiteren sind aus der DE 43 43 358 A1 Aktivkohle enthaltende poröse Körper bekannt, welche aus Platten und Agglomeraten aus vermahlener, in einer porösen SiO₂-Matrix eingebauten Aktivkohle bestehen. Insbesondere werden dort poröse Platten oder Körper mit adsorbierenden Eigenschaften beschrieben, bei denen Aktivkohlekörner oder Aktivkohlekügelchen bzw. Aktivkohle enthaltende Körner oder Kügelchen mit Hilfe einer Silikatlösung aneinander zum Haften gebracht sind und nachfolgend die Silikatbrücken in Silicagelbrücken umgewandelt und die Körper getrocknet werden. Nachteilig hierbei ist die festgelegte Geometrie dieser porösen Körper sowie deren mangelnde Flexibilität und Kompressibilität, infolge derer sie für Filterbedingungen unter mechanischer Belastung nicht geeignet sind. Weiterhin nachteilig ist, daß die aktivkohlehaltigen Partikel vollständig mit der Silikatlösung benetzt werden, so daß ein großer Teil der Kapazität dieser Partikel nicht mehr für adsorptive Prozesse zur Verfügung steht.

Gleichermaßen sind aus der DE 43 31 586 C2 Agglomerate aus Aktivkohle bekannt, bei denen Aktivkohleteilchen mit einem Durchmesser zwischen 0,1 bis 5 mm durch leichten Druck unter Erwärmung um ein etwa gleichgroßes Teilchen aus Pech angeordnet und zum Haften gebracht sind und nachfolgend das Pechteilchen durch Oxidation unschmelzbar gemacht und in Aktivkohle umgesetzt ist, so daß der freie Zwischenraum zwischen den Teilchen im Agglomerat eine Weite von mindestens 10 Vol.-% der Teilchengröße aufweist. Nachteilig bei den dort beschriebenen Teilchen ist die relativ aufwendige, energiereiche Herstellung sowie die mangelnde Kompressibilität der erhaltenen Agglomerate. Infolge der Starrheit der Aktivkohleagglomerate ist eine Verwendung für Filteranwendungen unter mechanischer Belastung nicht vorgesehen. Auch ist infolge der mangelnden Kompressibilität eine Weiterverarbeitung zu Formkörpern unter Verpressung nicht möglich.

Gleiches trifft auch auf die porösen Körper mit adsorbierenden Eigenschaften gemäß der DE 42 38 142 A1 zu, welche Adsorberteilchen umfassen, die über Brücken aus anorganischem Material, insbesondere Tonerde, miteinander verbunden sind, wobei die Hohlräume zwischen den Adsorberteilchen 10 bis 100 % des Volumens der Adsorberteilchen ausmachen. Auch die dort beschriebenen porösen Körper weisen eine nur geringe Flexibilität und Kompressibilität auf, so daß eine Verwendung unter mechanischer Belastung und eine Weiterverarbeitung zu Formkörpern unter Verpressung ausgeschlossen ist.

Weiterhin betrifft die auf die Anmelderin selbst zurückgehende deutsche Patentanmeldung DE 10 2008 058 249.2 mit Anmeldetag vom 19. November 2008 adsorptive Strukturen auf Basis von Agglomeraten von Adsorberpartikeln, bei denen Adsorberpartikel gleicher Ausprägung bzw. Formgebung über ein thermoplastisches Bindemittel miteinander verbunden sind. Auf Basis derartiger Agglomerate können bereits leistungsfähige Adsorptionsmaterialien bereitgestellt werden, welche insbesondere im Schüttbett eine im Vergleich zu den reinen Basisadsorberpartikeln deutlich verringerte Druckdifferenzen aufweisen, so daß bei derartigen Agglomeraten ein sehr gutes Durchströmungsverhalten realisiert werden kann. Jedoch ist die durch das thermoplastische Polymer ausgebildete Oberfläche der adsorptiven Strukturen mitunter nicht vollständig mit Adsorberpartikeln besetzt, so daß in einem gewissen Maße nichtadsorptive Oberflächen hinsichtlich der adsorptiven Struktur vorliegen.

Die US 3 217 715 A betrifft einen Zigarettenfilter in Form eines zylinderförmigen Einsatzes, wobei der Filter aus teilchenförmiger Aktivkohle besteht, welche über ein thermoplastisches Harz zu dem Filtereinsatz verbunden ist.

Weiterhin betrifft die DE 20 2008 016 507 U1 einen adsorptiven Formkörper, welcher aus einer Vielzahl adsorptiver Strukturen auf Basis von Agglomeraten von Adsorberpartikeln aufgebaut ist.

Weiterhin betrifft die gleichermaßen auf die Anmelderin selbst zurückgehende DE 28 04 154 ein Filtermaterial aus einem offenporigen, flexiblen Schaumstoffträger und von dessen Porenwänden getragenen Adsorberpartikeln, wobei in die Poren des Schaumstoffträgers zusätzlich poröse Adsorberkörner eingelagert sind.

Weiterhin betrifft die US 5 767 060 A ein Mehrkomponenten-Filtermedium mit mindestens zwei aktiven Komponenten auf Basis von Aktivkohle einerseits und einer Mischung aus mindestens zwei organischen Polymeren andererseits. Weiterhin betrifft die US 5 639 550 A ein teilchenförmiges Kompositmaterial auf Basis eines Trägermaterials, auf welchem unter Verwendung eines Bindemittelmaterials ein teilchenförmiges Primärmaterial fixiert ist, wobei die Erweichungstemperatur des Bindemittelmaterials unterhalb der Erweichungstemperatur des Trägermaterials und unterhalb der Erweichungstemperatur des Primärmaterials liegen soll.

Schließlich betrifft die US 2005/0260396 A1 einen porösen Komposit-Block aus Bindemittelpartikeln und Adsorber-körnern und -partikeln, wobei die Körner größer als die Partikel sind.

Der Komposit-Block ist zur Wasserreinigung geeignet.

Vor diesem technischen Hintergrund liegt daher der vorliegenden Erfindung die Aufgabe zugrunde, adsorptive Systeme bzw. adsorptive Formkörper auf Basis von Agglomeraten bereitzustellen, welche die zuvor geschilderten Nachteile des Standes der Technik zumindest weitgehend vermeiden oder aber wenigstens abschwächen.

Insbesondere ist eine Aufgabe der vorliegenden Erfindung darin zu sehen, adsorptive Systeme bzw. adsorptive Formkörper bereitzustellen, welche zum einen die Nachteile herkömmlicher Schüttfilter auf Basis von in loser Schüttung vorliegenden separaten Partikeln vermeiden bzw. zumindest abschwächen sollen. Zudem soll zum anderen eine weiterführende Verbesserung der adsorptiven Eigenschaften sowohl hinsichtlich der Adsorptionskapazität als auch hinsichtlich des Adsorptionsspektrums insbesondere im Hinblick auf eine gezielte Maßschneiderung der adsorptiven Eigenschaften in bezug auf die Art bzw. Natur der zu adsorbierenden Substanzen realisiert werden.

Weiterhin liegt eine Aufgabe der vorliegenden Erfindung darin, die in der zuvor angeführten DE 10 2008 058 249.2 beschriebenen Systeme weiterzuentwickeln und diese Systeme insbesondere in bezug auf die Adsorptionskapazität und das Adsorptionsspektrum zu verbessern, wobei mit ein und demselben Material eine Vielzahl verschiedener Substanzen effektiv adsorbiert werden soll.

Zudem besteht eine noch weitere Aufgabe der vorliegenden Erfindung darin, adsorptive Systeme bzw. adsorptive Formkörper, welche die erfindungsgemäßen Systeme enthalten oder hieraus bestehen, bereitzustellen, welche zudem auch einen Einsatz unter hoher mechanischer Belastung ermöglichen, insbesondere im Hinblick auf die Bereitstellung einer ausreichenden Flexibilität bzw. Kompressibilität der erfindungsgemäßen adsorptiven Systeme, so daß auf deren Basis eine Weiterverarbeitung zu adsorptiven Formkörpern ermöglicht werden kann.

Die zuvor geschilderte Aufgabenstellung wird erfindungsgemäß durch den Gegenstand von Patentanspruch 1 gelöst, welcher das erfindungsgemäße Verfahren zur Herstellung von adsorptiven Systemen unter Verwendung eines ersten partikulären Adsorptionsmaterials (A) und eines hiervon verschiedenen zweiten partikulären Adsorptionsmaterials (B) betrifft; weitere, vorteilhafte Weiterbildungen und Ausgestaltungen dieses Erfindungsaspekts sind Gegenstand der entsprechenden Unteransprüche.

Weiterer Gegenstand der vorliegenden Erfindung ist das durch das Verfahren erhältliche adsorptive System nach der Erfindung, wie es Gegenstand des entsprechenden unabhängigen Anspruchs ist.

Weitere, vorteilhafte Weiterbildungen und Ausgestaltungen dieses Erfindungsaspekts sind Gegenstand der jeweiligen Unteransprüche.

Darüber hinaus sind Gegenstand der vorliegenden Erfindung die erfindungsgemäßen Verwendungen des adsorptiven Systems nach der vorliegenden Erfindung, wie sie in dem entsprechenden unabhängigen Verwendungsanspruch definiert sind.

Weiterer Gegenstand der vorliegenden Erfindung ist der Formkörper nach der Erfindung sowie darüber hinaus Filter, welche den adsorptiven Formkörper nach der Erfindung umfassen, gemäß den jeweiligen unabhängigen Patentansprüchen.

Es versteht sich von selbst, daß Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in bezug auf die übrigen Erfindungsaspekte entsprechend gelten.

Weiterhin versteht es sich von selbst, daß bei nachfolgenden Werte-, Zahlen- und Bereichsangaben die angegebenen Bereiche nicht beschränkend zu verstehen sind; es versteht sich für den Fachmann, daß einzelfallbedingt oder anwendungsbezogen von den angegebenen Bereichen und Angaben abgewichen werden kann, ohne daß der Rahmen der vorliegenden Erfindung verlassen ist. Zudem gilt, dass alle im Folgenden genannten Werte- bzw. Parameterangaben oder dergleichen grundsätzlich mit genormten oder explizit angegebenen Bestimmungsverfahren oder aber mit dem Fachmann an sich geläufigen Bestimmungsmethoden bestimmt bzw. ermittelt werden können.

Dies vorausgeschickt, wird im folgenden die vorliegende Erfindung näher beschrieben.

Gegenstand der vorliegenden Erfindung ist somit - gemäß einem **ersten** Aspekt der vorliegenden Erfindung - ein durch das nachfolgend beschriebene Verfahren nach der Erfindung erhältliches adsorptives System auf Basis eines Agglomerates, mit einer Vielzahl von Adsorberpartikeln (A) und (B),
- wobei die Adsorberpartikel (A) und (B) auf einem Bindemittelträger fixiert, insbesondere zum Haften gebracht, und über den Bindemittelträger zu dem adsorptiven System, insbesondere zu einem Agglomerat, verbunden sind und
- wobei die Adsorberpartikel (A) und (B) ein erstes partikuläres Adsorptionsmaterial (A) und ein von dem ersten partikulären Adsorptionsmaterial (A) verschiedenes, zweites partikuläres Adsorptionsmaterial (B) aufweisen.

Der Begriff "adsorptives System" bzw. "Agglomerate", wie er im Rahmen der vorliegenden Erfindung verwendet wird, ist sehr breit zu verstehen und bezeichnet insbesondere eine mehr oder weniger verfestigte bzw. zusammengefügte Anhäufung von zuvor losen bzw. separaten Bestandteilen (d. h. einzelnen Adsorberpartikeln bzw. einzelnen Teilchen des jeweiligen partikulären Adsorptionsmaterials (A) und (B)) zu einem mehr oder weniger festen Verbund. Zudem bezeichnet daher der Begriff im Rahmen der vorliegenden Erfindung sozusagen technisch hergestellte Zusammenballungen bzw. Anhäufungen einzelner Adsorberpartikel, welche im vorliegenden Fall durch ein insbesondere organisches Polymer bzw. Bindemittel zusammengefügt sind.

Der Begriff "adsorptives System" bzw. "Agglomerat" bezeichnet im Rahmen der vorliegenden Erfindung gleichermaßen sozusagen eine technisch hergestellte Zusammenballung bzw. Anhäufung einzelner Adsorberpartikel, wobei im Rahmen der vorliegenden Erfindung mindestens zwei verschiedenartige Adsorberpartikel (A) und (B) eingesetzt werden, welche durch ein Bindemittel zusammengefügt sind bzw. zusammengehalten werden. Mit anderen Worten verhält es sich im Rahmen der erfindungsgemäßen adsorptiven Systemen derart, daß die jeweiligen Adsorberpartikel der voneinander verschiedenen Adsorptionsmaterialien (A) und (B) in bezug auf ein einzelnes adsorptives System bzw. ein einzelnes Agglomerat über ein Bindemittel miteinander verbunden sind. Dabei sind die jeweiligen partikulären und somit insbesondere teilchenförmig ausgebildeten Adsorptionsmaterialien auf der Oberfläche des Bindemittelträgers aufgebracht bzw. befestigt bzw. fixiert bzw. hieran verklebt und/oder zum Haften gebracht.

Somit fokussiert der Begriff "adsorptives System" bzw. "Agglomerat", wie er im Rahmen der vorliegenden Erfindung verwendet wird, insbesondere auf eine funktionale Gesamtheit von Bestandteilen, welche insbesondere durch die voneinander verschiedenen partikulären Adsorptionsmaterialien (A) und (B) einerseits und dem Bindemittelträger andererseits gebildet werden, wobei die einzelnen Bestandteile so aufeinander bezogen sind und in einer derartigen Weise miteinander wechselwirken, daß sie als eine zweckgebundene Einheit angesehen werden können. Somit zielt der Begriff "adsorptives System" bzw. "Agglomerat", wie er erfindungsgemäß verwendet wird, auf ein Gebilde bzw. eine Einheit oder Struktur bzw. auf ein Gefüge unterschiedlicher Bestandteile ab, welche einen zusammenhängigen Körper bzw. eine zusammenhängende Struktur ausbilden.

Dementsprechend sind die erfindungsgemäßen adsorptiven Systeme sozusagen selbsttragend ausgebildet, insbesondere insofern, als die jeweiligen partikulären Einheiten in Form der partikulären Adsorptionsmaterialien (A) und (B) auf dem Bindemittelträger befestigt bzw. hieran fixiert sind.

Wie nachfolgend noch ausgeführt, ist das erfindungsgemäße adsorptive System nicht auf den Einsatz von zwei verschiedenen partikulären Adsorptionsmaterialien (A) und (B) begrenzt. Vielmehr ist es im Rahmen der vorliegenden Erfindung möglich, daß das adsorptive System nach der Erfindung darüber hinaus weitere partikuläre Adsorptionsmaterialien (C), (D), (E) etc. umfaßt, insbesondere mit der Maßgabe, daß die jeweiligen Adsorptionsmaterialien (C), (D), (E) etc. sowohl voneinander und insbesondere auch von den partikulären Adsorptionsmaterialien (A) und (B) verschieden ausgebildet sind.

Die vorliegende Erfindung fokussiert somit maßgeblich auf den Einsatz von voneinander verschiedenen partikulären Adsorptionsmaterialien im Hinblick auf das adsorptive System bzw. die adsorptive Einheit nach der Erfindung, so daß im Ergebnis eine funktionale Einheit mit unterschiedlichen Adsorptionsmaterialien bereitgestellt wird. Hierdurch ist es im Rahmen der vorliegenden Erfindung in völlig überraschender Weise gelungen, adsorptive Systeme nach Art eines funktionalen Gefüges bzw. Gebildes bereitzustellen, welche gegenüber dem Stand der Technik deutlich verbesserte Eigenschaften aufweisen.

Denn zum einen können die erfindungsgemäßen adsorptiven Systeme unter Auswahl und Abstimmung der jeweiligen partikulären Adsorptionsmaterialien (A) und (B) gewissermaßen im Hinblick auf den jeweiligen Einsatzzweck maßgeschneidert bzw. optimiert werden, insbesondere im Hinblick auf eine spezielle Anpassung vor dem Hintergrund der jeweiligen Natur der zu adsorbierenden Substanzen.

Beispielsweise kann auf Basis der vorliegenden Erfindung eine Optimierung hinsichtlich der Adsorption von polaren sowie unpolaren Substanzen in ein und demselben Material realisiert werden. Aufgrund der Kombination von mindestens zwei voneinander verschiedenen partikulären Adsorptionsmaterialien bzw. von verschiedenen Adsorbertypen kann somit eine verbesserte bzw. erhöhte Breitbandigkeit bzw. Multifunktionalität und damit des Adsorptionsspektrums des resultierenden adsorptiven Systems erreicht werden - und dies bei vergleichbar geringem Druckverlust der Schüttungen im Vergleich zu den jeweiligen Basisagglomeraten bzw. -systemen. Zudem ist es aufgrund einer Optimierung der Oberflächenbesetzung des Bindemittelträgers gelungen, die Adsorptionskapazität weiterführend zu erhöhen, wie nachfolgend noch geschildert.

Eine zentrale Idee der vorliegenden Erfindung besteht darin, die jeweiligen partikulären Adsorptionsmaterialien (A) und (B) voneinander unterschiedlich auszubilden derart, daß die partikulären Adsorptionsmaterialien (A) und (B) voneinander verschiedene Teilchengrößen bzw. Teilchendurchmesser aufweisen. Diese erfindungsgemäße Konzeption führt in völlig überraschender Weise dazu, daß die durch den Bindemittelträger gebildete Oberfläche optimal mit den partikulären Adsorptionsmaterialien besetzt bzw. belegt werden kann, so daß im Ergebnis zumindest im wesentlichen die gesamte Oberfläche des Bindemittelträgers mit den jeweiligen partikulären Adsorptionsmaterialien belegt ist. Dies führt zu einer weitreichenden Steigerung der Adsorptionsfähigkeit, da das adsorptive System nach der Erfindung insgesamt über eine größere Menge bzw. über ein größeres Volumen an adsorptionsfähigem Material verfügt. Denn - ohne sich auf diese Theorie beschränken zu wollen - die partikulären Adsorptionsmaterialien mit einem größeren Teilchendurchmesser bzw. einer größeren Teilchengröße zum einen und die partikulären Adsorptionsmaterialien mit dem geringeren Teilchendurchmesser bzw. der geringeren Teilchengröße zum anderen ergänzen sich in optimaler Weise insofern, als die kleineren partikulären Adsorptionsmaterialien die Fläche bzw. den Platz des Bindemittelträgers zwischen den größeren partikulären Adsorptionsmaterialien in optimaler Weise besetzen bzw. belegen können, so daß nahezu die gesamte Oberfläche des Bindemittelträgers mit den jeweiligen partikulären Strukturen belegt ist.

Im Rahmen der vorliegenden Erfindung kann mit dem Aspekt der unterschiedlichen Größenabstimmung der jeweiligen partikulären Adsorptionsmaterialien (A) und (B) somit ein deutlicher Anstieg des Oberflächen/Volumen-Verhältnisses des Kompositadsorbers bzw. des adsorptiven Systems nach der Erfindung im Vergleich zu den jeweiligen Basisagglomeraten bzw. Basispartikeln realisiert werden, was zu einer gesteigerten Wirkeffizienz bzw. Adsorptionsfähigkeit des erfindungsgemäßen adsorptiven Systems führt. Was das oben angeführte Verhältnis anbelangt, so bezieht sich die Oberfläche auf die zur Adsorption befähigten Flächen des Agglomerates. Hierin ist ein weiterer entscheidender Vorteil der vorliegenden Erfindung zu sehen.

Die vorliegende Erfindung ist jedoch nicht auf eine unterschiedliche Ausbildung der jeweiligen Teilchengrößen beschränkt:

Denn im Rahmen der vorliegenden Erfindung kann es im allgemeinen vorgesehen sein, daß das erste partikuläre Adsorptionsmaterial (A) und das zweite partikuläre Adsorptionsmaterial (B) mindestens eine voneinander verschiedene physikalische und/oder chemische Eigenschaft, insbesondere mindestens einen voneinander verschiedenen physikalischen und/oder chemischen Parameter, aufweisen.

In diesem Zusammenhang bezieht sich der Begriff "physikalische Eigenschaft" bzw. "physikalischer Parameter", wie er erfindungsgemäß verwendet wird, insbesondere auf die dreidimensionale Struktur bzw. Ausbildung der jeweiligen Adsorptionsmaterialien (A) und/oder (B), wie beispielsweise insbesondere auf die Formgebung, die Teilchengröße und/oder den Teilchendurchmesser. Zudem können beispielsweise auch die Porosität der jeweiligen Adsorptionsmaterialien (A) und/oder (B) betreffende Eigenschaften zu den physikalischen Eigenschaften bzw. Parametern der erfindungsgemäß verwendeten Adsorptionsmaterialien gezählt werden, wie beispielsweise das Porenvolumen, die BET-Oberfläche und dergleichen. Die Begriffe "chemische Eigenschaften" bzw. "chemischer Parameter" betreffen dagegen insbesondere die chemische Natur der erfindungsgemäß eingesetzten Adsorptionsmaterialien (A) und/oder (B) betreffende Eigenschaften, wie beispielsweise die chemische Struktur des substanz- bzw. massebildenden Materials der eingesetzten Adsorptionsmaterialien. Im allgemeinen sind die vorgenannten Begriffe im Rahmen der vorliegenden Erfindung jedoch nicht streng voneinander zu trennen. So kann beispielsweise die chemische Natur des substanz- bzw. massebildenden Materials einen Einfluß auf die Porosität aufweisen, was beispielsweise das Adsorptionsverhalten der eingesetzten Adsorptionsmaterialien beeinflussen kann, so daß im Ergebnis physikalische und chemische Parameter voneinander abhängen bzw. sich aneinander bedingen können.

In bezug auf die unterschiedliche Ausbildung mindestens eines physikalischen und/oder chemischen Parameters bzw. einer diesbezüglichen Eigenschaft des jeweiligen partikulären Adsorptionsmaterials (A) und (B) kann es im Rahmen der vorliegenden Erfindung vorgesehen sein, daß die eingesetzten partikulären Adsorptionsmaterialien (A) und (B) in ihrer chemischen Natur bzw. in bezug auf die Auswahl bzw. Natur der substanz- bzw. massebildenden Materialien gleich ausgebildet sind, wobei sich die eingesetzten partikulären Adsorptionsmaterialien (A) und (B) dann in mindestens einem weiteren Parameter, wie beispielsweise einem physikalischen Parameter, voneinander unterscheiden. So kann es im Rahmen der vorliegenden Erfindung vorgesehen sein, daß beide partikulären Adsorptionsmaterialien (A) und (B) auf Basis von Aktivkohle ausgebildet sind, wobei die jeweiligen Teilchen bzw. Partikel der entsprechenden Adsorptionsmaterialien (A) und (B) voneinander verschiedene Teilchengrößen bzw. Teilchendurchmesser aufweisen können. Wie zuvor angeführt, können sich die eingesetzten partikulären Adsorptionsmaterialien (A) und (B) dann auch weiterführend noch beispielsweise hinsichtlich ihrer Porosität, ihrer Porenvolumenverteilung oder dergleichen unterscheiden.

Weiterhin kann es im Rahmen der vorliegenden Erfindung auch möglich sein, daß die eingesetzten partikulären Adsorptionsmaterialien (A) und (B) eine unterschiedliche chemische Struktur bzw. Natur des substanz- bzw. massebildenden Materials aufweisen. Diesbezüglich ist es dann auch möglich, daß die eingesetzten Adsorptionsmaterialien (A) und (B) sich in den übrigen Eigenschaften zumindest im wesentlichen nicht unterscheiden.

Allerdings ist es auch bei Verwendung von partikulären Adsorptionsmaterialien (A) und (B) mit unterschiedlicher chemischer Natur bzw. Struktur auch möglich, daß sich darüber hinaus weitere Parameter voneinander unterscheiden. In diesem Zusammenhang kann es im Rahmen der vorliegenden Erfindung z. B. vorgesehen sein, daß das erste partikuläre Adsorptionsmaterial (A) in Form von Aktivkohle eingesetzt wird, während das zweite partikuläre Adsorptionsmaterial (B) - beispielsweise und wie nachfolgend noch ausführlich beschrieben - ausgewählt sein kann aus der Gruppe von Zeolithen, Molekularsieben, Metalloxid- und/oder Metallpartikeln, Ionenaustauscherharzen, anorganischen Oxiden, porösen organischen Polymeren und/oder porösen organisch-anorganischen Hybridpolymeren und/oder metallorganischen Gerüstmaterialien, wie MOFs (*Metall Organic Framework*), mineralischen Granulaten und Klathraten sowie deren Mischungen und/oder Kombinationen. Dabei können in bezug auf die jeweiligen partikulären Adsorptionsmaterialien (A) und (B) beispielsweise vergleichbare Teilchengrößen bzw. Teilchendurchmesser aber auch voneinander verschiedene Teilchengrößen bzw. Durchmesser realisiert werden. So kann es beispielsweise vorgesehen sein, daß einerseits in bezug auf das erste partikuläre Adsorptionsmaterial (A) eine partikuläre Aktivkohle eingesetzt wird, welche einen größeren Teilchendurchmesser bzw. eine größere Teilchengröße als das zweite partikuläre Adsorptionsmaterial (B) aufweist, und daß für das zweite partikuläre Adsorptionsmaterial (B) die zuvor beschriebenen Materialien eingesetzt werden, welche dann im Vergleich zu dem ersten partikulären Adsorptionsmaterial (A) einen kleineren Teilchendurchmesser bzw. eine kleinere Teilchengröße aufweisen können.

Somit resultiert durch die gezielte Auswahl und Abstimmung voneinander verschiedener partikulärer Adsorptionsmaterialien (A) und (B) in bezug auf das adsorptive System nach der Erfindung der entscheidende Vorteil, daß zum einen die Leistungsfähigkeit des adsorptiven Systems nach der Erfindung insgesamt erhöht werden kann, insbesondere im Hinblick auf eine Erhöhung der Adsorptionskapazität durch eine vollständige Besetzung der Oberfläche des Bindemittelträgers, wobei zum anderen durch die differenzierte Ausbildung der jeweiligen partikulären Adsorptionsmaterialien (A) und (B), beispielsweise in Form von Aktivkohle einerseits und MOFs andererseits, die Adsorptionsspezifität bzw. das Adsorptionsspektrum maßgeschneidert bzw. optimiert werden kann. So eignet sich Aktivkohle beispielsweise zur Adsorption von organischen Substanzen, während sich MOFs zur Adsorption anderer Gase, wie NH₃ eignen. Durch die gezielte Kombination von Aktivkohle einerseits und MOFs andererseits weist das resultierende erfindungsgemäße Agglomerat dann beide Eigenschaften in ein und demselben System auf.

Die physikalische und/oder chemische Eigenschaft, insbesondere der physikalische und/oder chemische Parameter kann im Rahmen der vorliegenden Erfindung im allgemeinen ausgewählt sein aus der Gruppe von (i) Teilchengröße, insbesondere mittlerer Teilchengröße, und/oder Teilchendurchmesser, insbesondere mittlerem Teilchendurchmesser D50; (ii) spezifischer Oberfläche, insbesondere BET-Oberfläche; (iii) Porenvolumen, insbesondere Adsorptionsvolumen und/oder Gesamtporenvolumen; (iv) Porosität und/oder Porenverteilung, insbesondere Mikroporenvolumenanteil am Gesamtporenvolumen und/oder mittlerem Porendurchmesser; (v) Teilchenform; (vi) chemischer Natur des partikelbildenden Materials; (vii) Imprägnierung und/oder katalytische Ausrüstung sowie (viii) Kombination von mindestens zwei dieser Eigenschaften.

Insbesondere kann es im Rahmen der vorliegenden Erfindung vorgesehen sein, daß die Teilchen und/oder Partikel des ersten partikulären Adsorptionsmaterials (A) auf den Bindemittelträger fixiert und über den Bindemittelträger zu dem adsorptiven System nach der Erfindung verbunden sind. Diesbezüglich ist es insbesondere von Vorteil, wenn zwischen den Teilchen und/oder Partikeln des ersten partikulären Adsorptionsmaterials (A) verbleibende freie Bereiche des Bindemittelträgers mit Teilchen und/oder Partikeln des zweiten partikulären Adsorptionsmaterials (B) beaufschlagt sind. Gemäß der erfindungsgemäßen Konzeption sind somit die Teilchen bzw. Partikel des zweiten partikulären Adsorptionsmaterials (B) an dem Bindemittelträger fixiert, und zwar insbesondere insofern, als die Teilchen bzw. Partikel des zweiten partikulären Adsorptionsmaterials (B) in solchen Bereichen der Oberfläche des Bindemittelträgers angeordnet sind, welche nicht von den Teilchen bzw. Partikeln des ersten partikulären Adsorptionsmaterials (A) belegt sind. Mit anderen Worten können die Teilchen bzw. Partikel des zweiten partikulären Adsorptionsmaterials (B) den von den Teilchen bzw. Partikeln des ersten partikulären Adsorptionsmaterials (A) gebildeten Zwischenraum einnehmen und diesbezüglich auf dem Bindemittelträger aufgebracht bzw. fixiert sein. Hieraus resultiert die zuvor beschriebene optimale Ausnutzung bzw. Belegung der Oberfläche des Bindemittelträgers.

Gemäß der vorliegenden Erfindung weist das erste partikuläre Adsorptionsmaterial (A) und das zweite partikuläre Adsorptionsmaterial (B) Teilchendurchmesser auf. Hierbei handelt es sich um den mittleren Teilchendurchmesser D50. Die entsprechenden Teilchengrößen bzw. -durchmesser können beispielsweise auf Basis der Methode nach ASTM D2862-97/04 bestimmt werden. Zudem können die vorgenannten Größen mit weiteren Bestimmungen auf Basis einer Siebanalyse, auf Basis von Röntgenbeugung, Laserdiffraktometrie oder dergleichen bestimmt werden. Die jeweiligen Bestimmungsmethoden sind dem Fachmann als solche wohlbekannt, so daß es diesbezüglich keiner weiteren Ausführungen bedarf.

Die Größenverteilung kann insbesondere monodispers oder vorzugsweise polydispers sein. Für den Fall unterschiedliche mittlere Teilchengrößen bzw. -durchmesser für die jeweiligen Adsorptionsmaterialien (A) und (B) können sich die Größenverteilungen an den jeweiligen Randbereichen auch überschneiden d.h. die größten Teilchen der einen Teilchensorte können in den Bereich der kleinsten Teilchen der anderen Teilchensorte falle und umgekehrt. In diesem Zusammenhang kann es erfindungsgemäß vorgesehen sein, daß die Teilchengröße, insbesondere der Teilchendurchmesser, und/oder der mittlere Teilchendurchmesser, insbesondere der mittlere Teilchendurchmesser D50, des ersten partikulären Adsorptionsmaterials (A) einerseits und/oder die Teilchengröße, insbesondere der Teilchendurchmesser, und oder der mittlere Teilchendurchmesser, insbesondere der mittlere Teilchendurchmesser D50, des zweiten partikulären Adsorptionsmaterials (B) andererseits ausgewählt sind derart, daß die Teilchen und/oder Partikel des zweiten partikulären Adsorptionsmaterials (B) zwischen den Teilchen bzw. Partikeln des ersten partikulären Adsorptionsmaterials (A) auf dem Bindemittelträger angeordnet sind, und/oder derart, daß zwischen den Teilchen und/oder Partikeln des ersten partikulären Adsorptionsmaterials (A) verbleibende freie Bereiche des Bindemittelträgers mit Teilchen und/oder Partikeln des zweiten partikulären Adsorptionsmaterials (B) beaufschlagt sind.

Mit anderen Worten fungieren die Teilchen bzw. Partikel des zweiten partikulären Adsorptionsmaterials (B) gewissermaßen als Lückenfüller, welche die freien Bereiche der Oberfläche des Bindemittelträgers zwischen dem ersten partikulären Adsorptionsmaterial (A) einnehmen. Hierdurch wird, wie zuvor angeführt, eine optimale Ausnutzung der verfügbaren Fläche zur Fixierung von Adsorbentien auf dem Bindemittelträger realisiert, was zu den zuvor beschriebenen hervorragenden Adsorptionsleistungen mit der zusätzlichen Möglichkeit der zielgerichteten Maßschneiderung der Adsorptionseigenschaften führt.

Erfindungsgemäß weist das erste partikuläre Adsorptionsmaterial (A) einen größeren mittleren Teilchendurchmesser D50 als das zweite partikuläre Adsorptionsmaterial (B) auf.

Erfindungsgemäß hat es sich als vorteilhaft erwiesen, wenn das erste partikuläre Adsorptionsmaterial (A) und das zweite partikuläre Adsorptionsmaterial (B) voneinander verschiedene Teilchengrößen, insbesondere voneinander verschiedene Teilchendurchmesser, aufweisen, wobei die Teilchengrößen, insbesondere die Teilchendurchmesser, insbesondere die mittleren Teilchendurchmesser, des ersten partikulären Adsorptionsmaterials (A) einerseits und des zweiten partikulären Adsorptionsmaterials (B) andererseits um mindestens einen Faktor 5, ganz besonders bevorzugt um mindestens einen Faktor 10, jeweils bezogen auf den kleineren Teilchengrößenwert, voneinander verschieden sind. In diesem Zusammenhang kann es auch vorgesehen sein, daß die Teilchengrößen, insbesondere die Teilchendurchmesser, insbesondere die mittleren Teilchendurchmesser, des ersten partikulären Adsorptionsmaterials (A) einerseits und des zweiten partikulären Adsorptionsmaterials (B) andererseits um mindestens 0,001 mm, insbesondere um mindestens 0,01 mm, vorzugsweise um mindestens 0,05 mm, bevorzugt um mindestens 0,1 mm, voneinander verschieden sind, insbesondere mit der Maßgabe, daß das erste partikuläre Adsorptionsmaterial (A) die größeren Werte aufweist und/oder insbesondere mit der Maßgabe, daß das zweite partikuläre Adsorptionsmaterial (B) die kleineren Werte aufweist.

Gleichermaßen hat es sich im Rahmen der vorliegenden Erfindung als vorteilhaft erwiesen, wenn der mittlere Teilchendurchmesser D50 des ersten partikulären Adsorptionsmaterials (A) um mindestens einen Faktor 10 größer ist als der mittlere Teilchendurchmesser D50 des zweiten partikulären Adsorptionsmaterials (B).

Zudem kann es im Rahmen der vorliegenden Erfindung vorgesehen sein, daß das Verhältnis des mittleren Teilchendurchmessers D50 des ersten partikulären Adsorptionsmaterials (A) zu dem mittleren Teilchendurchmesser D50 des zweiten partikulären Adsorptionsmaterials (B) mindestens 10:1 beträgt.

Bei dem vorgenannten Verhältnis handelt es sich um das Verhältnis der Teilchengröße des ersten partikulären Adsorptionsmaterials (A) zu der Teilchengröße des zweiten partikulären Adsorptionsmaterials (B) (Teilchengröße des ersten partikulären Adsorptionsmaterials (A) : Teilchengröße des zweiten partikulären Adsorptionsmaterials (B)).

Erfindungsgemäß kann es auch vorgesehen sein, daß das Verhältnis des mittleren Teilchendurchmessers D50, des ersten partikulären Adsorptionsmaterials (A) zu dem mittleren Teilchendurchmesser D50 des zweiten partikulären Adsorptionsmaterials (B) im Bereich von 5:1 bis 100 : 1, vorzugsweise 5:1 bis 75 : 1, bevorzugt 5:1 bis 50 : 1, besonders bevorzugt 5:1 bis 30 : 1, ganz besonders bevorzugt 5:1 bis 15:1, liegt.

Weiterhin kann es in bezug auf die jeweiligen Teilchengrößen der eingesetzten partikulären Adsorptionsmaterialien (A) und (B) im Rahmen der vorliegenden Erfindung vorgesehen sein, daß das erste partikuläre Adsorptionsmaterial (A) Teilchengrößen, insbesondere Teilchendurchmesser, von mindestens 0,01 mm, insbesondere mindestens 0,05 mm, vorzugsweise mindestens 0,1 mm, bevorzugt mindestens 0,2 mm, besonders bevorzugt mindestens 0,5 mm, aufweist. Zudem kann das erste partikuläre Adsorptionsmaterial (A) Teilchengrößen, insbesondere Teilchendurchmesser im Bereich von 0,01 bis 5 mm, insbesondere 0,05 bis 3 mm, vorzugsweise 0,1 bis 2 mm, bevorzugt 0,2 bis 1,5 mm, besonders bevorzugt 0,5 bis 1 mm, aufweisen. Die vorgenannten Größenangaben gelten dabei insbesondere jeweils mit der Maßgabe, daß die Teilchengrößen, insbesondere die Teilchendurchmesser, des ersten partikulären Adsorptionsmaterials (A) größer sind als die Teilchengrößen, insbesondere die Teilchendurchmesser, des zweiten partikulären Adsorptionsmaterials (B) bzw. mit der Maßgabe, daß die Teilchengrößen, insbesondere die Teilchendurchmesser, des zweiten partikulären Adsorptionsmaterials (B) kleiner sind als die Teilchengrößen, insbesondere die Teilchendurchmesser, des ersten partikulären Adsorptionsmaterials (A).

Was die absoluten Größenwerte im Hinblick auf das zweite partikuläre Adsorptionsmaterial (B) anbelangt, so hat es sich im Rahmen der vorliegenden Erfindung als vorteilhaft erwiesen, wenn das zweite partikuläre Adsorptionsmaterial (B) Teilchengrößen, insbesondere Teilchendurchmesser, von höchstens 2 mm, insbesondere höchstens 1 mm, vorzugsweise höchstens 0,5 mm, bevorzugt höchstens 0,3 mm, besonders bevorzugt höchstens 0,2 mm, aufweist bzw. wenn das zweite partikuläre Adsorptionsmaterial (B) Teilchengrößen, insbesondere Teilchendurchmesser, im Bereich von 0,001 bis 2 mm, insbesondere 0,005 bis 1,5 mm, vorzugsweise 0,01 bis 1 mm, bevorzugt 0,05 bis 0,75 mm, besonders bevorzugt 0,1 bis 0,5 mm, aufweist. Die vorgenannten Werteangaben bezüglich der jeweiligen Teilchengrößen, insbesondere Teilchendurchmesser, in bezug auf das zweite partikuläre Adsorptionsmaterial (B) gelten insbesondere jeweils mit der Maßgabe, daß die Teilchengrößen, insbesondere die Teilchendurchmesser, des zweiten partikulären Adsorptionsmaterials (B) kleiner sind als die Teilchengrößen, insbesondere die Teilchendurchmesser, des ersten partikulären Adsorptionsmaterials (A) bzw. mit der Maßgabe, daß die Teilchengrößen, insbesondere die Teilchendurchmesser, des ersten partikulären Adsorptionsmaterials (A) größer sind als die Teilchengrößen, insbesondere die Teilchendurchmesser, des zweiten partikulären Adsorptionsmaterials (B).

Weiterhin kann es im Rahmen der vorliegenden Erfindung im Hinblick auf die jeweiligen Teilchengrößen bzw. Teilchendurchmesser vorgesehen sein, daß das erste partikuläre Adsorptionsmaterial (A) einen mittleren Teilchendurchmesser D50 von mindestens 0,02 mm, insbesondere mindestens 0,08 mm, vorzugsweise mindestens 0,01 mm, bevorzugt mindestens 0,3 mm, besonders bevorzugt mindestens 0,5 mm aufweist. In diesem Zusammenhang kann es erfindungsgemäß vorgesehen sein, daß das erste partikuläre Adsorptionsmaterial (A) einen mittleren Teilchendurchmesser D50 im Bereich von 0,05 bis 4 mm, insbesondere 0,1 bis 2 mm, vorzugsweise 0,15 bis 1,5 mm, bevorzugt 0,3 bis 1,2 mm, besonders bevorzugt 0,5 bis 1 mm, aufweist. Auch die vorgenannten Werteangaben gelten jeweils mit der Maßgabe, daß der mittlere Teilchendurchmesser D50 des ersten partikulären Adsorptionsmaterials (A) größer ist als der mittlere Teilchendurchmesser D50 des zweiten partikulären Adsorptionsmaterials (B) bzw. mit der Maßgabe, daß der mittlere Teilchendurchmesser D50 des zweiten partikulären Adsorptionsmaterials (B) kleiner ist als der mittlere Teilchendurchmesser D50 des ersten partikulären Adsorptionsmaterials (A).

Das zweite partikuläre Adsorptionsmaterial (B) kann einen mittleren Teilchendurchmesser D50 von höchstens 1,8 mm, insbesondere höchstens 0,8 mm, vorzugsweise höchstens 0,4 mm, bevorzugt höchstens 0,2 mm, besonders bevorzugt höchstens 0,1 mm, aufweisen. In diesem Zusammenhang kann das zweite partikuläre Adsorptionsmaterial (B) einen mittleren Teilchendurchmesser D50 im Bereich von 0,005 bis 1,5 mm, insbesondere 0,01 bis 1,2 mm, vorzugsweise 0,02 bis 1 mm, bevorzugt 0,06 bis 0,6 mm, besonders bevorzugt 0,15 bis 0,4 mm, aufweisen. Auch die vorgenannten Werteangaben gelten insbesondere jeweils mit der Maßgabe, daß der mittlere Teilchendurchmesser D50 des zweiten partikulären Adsorptionsmaterials (B) kleiner ist als der mittlere Teilchendurchmesser D50 des ersten partikulären Adsorptionsmaterials (A) bzw. mit der Maßgabe, daß der Teilchendurchmesser des ersten partikulären Adsorptionsmaterials (A) größer ist als die Teilchengröße, insbesondere der Teilchendurchmesser des zweiten partikulären Adsorptionsmaterials (B).

Durch die Abstimmung der Partikelgrößen des ersten und zweiten partikulären Adsorptionsmaterials (A) und (B) kann somit die Gesamtadsorptionseffizienz und die Gesamtadsorptionskinetik des erfindungsgemäßen adsorptiven Systems eingestellt bzw. gesteuert werden, insbesondere über eine konkrete Abstimmung des jeweiligen Oberflächen/Volumen-Verhältnisses in bezug auf das jeweilige partikuläre Adsorptionsmaterial (A) oder (B). Des weiteren kann durch die gezielte Wahl und Abstimmung der Partikelgrößen für die partikulären Adsorptionsmaterialien (A) und (B) sowie deren Abstimmung aufeinander die Schüttdichte und Kapazität sowie der Druckverlust beim Durchströmen des erfindungsgemäßen adsorptiven Systems, insbesondere wenn das adsorptive System nach der Erfindung in Form einer losen Schüttung bzw. in Form von Formkörpern bzw. Filtern eingesetzt wird, eingestellt werden.

Wie zuvor angeführt, wird durch die spezifische Größenabstimmung der jeweiligen partikulären Adsorptionsmaterialien (A) und (B) eine optimale Belegung der Oberfläche des Bindemittels erreicht. Zudem kann durch die gezielte Kombination von partikulären Adsorbentien, beispielsweise jeweils auf Basis von Aktivkohle, durch die unterschiedliche Ausbildung der jeweiligen Teilchengrößen bzw. Teilchendurchmesser, wie zuvor definiert, erreicht werden, daß die Adsorptionseigenschaften insofern weiterführend optimiert werden, als das resultierende adsorptive System nach der Erfindung sowohl über eine sehr gute Adsorptionsspontaneität als auch über eine sehr hohe Gesamtadsorption verfügt. Denn - ohne sich auf diese Theorie festlegen zu wollen - weisen Adsorbentien, insbesondere auf Basis von Aktivkohle, mit kleinerem Partikeldurchmesser bzw. mit kleineren Partikelgrößen, eine höhere bzw. verbesserte Adsorptionsspontaneität auf, während entsprechende partikuläre Adsorbentien mit größeren Partikelgrößen bzw. -durchmessern im allgemeinen über eine erhöhte Gesamtadsorptionskapazität verfügen. Durch die gezielte Kombination können so die vorgenannten Eigenschaften in positiver Weise miteinander kombiniert werden.

Was die Formgebung der eingesetzten partikulären Adsorbentien (A) und (B) anbelangt, so ist es im Rahmen der vorliegenden Erfindung von Vorteil, wenn das erste partikuläre Adsorptionsmaterial (A) und/oder das zweite partikuläre Adsorptionsmaterial (B) kornförmig, insbesondere kugelförmig, ausgebildet ist bzw. sind. Dabei sollten die eingesetzten partikulären Adsorptionsmaterialien (A) und (B) in bevorzugter Weise eine gleiche Formgebung aufweisen. Es ist auch möglich, jedoch daß das erste partikuläre Adsorptionsmaterial (A) eine von dem zweiten partikulären Adsorptionsmaterial (B) verschiedene und/oder hiervon abweichende Formgebung aufweist.

Im allgemeinen ist die vorliegende Erfindung nicht auf eine kornförmige Ausprägung der eingesetzten partikulären Adsorptionsmaterialien (A) und (B) beschränkt, auch wenn diese Ausführungsform erfindungsgemäß bevorzugt ist. Im allgemeinen kommt auch ein Einsatz der partikulären Adsorbentien beispielsweise in Form von Pulverkohle, Splitterkohle, Formkohle oder dergleichen in Betracht kugelförmige Aktivkohle, welche synonym auch als "Kugelkohle" bezeichnet wird, hat gegenüber anderen Formen von Aktivkohle, wie Pulver-, Splitterkohle und dergleichen, eine Reihe von Vorteilen, die sie für bestimmte Applikationen wertvoll macht: So ist Kugelkohle rieselfähig, abriebfest und staubfrei und hart. So können die eingesetzten partikulären Adsorptionsmaterialien (A) und/oder (B), unabhängig voneinander, eine Druck- bzw. Berstfestigkeit (Gewichtsbelastbarkeit pro Teilchen bzw. Partikel) von mindestens 5 N, insbesondere eine Druck- bzw. Berstfestigkeit im Bereich von 5 N bis 50 N, aufweisen.

Die Adsorptionseigenschaften des erfindungsgemäßen adsorptiven Systems können - in Ergänzung zu den weiteren physikalischen und/oder chemischen Eigenschaften der eingesetzten partikelförmigen Adsorptionsmaterialien (A) und (B) oder als alleinige Maßnahme - auch durch eine gezielte Abstimmung der spezifischen Oberflächen (BET-Oberflächen) der jeweiligen partikulären Adsorptionsmaterialien (A) und (B) weiter optimiert bzw. maßgeschneidert werden.

So kann es im Rahmen der vorliegenden Erfindung vorgesehen sein, daß das erste partikuläre Adsorptionsmaterial (A) und das zweite partikuläre Adsorptionsmaterial (B) voneinander verschiedene spezifische Oberflächen (BET-Oberflächen) aufweisen. In diesem Zusammenhang können sich die jeweiligen spezifischen Oberflächen um mindestens 10 m²/g, insbesondere um mindestens 20 m²/g, vorzugsweise um mindestens 50 m²/g, bevorzugt um mindestens 100 m²/g, besonders bevorzugt um mindestens 200 m²/g, voneinander unterscheiden. Zudem können sich die jeweiligen spezifischen Oberflächen im Bereich von 10 bis 3.500 m²/g, insbesondere 20 bis 3.000 m²/g, vorzugsweise 100 bis 2.500 m²/g, besonders bevorzugt 200 bis 2.000 m²/g, voneinander unterscheiden.

Typischerweise können das erste partikuläre Adsorptionsmaterial (A) und das zweite partikuläre Adsorptionsmaterial (B), unabhängig voneinander, eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweisen. Darüber hinaus können typischerweise das erste partikuläre Adsorptionsmaterial (A) und/oder das zweite partikuläre Adsorptionsmaterial (B), unabhängig voneinander, eine spezifische Oberfläche (BET-Oberfläche) im Bereich von 500 bis 4.000 m²/g, insbesondere 750 bis 3.000 m²/g, vorzugsweise 900 bis 2.500 m²/g, besonders bevorzugt 950 bis 2.000 m²/g, aufweisen. Die vorgenannten Angaben hinsichtlich der spezifischen Oberfläche (BET-Oberfläche) gelten insbesondere mit der Maßgabe, daß das erste partikuläre Adsorptionsmaterial (A) und das zweite partikuläre Adsorptionsmaterial (B) voneinander verschiedene spezifische Oberflächen (BET-Oberflächen) aufweisen.

Die Bestimmung der spezifischen Oberfläche gemäß BET ist dem Fachmann grundsätzlich als solches bekannt. Alle BET-Oberflächenangaben beziehen sich auf die Bestimmung gemäß ASTM D6556-04. Im Rahmen der vorliegenden Erfindung wird zur Bestimmung der BET-Oberfläche insbesondere die sogenannte MultiPoint-BET-Bestimmungsmethode (MP-BET) in einem Partialdruckbereich p/p₀ von 0,05 bis 0,1 angewendet.

In bezug auf weitergehende Einzelheiten zur Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur und auf Winnacker-Küchler (3. Auflage), Band 7, Seiten 93 ff. sowie auf Z. Anal. Chem. 238, Seiten 187 bis 193 (1968) verwiesen werden.

Gemäß einer weiteren Ausführungsform der vorliegenden Erfindung können das erste partikuläre Adsorptionsmaterial (A) und das zweite partikuläre Adsorptionsmaterial (B) voneinander verschiedene Adsorptionsvolumina V_{ads} aufweisen, insbesondere wobei sich die jeweiligen Adsorptionsvolumina V_{ads} um mindestens 1 cm³/g, insbesondere mindestens 5 cm³/g, vorzugsweise mindestens 10 cm³/g, besonders bevorzugt mindestens 20 cm³/g, voneinander unterscheiden und/oder insbesondere wobei sich die jeweiligen Adsorptionsvolumina V_{ads} im Bereich von im Bereich von 1 bis 2.500 cm³/g, insbesondere 10 bis 2.000 cm³/g, vorzugsweise 20 bis 1.500 cm³/g, voneinander unterscheiden.

Typischerweise können das erste partikuläre Adsorptionsmaterial (A) und/oder das zweite partikuläre Adsorptionsmaterial (B), unabhängig voneinander, ein Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, aufweisen. Zudem können das erste partikuläre Adsorptionsmaterial (A) und/oder das zweite partikuläre Adsorptionsmaterial (B), unabhängig voneinander, ein Adsorptionsvolumen V_{ads} im Bereich von 250 bis 3.000 cm³/g, insbesondere 300 bis 2.000 cm³/g, vorzugsweise 350 bis 2.500 cm³/g, aufweisen. Die vorgenannten Werteangaben hinsichtlich des Adsorptionsvolumens V_{ads} gelten insbesondere mit der Maßgabe, daß das erste partikuläre Adsorptionsmaterial (A) und das zweite partikuläre Adsorptionsmaterial (B) voneinander verschiedene Adsorptionsvolumina V_{ads} aufweisen.

Bei dem Adsorptionsvolumen V_{ads} handelt es sich um eine dem Fachmann wohlbekannte Größe zur Charakterisierung der eingesetzten partikulären Adsorptionsmaterialien. Auch die diesbezüglichen Bestimmungsmethoden sind dem Fachmann an sich wohlbekannt. Insbesondere handelt es sich bei dem Adsorptionsvolumen V_{ads} um das gewichtsbezogene adsorbierte N₂-Volumen, welches im allgemeinen bei einem Partialdruck p/p₀ von 0,995 bestimmt wird.

Weiterhin kann es gemäß der erfindungsgemäßen Konzeption vorgesehen sein, daß hinsichtlich der jeweils eingesetzten partikulären Adsorptionsmaterialien (A) und (B) die diesbezüglichen Gesamtporenvolumina nach Gurvich gezielt eingestellt bzw. variiert werden.

In diesem Zusammenhang kann es typischerweise vorgesehen sein, daß das erste partikuläre Adsorptionsmaterial (A) und das zweite partikuläre Adsorptionsmaterial (B) voneinander verschiedene Gesamtporenvolumina nach Gurvich aufweisen, insbesondere wobei sich die jeweiligen Gesamtporenvolumina um mindestens 0,01 cm³/g, insbesondere mindestens 0,05 cm³/g, vorzugsweise mindestens 0,1 cm³/g, besonders bevorzugt mindestens 0,15 cm³/g, ganz besonders bevorzugt mindestens 0,20 cm³/g, voneinander unterscheiden und/oder insbesondere wobei sich die jeweiligen Gesamtporenvolumina nach Gurvich im Bereich von 0,01 bis 1,8 cm³/g, insbesondere 0,05 bis 1,4 cm³/g, vorzugsweise 0,1 bis 1 cm³/g, besonders bevorzugt 0,15 bis 0,8 cm³/g, voneinander unterscheiden.

Diesbezüglich kann es gleichermaßen vorgesehen sein, daß das erste partikuläre Adsorptionsmaterial (A) und/oder das zweite partikuläre Adsorptionsmaterial (B), unabhängig voneinander, ein Gesamtporenvolumen nach Gurvich von mindestens 0,2 cm³/g, insbesondere mindestens 0,3 cm³/g, vorzugsweise mindestens 0,4 cm³/g, besonders bevorzugt mindestens 0,6 cm³/g, ganz besonders bevorzugt mindestens 0,8 cm³/g, aufweisen und/oder daß das erste partikuläre Adsorptionsmaterial (A) und/oder das zweite partikuläre Adsorptionsmaterial (B), unabhängig voneinander, ein Gesamtporenvolumen nach Gurvich im Bereich von 0,2 bis 2,0 cm³/g, insbesondere 0,3 bis 1,5 cm³/g, vorzugsweise 0,5 bis 1,2 cm³/g, besonders bevorzugt 0,6 bis 1,0 cm³/g, aufweisen, insbesondere mit der Maßgabe, daß das erste partikuläre Adsorptionsmaterial (A) und das zweite partikuläre Adsorptionsmaterial (B) voneinander verschiedene Gesamtporenvolumina nach Gurvich aufweisen.

Was die Bestimmung des Gesamtporenvolumens nach Gurvich anbelangt, so handelt es sich um eine dem Fachmann auf diesem Gebiet an sich bekannte Meß- bzw. Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technologies Series, Seiten 111 ff.

Weiterhin kann es im Rahmen der vorliegenden Erfindung vorgesehen sein, daß das Adsorptionsverhalten des erfindungsgemäßen adsorptiven Systems über eine gezielte Auswahl der Porengrößenverteilung im Hinblick auf die eingesetzten partikulären Adsorptionsmaterialien (A) und (B) maßgeschneidert bzw. gesteuert werden kann. So kann beispielsweise und in nicht beschränkender Weise für das erste partikuläre Adsorptionsmaterial (A) eine Aktivkohle mit relativ hohem Anteil an Makro- und Mesoporen und damit einhergehend geringem Anteil an Mikroporen in bezug auf das Gesamtporenvolumen eingesetzt werden, während für das zweite partikuläre Adsorptionsmaterial (B) eine mikroporöse Aktivkohle, also eine Aktivkohle mit hohem Mikroporenanteil und damit einhergehend geringem Anteil an Meso- und Makroporen am Gesamtporenvolumen eingesetzt werden kann. Durch den gezielten Einsatz von partikulären Adsorptionsmaterialien mit einer unterschiedlichen Porenverteilungen kann das Spektrum für zu adsorbierende Substanzen deutlich vergrößert werden.

Typischerweise können das erste partikuläre Adsorptionsmaterial (A) und das zweite partikuläre Adsorptionsmaterial (B) voneinander verschiedene Porengrößenverteilungen, insbesondere voneinander verschiedene Anteile von Makroporen, Mesoporen und Mikroporen am Gesamtporenvolumen, insbesondere am Gesamtporenvolumen nach Gurvich, aufweisen.

Beispielsweise kann das erste partikuläre Adsorptionsmaterial (A) oder das zweite partikuläre Adsorptionsmaterial (B), bezogen auf das Gesamtporenvolumen, insbesondere auf das Gesamtporenvolumen nach Gurvich, einen höheren Anteil an Mikroporen, insbesondere an Mikroporen mit Porendurchmessern von ≤ 30 Å, insbesondere ≤ 25 Å, vorzugsweise ≤ 20 Å, als das hiervon verschiedene partikuläre Adsorptionsmaterial (A) oder (B) aufweisen.

Im allgemeinen kann es auch vorgesehen sein, daß das erste partikuläre Adsorptionsmaterial (A) und das zweite partikuläre Adsorptionsmaterial (B), bezogen auf das Gesamtporenvolumen, insbesondere auf das Gesamtporenvolumen nach Gurvich, voneinander verschiedene Anteile an Mikroporen, insbesondere an Mikroporen mit Porendurchmessern von ≤ 30 Å, insbesondere ≤ 25 Å, vorzugsweise ≤ 20 Å, aufweisen.

Im Rahmen der vorliegenden Erfindung kann es vorgesehen sein, daß sich die jeweiligen Anteile an Mikroporen, insbesondere an Mikroporen mit Porendurchmessern von ≤ 30 Å, insbesondere ≤ 25 Å, vorzugsweise ≤ 20 Å, jeweils bezogen auf das Gesamtporenvolumen, insbesondere auf das Gesamtporenvolumen nach Gurvich, um mindestens 1 %, insbesondere um mindestens 3 %, vorzugsweise um mindestens 5 %, bevorzugt um mindestens 10 %, voneinander unterscheiden.

Typischerweise können sich die jeweiligen Anteile an Mikroporen, insbesondere an Mikroporen mit Porendurchmessern von ≤ 30 Å, insbesondere ≤ 25 Å, vorzugsweise ≤ 20 Å, bezogen auf das Gesamtporenvolumen, insbesondere auf das Gesamtporenvolumen nach Gurvich, im Bereich von 1 % bis 65 %, insbesondere 3 % bis 60 %, vorzugsweise 5 % bis 50 %, bevorzugt 10 % bis 45 %, voneinander unterscheiden.

Insbesondere kann es im Rahmen der vorliegenden Erfindung vorgesehen sein, daß das erste partikuläre Adsorptionsmaterial (A) und/oder das zweite partikuläre Adsorptionsmaterial (B), unabhängig voneinander und jeweils bezogen auf das Gesamtporenvolumen, insbesondere auf das Gesamtporenvolumen nach Gurvich, einen Anteil an Mikroporen, insbesondere an Mikroporen mit Porendurchmessern von ≤ 30 Å, insbesondere ≤ 25 Å, vorzugsweise s 20 Å, von mindestens 70 %, insbesondere mindestens 75 %, vorzugsweise mindestens 80 %, bevorzugt mindestens 85 %, besonders bevorzugt mindestens 90 %, aufweisen. Zudem kann das hiervon verschiedene partikuläre Adsorptionsmaterial (A, B), bezogen auf das Gesamtporenvolumen, insbesondere auf das Gesamtporenvolumen nach Gurvich, einen Anteil an Mikroporen, insbesondere an Mikroporen mit Porendurchmessern von ≤ 30 Å, insbesondere s 25 Å, vorzugsweise ≤ 20 Å, von höchstens 50 %, insbesondere höchstens 45 %, vorzugsweise höchstens 40 %, bevorzugt höchstens 35 %, besonders bevorzugt höchstens 30 %, aufweisen.

Insbesondere können das erste partikuläre Adsorptionsmaterial (A) und das zweite partikuläre Adsorptionsmaterial (B) voneinander verschiedene Gesamtporositäten aufweisen, insbesondere wobei sich die jeweiligen Gesamtporositäten um mindestens 1 %, insbesondere um mindestens 5 %, vorzugsweise um mindestens 10 %, bevorzugt um mindestens 25 %, ganz besonders bevorzugt um mindestens 50 %, voneinander unterscheiden und/oder wobei sich die jeweiligen Gesamtporositäten im Bereich von 1 % bis 75 %, insbesondere 5 % bis 50 %, vorzugsweise 10 % bis 60 %, bevorzugt 25 % bis 50 %, voneinander unterscheiden, jeweils bezogen auf das Gesamtporenvolumen des jeweiligen partikulären Adsorptionsmaterials (A, B).

Gleichermaßen kann es im Rahmen der vorliegenden Erfindung vorgesehen sein, daß das erste partikuläre Adsorptionsmaterial (A) und/oder das zweite partikuläre Adsorptionsmaterial (B), unabhängig voneinander und jeweils bezogen auf das jeweilige Gesamtporenvolumen des ersten und/oder zweiten partikulären Adsorptionsmaterial (A) und (B) jeweils eine Gesamtporosität im Bereich von 10 % bis 80 %, insbesondere 20 % bis 75 %, vorzugsweise 25 % bis 70 %, aufweisen, insbesondere mit der Maßgabe, daß das erste partikuläre Adsorptionsmaterial (A) und das zweite partikuläre Adsorptionsmaterials (B) voneinander verschiedene Gesamtporositäten aufweisen.

Weiterhin kann es erfindungsgemäß vorgesehen sein, daß das zweite partikuläre Adsorptionsmaterial (B) einen höheren Anteil von Mikroporen am Gesamtporenvolumen, insbesondere wie zuvor definiert, insbesondere am Gesamtporenvolumen nach Gurvich, im Vergleich zu dem ersten partikulären Adsorptionsmaterial (A) aufweist.

Aufgrund der erfindungsgemäß möglichen unterschiedlichen Porenverteilung können die eingesetzten partikulären Adsorptionsmaterialien (A) und (B) voneinander verschiedene mittlere Porendurchmesser aufweisen.

So kann es im Rahmen der vorliegenden Erfindung vorgesehen sein, daß das erste partikuläre Adsorptionsmaterial (A) und das zweite partikuläre Adsorptionsmaterial (B) voneinander verschiedene mittlere Porendurchmesser aufweisen, insbesondere wobei sich die jeweiligen mittleren Porendurchmesser um mindestens 1 Å, insbesondere um mindestens 2 Å, vorzugsweise um mindestens 5 Å, bevorzugt um mindestens 10 Å, voneinander unterscheiden und/oder insbesondere wobei sich die jeweiligen mittleren Porendurchmesser im Bereich von 1 bis 50 Å, insbesondere 2 bis 45 Å, vorzugsweise 5 bis 40 Å, besonders bevorzugt 10 bis 35 Å, voneinander unterscheiden.

Zudem können das erste partikuläre Adsorptionsmaterial (A) oder das zweite partikuläre Adsorptionsmaterial (B) einen mittleren Porendurchmesser von höchstens 26 Å, insbesondere höchstens 25 Å, bevorzugt höchstens 24 Å, aufweisen. In diesem Zusammenhang kann das hiervon verschiedene partikuläre Adsorptionsmaterial (A) oder (B) einen mittleren Porendurchmesser von mindestens 31 A, insbesondere mindestens 32 Å, bevorzugt mindestens 33 Å, aufweisen.

Weiterhin können zudem das erste partikuläre Adsorptionsmaterial (A) und das zweite partikuläre Adsorptionsmaterial (B), unabhängig voneinander, einen mittleren Porendurchmesser im Bereich von 15 bis 30 Å, insbesondere 16 bis 26 Å, vorzugsweise 17 bis 25 Å, besonders bevorzugt 18 bis 24 Å, aufweisen. In diesem Zusammenhang kann das hiervon verschiedene partikuläre Adsorptionsmaterial (A) oder (B) einen mittleren Porendurchmesser im Bereich von 31 bis 60 Å, insbesondere 32 bis 55 Å, vorzugsweise 33 bis 45 Å, besonders bevorzugt 34 bis 40 Å, aufweisen.

Typischerweise kann das zweite partikuläre Adsorptionsmaterial (B) einen kleineren mittleren Porendurchmesser, insbesondere wie zuvor definiert, im Vergleich zu dem ersten partikulären Adsorptionsmaterial (A) aufweisen.

Gleichermaßen können die erfindungsgemäß eingesetzten partikulären Adsorptionsmaterialien gegebenenfalls imprägniert und/oder mit einem Katalysator ausgerüstet sein, wobei auch diesbezüglich hinsichtlich der jeweils eingesetzten partikulären Adsorptionsmaterialien (A) und (B) unterschiedliche Imprägnierungen, wie eine basische oder eine saure Imprägnierung, bzw. voneinander verschiedene Katalysatoren vorliegen können bzw. lediglich ein partikuläres Adsorptionsmaterial (A) oder (B) mit einer entsprechenden Imprägnierung bzw. katalytischen Aktivität ausgerüstet sein kann.

In diesem Zusammenhang kann das partikuläre Adsorptionsmaterial (A) und/oder das zweite partikuläre Adsorptionsmaterial (B), unabhängig voneinander, mit mindestens einem Katalysator ausgerüstet sein, insbesondere mittels Imprägnierung oder anderweitiger Ausrüstung, insbesondere wobei der Katalysator Enzyme und/oder Metallionen, vorzugsweise Kupfer-, Silber-, Cadmium-, Platin-, Palladium-, Zink und/oder Quecksilberionen, aufweisen kann. Die diesbezügliche Menge an eingesetztem Katalysator kann dabei 0,05 bis 12 Gew.-%, vorzugsweise 1 bis 10 Gew.-%, besonders bevorzugt 2 bis 8 Gew.-%, bezogen auf das Gewicht der jeweiligen partikulären Adsorptionsmaterialien (A) und (B), betragen. Was die fakultativ vorgesehene katalytische Ausrüstung, insbesondere Imprägnierung, des partikulären Adsorptionsmaterials (A) oder (B) anbelangt, so kann diese auf Basis von Phosphorsäure, Caliumcarbonat, Trimethanolamin, 2-Amino-1,3-propandiol, Schwefel oder Kupfersalzen durchgeführt sein. In diesem Zusammenhang kann die Menge an Imprägniermittel, bezogen auf die imprägnierten Adsorberpartikel, 0,01 bis 15 Gew.-%, insbesondere 0,05 bis 12 Gew.-%, vorzugsweise 5 bis 12 Gew.-%, betragen. Durch den Einsatz verschiedenartiger partikulärer Adsorptionsmaterialien (A) und (B) ist der Einsatz auch von nichtkompatiblen Imprägnierungen bzw. Katalysatoren möglich.

Die im Rahmen des erfindungsgemäßen adsorptiven Systems eingesetzten partikulären Adsorptionsmaterialien (A) und (B) können aus einer Vielzahl von die entsprechenden Teilchen bzw. Partikel ausbildenden Materialien bestehen bzw. diese umfassen. So kann es erfindungsgemäß vorgesehen sein, daß das partikelbildende Material des ersten partikulären Adsorptionsmaterial (A) und/oder des zweiten partikulären Adsorptionsmaterials (B), unabhängig voneinander, ausgewählt ist aus der Gruppe von
(i) Aktivkohle, insbesondere kornförmiger Aktivkohle, vorzugsweise kugelförmiger Aktivkohle und/oder insbesondere geformter und/oder extrudierter Aktivkohle und/oder pulverförmiger Aktivkohle;
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder makroporösen Typ;
(vi) anorganischen Oxiden, insbesondere Siliciumdioxiden, Silicagelen und/oder Aluminiumoxiden;
(vii) porösen organischen Polymeren und/oder porösen organischanorganischen Hybridpolymeren und/oder metallorganischen Gerüstmaterialien, insbesondere MOFs (*Metall Organic Framework*)*,* COFs (*Covalent Organic Framework),* ZIFs (*Zeolithe Imidazolate Framework*)*,* POMs (*Polymer Organic Material*) und/oder OFCs;
(viii) mineralischen Granulaten;
(ix) Klathraten; sowie
(x) deren Mischungen und/oder Kombinationen.

Insbesondere kann das partikelbildende Material des ersten partikulären Adsorptionsmaterial (A) und/oder das partikelbildende Material des zweiten partikulären Adsorptionsmaterials (B), unabhängig voneinander, aus Aktivkohle, insbesondere aus kernförmiger, vorzugsweise kugelförmiger Aktivkohle gebildet sein.

Die jeweiligen partikelbildenden Materialien der partikulären Adsorptionsmaterialien (A) bzw. (B) sind dem Fachmann wohlbekannt, und der Fachmann ist jederzeit in der Lage, die jeweiligen partikelbildenden Materialien im Lichte der Ausrüstung des erfindungsgemäßen adsorptiven Systems mit speziellen Adsorptionseigenschaften auszuwählen und aufeinander abzustimmen. Erfindungsgemäß verwendbare Aktivkohlen, welche insbesondere auf Basis kugelförmiger Aktivkohle eingesetzt werden können, sind beispielsweise von der Blücher GmbH, Erkrath, Deutschland, oder von der Adsor-Tech GmbH, Premnitz, Deutschland, erhältlich. Zudem kann in bezug auf die erfindungsgemäß einsetzbare mikroporöse Aktivkohle verwiesen werden auf die auf die Anmelderin selbst zurückgehende europäische Patentanmeldung EP 1 918 022 A1 sowie auf die parallele US 2008/0107589 A1, deren jeweilige Offenbarung hiermit durch Bezugnahme vollumfänglich eingeschlossen ist.

Was die erfindungsgemäß einsetzbaren Adsorptionsmaterialien auf Basis von metallorganischen Gerüstmaterialien, insbesondere MOFs, anbelangt, so können die zugrundeliegenden MOF-Materialien sich wiederholende Struktureinheiten auf Basis mindestens eines Metalls, insbesondere Metallatoms oder Metallions, einerseits und mindestens eines wenigstens bidentaten (zweizähnigen) und/oder verbrückenden organischen Liganden andererseits aufweisen. Im Rahmen der vorliegenden Erfindung kommen als partikuläres Adsorptionsmaterial (A) bzw. (B), unabhängig voneinander somit auch MOF-Substanzen in Betracht, welche synonym auch als MOF-Materialien, poröse Koordinationspolymere oder dergleichen bezeichnet werden. Derartige Sorptionsmittel sind im allgemeinen porös ausgebildet und von kristalliner Struktur. Diese metallorganischen Gerüstmaterialien weisen einen relativ einfachen modularen Aufbau auf, wobei im allgemeinen ein mehrkerniger Komplex als Vernetzungspunkt bzw. Knoten fungiert, an denen mehrere multifunktionelle bzw. multidentate Liganden angeknüpft sind. Metallorganische Gerüstmaterialien sind also poröse, im allgemeinen kristalline Materialien, insbesondere mit wohlgeordneter kristalliner Struktur, welche aus metallorganischen Komplexen mit Übergangsmetallen (z. B. Kupfer, Zink, Nickel, Kobalt etc.) als Knoten und organischen Molekülen bzw. Liganden als Verbindung bzw. Linker zwischen den Knoten bestehen. Hinsichtlich der erfindungsgemäß einsetzbaren MOF-Materialien ist insbesondere hervorzuheben, daß aufgrund der im Rahmen der Herstellung der metallorganischen Gerüstsubstanzen exakt festlegbaren Porengrößen bzw. Porengrößenverteilung eine hohe Selektivität in bezug auf das Sorptionsverhalten, insbesondere Adsorptionsverhalten, erreicht werden kann, wobei die Porengröße bzw. die Porengrößenverteilung beispielsweise über die Art bzw. Größe der organischen Liganden gesteuert werden kann.

Für weiterführende Einzelheiten zu den verwenden MOF-Materialien kann insbesondere verwiesen werden auf die internationale Patentanmeldung WO 2009/056184 A1 sowie auf die parallele deutsche Patentanmeldung DE 10 2008 005 218 A1.

Gemäß einer erfindungsgemäßen Ausführungsform kann es vorgesehen sein, daß das erste partikuläre Adsorptionsmaterial (A) und das zweite partikuläre Adsorptionsmaterial (B) jeweils identische partikelbildende Materialien, insbesondere wie zuvor definiert, aufweisen oder hieraus bestehen, insbesondere mit der Maßgabe, daß sich im übrigen das erste partikuläre Adsorptionsmaterial (A) und das zweite partikuläre Adsorptionsmaterials (B) in mindestens einem physikalischen und/oder chemischen Parameter unterscheiden. Dabei kann der physikalische und/oder chemische Parameter ausgewählt sein aus der Gruppe von (i) spezifischer Oberfläche, insbesondere BET-Oberfläche; (ii) Porenvolumen, insbesondere Adsorptionsvolumen und/oder Gesamtporenvolumen; (iii) Porosität und/oder Porenverteilung, insbesondere Mikroporenvolumenanteil am Gesamtporenvolumen und/oder mittlerem Porendurchmesser; (iv) Imprägnierung und/oder katalytischer Ausrüstung sowie (iv) Teilchenform.

Insbesondere kann es erfindungsgemäß vor gesehen sein, daß das erste partikuläre Adsorptionsmaterial (A) und das zweite partikuläre Adsorptionsmaterial (B) aus Aktivkohle bestehen. Dabei können das erste partikuläre Adsorptionsmaterial (A) und das zweite partikuläre Adsorptionsmaterial (B) unterschiedliche Porositäten und/oder unterschiedliche Porenverteilungen, insbesondere unterschiedliche Mikroporenvolumenanteile am Gesamtporenvolumen und/oder mittlerem Porendurchmesser, aufweisen.

Gemäß einer weiteren erfindungsgemäßen Ausführungsform kann es alternativ auch vorgesehen sein, daß das erste partikuläre Adsorptionsmaterial (A) und das zweite partikuläre Adsorptionsmaterial (B) jeweils voneinander verschiedene partikelbildende Materialien, insbesondere wie zuvor definiert, aufweisen oder hieraus bestehen. Auch in diesem Zusammenhang kann es erfindungsgemäß vorgesehen sein, daß das erste partikuläre Adsorptionsmaterial (A) und das zweite partikuläre Adsorptionsmaterial (B) sich darüber hinaus in mindestens einem weiteren physikalischen und/oder chemischen Parameter unterscheiden, insbesondere wobei der physikalische und/oder chemische Parameter ausgewählt ist aus der Gruppe von (i) spezifischer Oberfläche, insbesondere BET-Oberfläche;(ii) Porenvolumen, insbesondere Adsorptionsvolumen und/oder Gesamtporenvolumen; (iii) Porosität und/oder Porenverteilung, insbesondere Mikroporenvolumenanteil am Gesamtporenvolumen und/oder mittlerem Porendurchmesser; (iv) Imprägnierung und/oder katalytischer Ausrüstung sowie (v) Teilchenform.

Diesbezüglich kann es beispielsweise und in nichtbeschränkender Weise vorgesehen sein, daß in bezug auf das erste partikuläre Adsorptionsmaterial (A) eine kugelförmige Aktivkohle mit definierter Porosität eingesetzt wird, während für das zweite partikuläre Adsorptionsmaterial (B) beispielsweise ein MOF-Material eingesetzt wird. Auch auf diese Weise kann das Spektrum der zu adsorbierenden Substanzen vergrößert bzw. die Adsorptionseigenschaften im Hinblick auf die zu adsorbierenden Substanzen, beispielsweise hinsichtlich ihrer Polarität und/oder Größe, angepaßt bzw. maßgeschneidert werden.

Die vorliegende Erfindung ist nicht auf die Verwendung von zwei partikulären Adsorptionsmaterialien (A) und (B) beschränkt. Vielmehr können erfindungsgemäß noch weitere partikuläre Adsorptionsmaterialien eingesetzt werden, so kann es erfindungsgemäß vorgesehen sein, daß das adsorptive System nach der Erfindung mehrere, insbesondere drei, vier, fünf oder mehr voneinander verschiedene partikuläre Adsorptionsmaterialien aufweist, wobei für die diesbezüglichen Adsorptionsmaterialien gleichermaßen auch die für das erste partikuläre Adsorptionsmaterial (A) bzw. das zweite partikuläre Adsorptionsmaterial (B) genannten Definitionen und Eigenschaften gelten.

Zur Ausbildung eines insbesondere mechanisch stabilen adsorptiven Systems nach der Erfindung ist es erfindungsgemäß vorgesehen, daß der Bindemittelträger mindestens einen Kern des jeweiligen adsorptiven System bildet. Zudem sind die jeweiligen Teilchen bzw. Partikel des ersten partikulären Adsorptionsmaterials (A) und des zweiten partikulären Adsorptionsmaterials (B) eines einzelnen adsorptiven Systems und/oder Agglomerats jeweils an mindestens einem Kern in Form des Bindemittelträgers angeordnet und/oder angelagert.

Dabei können die einzelnen Agglomerate jeweils einen oder mehrere Kerne in Form des Bindemittelträgers umfassen.

Die Größe des Kerns aus dem Bindemittel kann dabei in weiten Grenzen variieren. Insbesondere weist der Bindemittelträger und/oder der Kern in Form des Bindemittelträgers eine Größe von 100 bis 2.000 µm, insbesondere 150 bis 1.500 µm, vorzugsweise 200 bis 1.000 µm, auf. Üblicherweise kann das Größenverhältnis von Bindemittelträger und/oder Kern in Form des Bindemittelträgers zu einzelnem Adsorberpartikel (A, B) mindestens 1 : 1, insbesondere mindestens 1,25 : 1, vorzugsweise mindestens 1,5 : 1, besonders bevorzugt mindestens 2 : 1, ganz besonders bevorzugt mindestens 3 : 1, betragen.

Zur Gewährleistung einer guten Adsorptionseffizienz, insbesondere Adsorptionskinetik und Adsorptionskapazität, kann das erfindungsgemäße adsorptive System mindestens 5 Adsorberpartikel (A) und/oder (B), insbesondere mindestens 10 Adsorberpartikel (A) und/oder (B), vorzugsweise mindestens 15 Adsorberpartikel (A) und/oder (B), besonders bevorzugt mindestens 20 Adsorberpartikel (A) und/oder (B), umfassen. Insbesondere kann das adsorptive System (1) und/oder die einzelnen Agglomerate jeweils bis zu 50 Adsorberpartikel (A) und/oder (B), insbesondere bis zu 75 Adsorberpartikel (A) und/oder (B), vorzugsweise bis zu 100 Adsorberpartikel (A) und/oder (B) oder mehr, umfassen. Insbesondere nimmt die Zahl der Adsorberpartikel mit kleinerer Teilchengröße der Partikel zu.

Das Gewichtsverhältnis von Adsorberpartikeln zu organischem Polymer in den einzelnen Agglomeraten kann gleichermaßen in weiten Bereichen variieren. Im allgemeinen kann das adsorptive System nach der Erfindung das erste partikuläre Adsorptionsmaterial (A) und das zweite partikuläre Adsorptionsmaterial (B) in einem Gewichtsverhältnis von erstem partikulären Adsorptionsmaterial (A) zu zweitem partikulären Adsorptionsmaterial (B) von mindestens mindestens 1 : 1, insbesondere mindestens 1,2 : 1, vorzugsweise mindestens 1,5 : 1, besonders bevorzugt mindestens 2 : 1, aufweisen. Die vorgenannten Gewichtsverhältnisse gelten insbesondere mit der Maßgabe, daß das erste partikuläre Adsorptionsmaterial (A) größere Teilchendurchmesser aufweist als das zweite partikuläre Adsorptionsmaterial (B).

Zudem kann es erfindungsgemäß vorgesehen sein, daß das adsorptive System nach der Erfindung das erste partikuläre Adsorptionsmaterial (A) und das zweite partikuläre Adsorptionsmaterial (B) in einem Teilchenverhältnis von zweitem partikulären Adsorptionsmaterial (B) zu erstem partikulären Adsorptionsmaterial (B) von mindestens mindestens 1 : 1, insbesondere mindestens 1,5: 1, vorzugsweise mindestens 2 : 1, besonders bevorzugt mindestens 3 : 1, aufweist. Die vorgenannten Teilchenverhältnisse gelten insbesondere mit der Maßgabe, daß das erste partikulare Adsorptionsmaterial (A) größere Teilchendurchmesser aufweist als das zweite partikuläre Adsorptionsmaterial (B).

Durch die gezielte Auswahl des Verhältnisses der jeweiligen partikulären Adsorptionsmaterialien (A) und (B) zueinander können die Adsorptionseigenschaften weiterführend maßgeschneidert bzw. individuell eingestellt werden.

Das Gewichtsverhältnis von Adsorberpartikeln zum Bindemittelträger in den einzelnen adsorptiven Systemen kann gleichermaßen in weiten Bereichen variieren. Im allgemeinen weist das adsorptive System ein Gewichtsverhältnis von Adsorberpartikeln (A) und (B) zum Bindemittelträger im adsorptiven System bzw. Agglomerat nach der Erfindung von mindestens 2 : 1, insbesondere mindestens 3 : 1, vorzugsweise mindestens 5 *:* 1, besonders bevorzugt mindestens 7 : 1, ganz besonders bevorzugt mindestens 8 : 1, auf. Üblicherweise weist das erfindungsgemäße adsorptive System bzw. das Agglomerat ein Gewichtsverhältnis von Adsorberpartikeln (A) und (B) zu Bindemittelträger je adsorptivem System und/oder Agglomerat im Bereich von 2 : 1 bis 30 : 1, insbesondere 3 : 1 bis 20 : 1, vorzugsweise 4 : 1 bis 15 : 1, besonders bevorzugt 5 : 1 bis 10 : 1, auf. Die vorgenannten Untergrenzen erklären sich insbesondere dadurch, daß eine ausreichende Anzahl bzw. Menge an Adsorberpartikeln zur Gewährleistung einer ausreichenden Adsorptionseffizienz vorhanden sein sollten, wohingegen die vorgenannten Oberbegrenzen insbesondere dadurch bedingt sind, daß eine ausreichende Menge an Bindemittelträgern zur Gewährleistung eines stabilen Verbunds bzw. Agglomerates vorhanden sein sollte.

Im allgemeinen sind die einzelnen Agglomerate der erfindungsgemäßen adsorptiven Systeme selbsttragend ausgebildet. Dies hat den Vorteil, daß kein zusätzlicher Träger erforderlich ist.

Wie zuvor angeführt, sind im allgemeinen die einzelnen adsorptiven Systeme nach der Erfindung teilchenförmig ausgebildet. Dabei können die Teilchengrößen der jeweiligen adsorptiven Systeme nach der Erfindung in weiten Bereichen variieren. Insbesondere kann das adsorptive System nach der Erfindung bzw. das Agglomerat eine Teilchengröße, insbesondere eine mittlere Teilchengröße, und/oder ein Teilchendurchmesser, insbesondere einen mittleren Teilchendurchmesser D50, im Bereich von 0,01 bis 20 mm insbesondere 0,05 bis 15 mm, vorzugsweise 0,1 bis 10 mm, besonders bevorzugt 0,2 bis 7,5 mm, ganz besonders bevorzugt 0,5 bis 5 mm, aufweisen.

Was das adsorptive System nach der Erfindung weiterhin anbelangt, so besitzt dieses typischerweise eine himbeer- oder brombeerartige Struktur. Dabei sind einzelne äußere Adsorberpartikel bzw. die jeweiligen partikulären Adsorptionsmaterialien (A) und (B) um einen oder mehrere, vorzugsweise um einen, inneren Kern angeordnet, wobei der Kern durch das Bindemittel gebildet ist. In diesem Zusammenhang ist es erfindungsgemäß von Vorteil, wenn die einzelnen Teilchen bzw. Partikel der jeweiligen partikulären Adsorptionsmaterialien leicht in den Bindemittelträger eingedrückt sind, so daß zum einen eine ausreichende Fixierung bzw. Haftung der partikulären Strukturen auf den Bindemittelträger gewährleistet ist und zum anderen auch im fixierten Zustand der Teilchen bzw. Partikel eine ausreichende Zugänglichkeit der jeweiligen Adsorbentien für zu adsorbierende Substanzen vorliegt. In diesem Zusammenhang ist es erfindungsgemäß bevorzugt, wenn die äußere Oberfläche der Teilchen bzw. Partikel der entsprechenden partikulären Adsorptionsmaterialien (A) bzw. (B) zu höchstens 50 %, insbesondere zu höchstens 40 %, vorzugsweise zu höchstens 30 %, vorzugsweise zu höchstens 20 %, besonders bevorzugt zu höchstens 10 %, von dem Bindemittelträger bedeckt sind.

Was das den Kern des adsorptiven Systems nach der Erfindung ausbildende Bindemittel als solche anbelangt, so kann dieses aus einer Vielzahl hierfür geeigneter Materialien ausgewählt werden. Vorteilhafterweise handelt es sich bei dem Bindemittel um ein thermoplastisches Material, wobei das Bindemittel üblicherweise weiterhin hitzeklebrig ausgebildet sein sollte. Typischerweise sollte das Bindemittel auf Basis eines organischen Polymers ausgebildet sein oder hieraus bestehen. In diesem Zusammenhang sollte das organische Polymer thermoplastisch ausgebildet sein. Zudem sollte das für das Bindemittel eingesetzte organische Polymer hitzeklebrig ausgebildet sein. Weiterhin sollte das organische Polymer aus Polymeren aus der Gruppe von Polyestern, Polyamiden, Polyethern, Polyetherestern und/oder Polyurethanen sowie aus deren Mischungen und Copolymeren ausgewählt sein. Insbesondere kommen auch Kleber auf Basis von Copolyestern und/oder Copolyamiden in Betracht.

Die vorliegende Erfindung ist im allgemeinen nicht auf die zuvor genannten Polymere beschränkt. Vielmehr können in bezug auf das Bindemittel auch Materialien auf anorganischer Basis, wie beispielsweise Siliziumdioxid oder dergleichen, eingesetzt werden. Zudem kommt auch die Verwendung beispielsweise von Tonerde oder Pech in bezug auf das Bindemittel in Betracht - auch wenn diese Ausführungsformen erfindungsgemäß weniger bevorzugt sind.

Sofern gemäß der erfindungsgemäß bevorzugten Ausführungsform das Bindemittel auf Basis eines organischen Polymers eingesetzt wird, sollte es sich typischerweise bei dem organischen Polymer um ein vorzugsweise thermoplastisches Bindemittel, insbesondere um einen vorzugsweise thermoplastischen Schmelzklebstoff, handeln. Dabei sollte das thermoplastische Bindemittel bevorzugt auf der Grundlage von Polymeren aus der Gruppe von Polyestern, Polyamiden, Polyethern, Polyetherestern und/oder Polyurethanen sowie deren Mischungen und Copolymeren, sein.

Üblicherweise ist das organische Polymer, insbesondere das Bindemittel, vorzugsweise der Schmelzklebstoff, bei 25 °C und Atmosphärendruck fest. Hierdurch wird eine hervorragende Haftung der partikulären Strukturen auf dem Bindemittelträger bei Raumtemperatur gewährleistet.

Darüber hinaus sollte das organische Polymer, insbesondere das Bindemittel, vorzugsweise der Schmelzklebstoff, insbesondere aus verfahrens- und anwendungstechnischen Gründen einen Schmelz- oder Erweichungsbereich oberhalb von 100 °C, vorzugsweise oberhalb von 110 °C, insbesondere oberhalb von 120 °C, aufweisen. Im allgemeinen weist das organische Polymer, insbesondere das Bindemittel, vorzugsweise der Schmelzklebstoff, eine Temperaturbeständigkeit von mindestens 100 °C, vorzugsweise mindestens 125 °C, insbesondere mindestens 150 °C, auf.

Zur Gewährleistung einer guten Adsorptionseffizienz, insbesondere Adsorptionskinetik und/oder Adsorptionskapazität, ist es vorteilhaft, wenn die partikulären Adsorberpartikel (A) und (B) des adsorptiven Systems nach der Erfindung bzw. des Agglomerats zu höchstens 50 %, insbesondere zu höchstens 40 %, besonders bevorzugt zu höchstens 30 %, ganz besonders bevorzugt zu höchstens 20 % oder weniger, ihrer Oberfläche mit dem Bindemittelträger bedeckt bzw. belegt sind, bezogen auf die Gesamtoberfläche von (A) bzw. (B). Hierdurch ist, wie zuvor angeführt, eine hervorragende Zugänglichkeit insbesondere der äußeren Oberfläche der partikulären Adsorptionsmaterialien für zu adsorbierende Substanzen gegeben. Ein gewisser Bedeckungsgrad der Oberfläche mit dem Bindemittel ist jedoch insbesondere vor dem Hintergrund erforderlich, daß gleichermaßen eine gute Haftung der Partikel bzw. Teilchen der jeweiligen partikulären Adsorberpartikel (A) und (B) an den Bindemittelträger gewährleistet ist.

Gemäß einer besonderen Ausführungsform der vorliegenden Erfindung können die adsorptiven Systeme nach der Erfindung bzw. die sie bildenden Agglomerate zu einem Formkörper verarbeitet sein, was insbesondere mittels Verpressung erfolgen kann.

Ein besonderer Vorteil des erfindungsgemäßen adsorptiven Systems ist zudem darin zu sehen, daß das adsorptive System nach der Erfindung bzw. das entsprechende Agglomerat, insbesondere in loser Schüttung oder in Form eines Formkörpers, welche jeweils eine Vielzahl der erfindungsgemäßen Systeme aufweisen, einen deutlich reduzierten Druckverlust, insbesondere im Vergleich zu den jeweiligen Adsorberpartikeln als solchen, aufweist. Hierdurch ist eine gute Durchströmung des adsorptiven Systems mit dem aufzureinigendem Medium, insbesondere Luft, möglich. So weist das erfindungsgemäße adsorptive System bzw. das Agglomerat, insbesondere in loser Schüttung oder in Form eines Formkörpers, einen längenbezogenen Druckverlust bei einer Strömungsgeschwindigkeit von 0,2 m/s von höchstens 200 Pa/cm, insbesondere höchstens 150 Pa/cm, vorzugsweise höchstens 100 Pa/cm, besonders bevorzugt höchstens 90 Pa/cm, ganz besonders bevorzugt höchstens 70 Pa/cm, noch mehr bevorzugt höchstens 50 Pa/cm, auf. Üblicherweise weist das erfindungsgemäße adsorptive System bzw. das Agglomerat, insbesondere in loser Schüttung oder in Form eines Formkörpers, einen längenbezogenen Druckverlust bei einer Strömungsgeschwindigkeit von 0,2 m/s im Bereich von 5 bis 200 Pa/cm, insbesondere 5 bis 150 Pa/cm, vorzugsweise 5 bis 100 Pa/cm, besonders bevorzugt 7,5 bis 90 Pa/cm, ganz besonders bevorzugt 10 bis 80 Pa/cm, auf.

Im Vergleich hierzu besitzen lose Schüttungen gleichartiger Adsorberpartikel, wie sie in dem erfindungsgemäßen adsorptiven System eingesetzt werden, in Form separater Teilchen typischerweise längenbezogene Druckverluste bei einer Strömungsgeschwindigkeit von 0,2 m/s im Bereich von 22 bis 600 Pa/cm auf. Das Durchströmverhalten der erfindungsgemäßen adsorptiven Systeme ist somit gegenüber dem Stand der Technik deutlich verbessert.

Im Rahmen der vorliegenden Erfindung lassen sich somit ausgehend von kornförmigem bzw. sphärischen Adsorbentien bzw. Adsorberpartikeln unter Verwendung eines spezifischen Bindemittelträgers, insbesondere in Form von thermoplastischen Polymeren, adsorptive Systeme bzw. Agglomerate herstellen, welche sowohl im Schüttbett als auch in einer zu einem adsorptiven Formkörper verpreßten bzw. hierzu verarbeiteten Form eine sehr geringe Druckdifferenz aufweisen, insbesondere im Vergleich z. B. mit Schüttungen aus vergleichbaren kornförmigen bzw. sphärischen Adsorbentien bzw. Adsorberpartikeln oder Splitterkohle.

Zudem ist es im Rahmen der vorliegenden Erfindung erstmalig gelungen, in bezug auf ein adsorptives System eine spezifische Maßschneiderung und Abstimmung der Adsorptionseigenschaften zu realisieren, insbesondere was die Adsorptionskinetik und die Adsorptionskapazität anbelangt. So ist es beispielsweise im Rahmen der vorliegenden Erfindung möglich, in ein und demselben Material in Form des erfindungsgemäßen adsorptiven System, optimierte Adsorptionseigenschaften für ein großes Spektrum an zu adsorbierenden Substanzen bereitzustellen, beispielsweise im Hinblick auf Substanzen unterschiedlicher Polarität, Größe oder dergleichen. Zudem ist die Adsorptionskapazität aufgrund der optimierten Belegung der Oberfläche des Bindemittelträgers deutlich erhöht.

Die vorliegende Erfindung ist folglich mit einer Vielzahl von Vorteilen verbunden, von denen vorstehend nur einige genannt worden sind und nachfolgend in nichtbeschränkender und nichtabschließender Weise einige weitere aufgezählt seien:
- Wie zuvor erwähnt, weist das erfindungsgemäße adsorptive System bzw. Agglomerat im Schüttbett eine im Vergleich zu den reinen Basisadsorberpartikeln deutlich verringerte Druckdifferenz auf, ohne daß andere Adsorptionseigenschaften der eingesetzten Adsorptionsmaterialien, wie z. B. Adsorptionskinetik, Adsorptionskapazität, Anfangsdurchbruch oder dergleichen, wesentlich beeinträchtigt sind, insbesondere da die diesbezüglichen Eigenschaften der Adsorptionsmaterialien in dem erfindungsgemäßen adsorptiven System zumindest im wesentlichen erhalten bleiben.
- Durch die Vielzahl der möglichen Kombinationen an Adsorberpartikeln in Form von partikulären Adsorptionsmaterialien, insbesondere wie zuvor definiert, resultiert hinsichtlich der Adsorptionseigenschaften eine Multifunktionalität und Breitbandigkeit, so daß im Ergebnis adsorptive Strukturen mit deutlich verbesserten Adsorptionseigenschaften zur Verfügung gestellt werden. Die große Breitbandigkeit bzw. die Multifunktionalität wird erfindungsgemäß insbesondere durch die zurechtgebildete Kombination von mindestens zwei verschiedenen Adsorbertypen realisiert, wobei das erfindungsgemäße adsorptive System einen ähnlichen Druckverlust im Vergleich zu Basisagglomeraten bzw. -systemen mit lediglich einem einzigen Typ von Adsorberteilchen aufweist.
- Ein weiterer Vorteil der erfindungsgemäßen Konzeption mit dem gezielten Einsatz mehrerer verschiedener Adsorbertypen bzw. verschiedener partikulärer Adsorptionsmaterialien ist darin zu sehen, daß sowohl die Adsorptionskinetik als auch die Adsorptionskapazität des adsorptiven Systems nach der Erfindung im Vergleich zu Basisagglomeraten auf Basis lediglich eines Adsorbertyps deutlich verbessert sind - und dies, wie zuvor angeführt, bei einem ähnlichen Druckverlust im Vergleich zu den Basisagglomeraten.
- Ein weiterer zentraler Vorteil der vorliegenden Erfindung ist darin zu sehen, daß durch den Einsatz verschiedener partikulärer Adsorptionsmaterialien in bezug auf das erfindungsgemäße adsorptive System ein signifikanter Anstieg des Oberflächen/Volumen-Verhältnisses des Kompositadsorbers nach der Erfindung auch im Vergleich zu Basisagglomeraten mit lediglich einem Adsorbertyp resultiert, d.h. daß erfindungsgemäß die zur Adsorption fähige Oberflächen insbesondere durch die optimierte Belegung mit den Adsorberpartikeln signifikant vergrößert sind.
- Zudem bleibt in dem erfindungsgemäßen adsorptiven System bzw. Agglomerat die hervorragende Imprägnierbarkeit der Basispartikel erhalten (z. B. mehr als 60 % vom Benetzungstest).
- Weiterhin liegt eine verbesserte bzw. differenzierte Imprägnierfähigkeit bzw. Ausrüstung mit katalytisch aktiven Substanzen bei gleichzeitig verbesserter Adsorptionseffizienz bzw. Adsorptionskinetik des erfindungsgemäßen Kompositadsorbers auf Basis des adsorptiven Systems nach der Erfindung auch im Vergleich zu Basisagglomeraten mit lediglich einem Adsorptionsmaterial vor. Insbesondere können nichtkompatible Imprägnierungen bzw. Katalysatoren auf den verschiedenen Adsorbertypen etabliert werden.
- Darüber hinaus sind die erfindungsgemäßen adsorptiven Systeme zumindest im wesentlichen staubfrei, was insbesondere auch aufgrund der sehr hohen mechanischen Stabilität des adsorptiven Systems nach der Erfindung an sich als auch aufgrund der Stabilität, insbesondere der Abriebfestigkeit und Belastungshärte, der im Rahmen der vorliegenden Erfindung eingesetzten Basispartikel in Form der partikulären Adsorptionsmaterialien realisiert ist. Insbesondere enthält das erfindungsgemäße adsorptive System zumindest im wesentlichen keine lungengängigen Staubpartikelgrößen.
- Durch freie Wahl der jeweiligen Agglomeratfraktionen sowie die Abstimmung der jeweils eingesetzten partikulären Adsorptionsmaterialien im Bereich der Basis Adsorberpartikeldurchmesser bis hin zu den Agglomeratdurchmessern ist der Druckverlust frei einstellbar.
- Wie zuvor geschildert, wird bei loser Schüttung des erfindungsgemäßen adsorptiven Systems bzw. der erfindungsgemäßen Struktur im Vergleich zu Korn- oder Formaktivkohlen bei gleicher Adsorptionskapazität ein deutlich geringerer Druckverlust beobachtet.
- Durch die freie Wahl und Abstimmung der jeweiligen Partikelgröße der eingesetzten partikulären Adsorptionsmaterialien (z. B. unterschiedliches Oberflächen/Volumen-Verhältnis für die jeweiligen Adsorbertypen) und durch die freie Wahl bzw. Abstimmung des Aktivierungsgrades der Basisadsorberpartikel (z. B. unterschiedliche Porengrößenverteilung) hinsichtlich der eingesetzten partikulären Adsorptionsmaterialien ist die Gesamtadsorptionseffizienz und die Gesamtadsorptionskinetik einstellbar bzw. steuerbar, wobei auf dieser Basis eine deutlich verbesserte Breitenwirksamkeit realisiert ist.
- Zudem ist es im Rahmen der vorliegenden Erfindung möglich, die Schüttdichte und Adsorptionskapazität bei vorgegebenem Druckverlust beispielsweise durch freie Wahl und Abstimmung der jeweiligen Größen der Basisadsorberpartikel (z. B. unterschiedliche bzw. aufeinander abgestimmte Oberflächen/Volumen-Verhältnisse der jeweilige Adsorbertypen) entsprechend einzustellen.
- Infolge des hohen Puffervolumens wird ein etwaiger Adsorptionsverlust aufgrund des Bindemittelträgers, insbesondere aufgrund der organischen Polymerbestandteile, kompensiert, so daß kein signifikantes bis kein durch das Bindemittel, insbesondere durch die organischen Polymerbestandteile, geblocktes Porenvolumen vorliegt. Ein etwaiger Kapazitätsverlust infolge der Bestandteile des Bindemittelträgers ist dabei äußerst gering.
- Zudem ist es im Rahmen der vorliegenden Erfindung, insbesondere im Hinblick eines Einsatzes des erfindungsgemäßen adsorptiven Systems in Form einer losen Schüttung bzw. eines Formteiles möglich, den Druckverlust und/oder die Volumendichte zu variieren bzw. gezielt maßzuschneidern, da diese gegenüber den partikulären Basisadsorbern als solchen jeweils frei einstellbar sind.
- Ein weiterer Vorteil der vorliegenden Erfindung ist darin zu sehen, daß das erfindungsgemäße System bzw. Agglomerat gute mechanische Beständigkeiten bei gleichzeitig guter Flexibilität und Komplexität aufweist, so daß das adsorptive System nach der Erfindung ohne weiteres verpreßt und unter Verwendung einer Vielzahl von adsorptiven Systemen nach der Erfindung zu entsprechenden stabilen und selbsttragenden adsorptiven Formkörpern beliebiger Geometrie verarbeitet werden kann, was nachfolgend noch im Detail geschildert ist.
- Das erfindungsgemäße adsorptive System bzw. Agglomerat ermöglicht im Ergebnis einen sehr hohen Aktivierungsgrad und somit eine sehr hohe Kapazität der Basisadsorberpartikel, verbunden mit einer Breitbandigkeit und Multifunktionalität der Adsorptionseigenschaften und mit einer sehr guten mechanischen Stabilität; durch die Agglomeratbildung kommt es - im Vergleich zu den nichtagglomerierten Basisadsorberpartikeln - zu keiner nennenswerten Verringerung der mechanischen Stabilität, und dies bei gleichbleibend sehr hohen Aktivierungsgraden.
- Mit dem erfindungsgemäßen adsorptiven System bzw. Agglomerat wird neben der zuvor geschilderten Breitbandigkeit bzw. Multifunktionalität auch eine hohe Gesamtadsorptionseffizienz auch bei niedrigen Adsorbatkonzentrationen aufgrund sehr hoher möglicher Adsorptionspotentiale der Basisadsorberpartikel erreicht. Dabei kann die Gesamtadsorptionseffizienz durch die konkrete Abstimmung der eingesetzten partikulären Adsorptionsmaterialien noch weiter verbessert werden. Insbesondere könne eine hohe Adsorptionskapazität, welche insbesondere durch die großen Adsorberteilchen bereitgestellt wird, und eine sehr gute Adsorptionsspontaneität, welche durch die kleinen Adsorberteilchen bereitgestellt wird, in ein und demselben Material realisiert werden.
- Aufgrund der hochreinen Oberflächen der eingesetzten partikulären Adsorptionsmaterialien werden schließlich durch hohe relative Feuchten und Alterungseffekte keine nennenswerten Effizienzverluste beobachtet.

Weiterer Gegenstand der vorliegenden Erfindung - gemäß einem zweiten Aspekt der vorliegenden Erfindung - ist ein Verfahren zur Herstellung von adsorptiven Systemen (1) auf Basis eines Agglomerates und insbesondere wie zuvor definiert, mit einer Vielzahl von Adsorberpartikeln, wobei die Adsorberpartikel auf einem Bindemittelträger (2) fixiert und über den Bindemittelträger (2) zu dem adsorptiven System (1) auf Basis des Agglomerats verbunden sind, wobei der Bindemittelträger (2) mindestens einen Kern des jeweiligen adsorptiven Systems (1) bildet und wobei die jeweiligen Teilchen und/oder Partikel des ersten partikulären Adsorptionsmaterials (A) und des zweiten partikulären Adsorptionsmaterials (B) eines einzelnen adsorptiven Systems (1) jeweils an mindestens einen Kern in Form des Bindemittelträgers (2) angeordnet und/oder angelagert sind, und wobei die Adsorberpartikel ein erstes partikuläres Adsorptionsmaterial (A) und ein von dem ersten partikulären Adsorptionsmaterial (A) verschiedenes, zweites partikuläres Adsorptionsmaterial (B) aufweisen, wobei das erste partikuläre Adsorptionsmaterial (A) und das zweite partikuläre Adsorptionsmaterial (B) voneinander verschiedene Teilchendurchmesser aufweisen, wobei das erste partikuläre Adsorptionsmaterial (A) einen größeren mittleren Teilchendurchmesser D50 als das zweite partikuläre Adsorptionsmaterial (B) aufweist und wobei das Verhältnis des mittleren Teilchendurchmessers D50 des ersten partikulären Adsorptionsmaterials (A) zu dem mittleren Teilchendurchmesser D50 des zweiten partikulären Adsorptionsmaterials (B) mindestens 5 : 1 beträgt,
a) wobei zunächst das erste partikuläre Adsorptionsmaterial (A) einerseits und Partikel des Bindemittelträgers, insbesondere auf Basis mindestens eines vorzugsweise thermoplastischen organischen Polymers, andererseits miteinander in Kontakt gebracht und/oder vermischt werden,
b) wobei die resultierende Mischung nachfolgend auf Temperaturen oberhalb der Schmelz- oder Erweichungstemperatur des Bindemittelträgers erwärmt wird und das erste partikuläre Adsorptionsmaterial (A) auf dem Bindemittelträger insbesondere durch Energieeintrag zum Haften gebracht und/oder auf dem Bindemittelträger fixiert wird und auf diese Weise Zwischenprodukte, welche das erste partikuläre Adsorptionsmaterial (A) und den Bindemittelträger aufweisen, erhalten werden,
c) wobei gegebenenfalls anschließend die resultierenden Zwischenprodukte auf Temperaturen unterhalb der Schmelz- oder Erweichungstemperatur des Bindemittels des Bindemittelträgers abgekühlt werden,
d) wobei anschließend das zweite partikuläre Adsorptionsmaterial (B) zu den Zwischenprodukten gegeben wird und/oder mit den Zwischenprodukten in Kontakt gebracht und/oder vermischt wird,
e) wobei gegebenenfalls die resultierende Mischung nachfolgend erneut auf Temperaturen oberhalb der Schmelz- oder Erweichungstemperatur des Bindemittels des Bindemittelträgers erwärmt werden,
f) wobei das zweite partikuläre Adsorptionsmaterial (B) auf dem Bindemittelträger insbesondere durch Energieeintrag zum Haften gebracht und/oder auf dem Bindemittelträger fixiert wird und auf diese Weise Produkte, welche das erste partikuläre Adsorptionsmaterial (A), das zweiten partikuläre Adsorptionsmaterial (B) und den Bindemittelträger aufweisen, erhalten werden und
g) wobei schließlich die resultierenden Produkte auf Temperaturen unterhalb der Schmelz- oder Erweichungstemperatur des Bindemittels des Bindemittelträgers zum Erhalt der diskreten adsorptiven Systeme nach der Erfindung abgekühlt wird.

Typischerweise wird in Schritt a) und/oder in Schritt e) und/oder in Schritt f), unabhängig voneinander, die erreichte Temperatur für eine definierte Zeitdauer gehalten, insbesondere für mindestens eine Minute, vorzugsweise mindestens 5 Minuten, vorzugsweise mindestens 10 Minuten, und/oder für eine Zeitdauer von 1 bis 600 Minuten, insbesondere 5 bis 300 Minuten, bevorzugt 10 bis 150 Minuten. Die Haltedauer ist insbesondere danach zu bemessen, daß die gesamte Charge jeweils auf eine einheitliche Temperatur gebracht wird, was die Haftung der partikulären Adsorbentien auf dem Bindemittelträger verbessert. Zudem wird durch die erfindungsgemäß vorgesehene Haltedauer der Temperatur gewährleistet, daß der Bindemittelträger zumindest im wesentlichen vollständig aufgeschmolzen wird, um so eine gute Haftung der partikulären Struktur auf dem Bindemittelträger zu ermöglichen. Die Temperatur kann gleichermaßen während des gesamten Fixierungsablaufes der Partikel (A) und (B) aufrechtgehalten werden, d. h. oberhalb der Schmelz- bzw. Erweichungstemperatur des Bindemittels eingestellt werden.

Was das in Schritt a) eingesetzte partikuläre Adsorptionsmaterial (A) anbelangt, so sollte dieses derart ausgewählt werden, daß im Rahmen der Fixierung der entsprechenden Partikel bzw. Teilchen auf den Bindemittelträger in Schritt b) ein entsprechender Teil der Oberfläche des Bindemittelträgers nicht mit dem ersten partikulären Adsorptionsmaterial (A) besetzt wird bzw. freie Oberflächenbereiche auf dem Bindemittelträger zur nachfolgenden Fixierung bzw. Anhaftung des zweiten partikulären Adsorptionsmaterials (B) verbleiben. Dies kann beispielsweise durch Auswahl der Art, wie Teilchengröße bzw. Teilchendurchmesser, und/oder Menge des ersten partikulären Adsorptionsmaterials (B) gesteuert werden. Im allgemeinen sollte zudem die Teilchengröße bzw. der Teilchendurchmesser, insbesondere die mittlere Teilchengröße bzw. der mittlere Teilchendurchmesser D50, des eingesetzten Bindemittels größer sein als die entsprechenden Werte der verwendeten partikulären Adsorptionsmaterialien (A) bzw. (B).

Während der Durchführung von Schritt b) und/oder von Schritt d) und/oder von Schritt e), insbesondere beim Erwärmungs- und Haltevorgang, ist es von besonderem Vorteil, wenn, unabhängig voneinander, ein Energieeintrag, vorzugsweise mittels Mischen, erfolgt. Diesbezüglich kann über den Energieeintrag die resultierende Agglomeratgröße und/oder Größe der resultierenden adsorptiven Systeme nach der Erfindung gesteuert werden. Über die Menge und Art des Energieeintrags kann somit die Teilchengröße und/oder der Teilchendurchmesser, insbesondere die mittlere Teilchengröße und/oder der mittlere Teilchendurchmesser D50, der erhaltenen Agglomerate gesteuert werden - und dies sowohl hinsichtlich Schritt b) und/oder d) und/oder Schritt e) des erfindungsgemäßen Verfahrens.

Was weiterhin das in Schritt f) zugegebene zweite partikuläre Adsorptionsmaterial (B) anbelangt, so ist es erfindungsgemäß vorgesehen, dass dieses Adeinen kleineren mittleren Teilchendurchmesser D50, als das erste partikuläre Adsorptionsmaterial (A) aufweist, um auf diese Weise insbesondere zu ermöglichen, daß die freien bzw. unbesetzten Bereiche des Bindemittelträgers der in Schritt b) erhaltenen Agglomerate bzw. Zwischenprodukte nachfolgend mit dem zweiten partikulären Adsorptionsmaterial (B) besetzt werden können.

Typischerweise wird das erfindungsgemäße Verfahren in einem beheizbaren Drehrohr, insbesondere einem Drehrohrofen, durchgeführt. Über die Drehgeschwindigkeit des Drehrohres kann der Energieeintrag und somit insbesondere die resultierende Agglomeratgröße und/oder Größe der adsorptiven Systeme nach der Erfindung gesteuert werden. Mit zunehmendem Energieeintrag werden dabei kleine Agglomeratgrößen erhalten. Entsprechend können mit zunehmender Drehgeschwindigkeit zunehmend kleinere Agglomeratgrößen erhalten werden. Durch chargenweises Entladen des Drehrohres lassen sich zudem insbesondere auch unter Variation der Drehgeschwindigkeiten für die einzelnen Chargen insgesamt multimodale Agglomeratgrößenverteilungen erhalten.

Gemäß einer besonderen Ausführungsform der vorliegenden Erfindung können die in Schritt g) resultierenden adsorptiven Systeme in einem nachfolgenden Schritt h) zu einem Formkörper verarbeitet werden, was insbesondere unter Verpressen erfolgen kann. Dabei kann die Verarbeitung zu Formkörpern unter Erwärmen, vorzugsweise auf Temperaturen unterhalb der Schmelz- oder Erweichungstemperatur des Bindemittelträgers, erfolgen, so daß die betreffenden Agglomerate nicht zersetzt werden bzw. nicht zerfallen.

Wie zuvor angeführt, werden die Adsorberpartikel (A) und (B) derart ausgewählt derart, daß das erste partikuläre Adsorptionsmaterial (A) und das zweite partikuläre Adsorptionsmaterial (B) voneinander verschiedene Teilchendurchmesser D50 aufweisen.

Im Rahmen des erfindungsgemäßen Herstellungsverfahrens für die erfindungsgemäßen adsorptiven Systeme bzw. Agglomerate wird der Bindemittelträger, insbesondere in Form eines thermoplastischen organischen Polymers, in Form von Partikeln, insbesondere korn- oder kugelförmigen Partikeln, bevorzugt in Form von bei Raumtemperatur und Atmosphärendruck festen Partikeln, eingesetzt. Der Begriff "Raumtemperatur" bezieht sich dabei insbesondere auf 25 °C, während sich der Begriff "Atmosphärendruck" insbesondere auf 1013 hPa bezieht. Im allgemeinen kann der Bindemittelträger mit Partikelgrößen im Bereich von 100 bis 2.000 µm, insbesondere 150 bis 1.500 µm, vorzugsweise 200 bis 1.000 µm, eingesetzt werden. Üblicherweise kann das Größenverhältnis von partikulärem Bindemittelträger zu Adsorberpartikeln (A) bzw. (B) mit mindestens 1 : 1, insbesondere mindestens 1,25 : 1, vorzugsweise mindestens 1,5 : 1, besonders bevorzugt mindestens 2 : 1, ganz besonders bevorzugt mindestens 3 : 1, gewählt werden. Dabei können die jeweiligen Größenverhältnisse des partikulären Bindemittelträgers zu dem partikulären Adsorptionsmaterial (A) einerseits und zu dem zweiten partikulären Adsorptionsmaterial (B) unabhängig voneinander gewählt werden.

Im Rahmen des erfindungsgemäßen Herstellungsverfahrens kann es gleichermaßen vorgesehen sein, daß das Gewichtsverhältnis von Adsorberpartikeln (A) und/oder (B) zu Bindemittelträger mit mindestens 2 : 1, insbesondere mindestens 3 : 1, vorzugsweise mindestens 5 : 1, besonders bevorzugt mindestens 7 : 1, ganz besonders bevorzugt mindestens 8 : 1, gewählt wird. Üblicherweise wird das Gewichtsverhältnis von Adsorberpartikeln (A) und/oder (B) zu organischem Polymer im Bereich von 2 : 1 bis 30 : 1, insbesondere 3 : 1 bis 20 : 1, vorzugsweise 4 : 1 bis 15 : 1, besonders bevorzugt 5 : 1 bis 10 : 1, gewählt.

Wie zuvor geschildert, wird als Bindemittelträger insbesondere ein organisches Polymer, vorzugsweise ein thermoplastisches organisches Polymer, insbesondere ein vorzugsweise thermoplastischer Schmelzklebstoff, bevorzugt auf der Grundlage von Polymeren aus der Gruppe von Polyestern, Polyamiden, Polyethern, Polyetherestern und/oder Polyurethanen sowie deren Mischungen und Copolymeren, eingesetzt. Als weitere Bindemittelträger kommen auch Polyolefine sowie insbesondere thermoplastisch modifizierte Cellulosederivate, insbesondere karamellisierte Zucker, Zuckerderivate und/oder insbesondere thermoplastisch modifizierte Stärke in Betracht.

Für weitergehende Einzelheiten zu dem erfindungsgemäßen Verfahren gemäß dem dritten Aspekt der vorliegenden Erfindung kann auf die obigen Ausführungen sowie auf die nachfolgenden Ausführungen zu den übrigen Aspekten der vorliegenden Erfindung verwiesen werden, welche in bezug auf das erfindungsgemäße Herstellungsverfahren gemäß diesem Erfindungsaspekt entsprechend gelten.

Gemäß einer typischen Ausführungsform kann beispielsweise wie folgt vorgegangen werden: Als Bindemittelträger können Schmelzklebstoffe verwendet werden, wobei typischerweise eine Vielzahl von geeigneten Schmelzklebstoffen genutzt werden können. Insbesondere können Schmelzklebstoffe in Form von thermoplastischen Copolyamiden und/oder thermoplastischen Copolymeren in Granulat- und/oder Pulverform eingesetzt werden. Beispielsweise können als Bindemittelträger Schmelzklebstoffe in Form von Copolyestern eingesetzt werden. Derartige Schmelzklebstoffe können beispielsweise von der Firma EMS-Chemie GmbH & Co. KG, Neumünster, bezogen werden.

Insbesondere können die Schmelzklebstoffe in Teilchenform eingesetzt werden. Dabei sollte vorteilhafterweise die Teilchengröße des Schmelzklebers größer sein als die Teilchengröße der eingesetzten partikulären Adsorptionsmaterialien (A) und (B), um auf diese Weise insbesondere ein Durchfallen von Kleberbestandteilen bzw. -partikeln in der Schüttung zu verhindern. Im allgemeinen können die eingesetzten Bindemittelträger, insbesondere in Form von Schmelzklebstoffen, einstellbare thermische und/oder chemische Eigenschaften aufweisen, so daß auf diese Weise eine Anpassung im Hinblick auf eine optimierte Haftung der jeweils eingesetzten partikulären Adsorptionsmaterialien (A) und/oder (B) erreicht werden kann.

Wie zuvor geschildert, können die partikulären Adsorptionsmaterialien (A) und/oder (B) in Form von sphärischen Basispartikeln beispielsweise auf Basis von polymeren Rohstoffen hergestellt bzw. eingesetzt werden. Die erfindungsgemäß verwendeten partikulären Adsorptionsmaterialien (A) und/oder (B) zeichnen sich durch eine Vielzahl von Vorteilen aus, wobei eine hohe Adsorptionskapazität, eine hohe chemische Reinheit sowie außergewöhnlich gute mechanische Eigenschaften diesbezüglich hervorzuheben sind.

Insbesondere ist die Formgebung der partikulären Adsorptionsmaterialien (A) und (B) bzw. der Basispartikel, unabhängig voneinander, sphärisch, wobei das partikuläre Adsorptionsmaterialien (A) und (B) insbesondere in einer Partikelgröße von d_{(Partikel)} von 0,05 bis 0,7 mm eingesetzt werden können, wobei für das zweite partikuläre Adsorptionsmaterial (B) kleinere Werte vorliegen. Auch hiervon abweichende Werte sind möglich. Insbesondere können hinsichtlich der Partikelgrößen bzw. Teilchendurchmesser bzw. Teilchengrößen für (A) und (B), unabhängig voneinander, neben im allgemeinen polydispersen auch monodisperse Partikelgrößenverteilungen eingesetzt werden. Dies gilt insbesondere auch für die gemäß dem ersten Aspekt der vorliegenden Erfindung genannten Teilchengrößen bzw. Teilchendurchmesser des ersten partikulären Adsorptionsmaterials (A) bzw. des zweiten partikulären Adsorptionsmaterials (B). Diesbezüglich kann es im Rahmen der vorliegenden Erfindung auch möglich sein, daß sich hinsichtlich des ersten partikulären Adsorptionsmaterials (A) und des zweiten partikulären Adsorptionsmaterials (B) die Größenverteilungen hinsichtlich ihrer entsprechenden Randbereiche mitunter geringfügig überlappen bzw. überschneiden, d. h. die in der Partikelgrößenverteilung größten Partikel des Materials mit den kleineren Teilchengrößen, insbesondere des zweiten partikulären Adsorptionsmaterials (B), können in den kleinsten Partikelgrößenbereich des Materials mit den größeren Teilchengrößen hinsichtlich der Partikelgrößenverteilung, insbesondere des ersten partikulären Adsorptionsmaterials (A), fallen bzw. umgekehrt.

Hinsichtlich der einsetzbaren partikulären Adsorptionsmaterialien (A) und (B) ist es möglich, auf Basis des gezielt ausgesuchten Rohstoffes und spezieller Herstellungsverfahren Porenvolumina nahe der theoretischen Machbarkeit zu erreichen, beispielsweise können Oberflächen von bis zu 2.300 m²/g oder mehr gemäß ASTM D6554-04 sowie Gesamtporenvolumina von bis zu 3,5 cm³/g oder mehr erzeugt werden.

Was Schritt a) und Schritt b) des erfindungsgemäßen Verfahrens anbelangt, so stellen diese Schritte gewissermaßen die Herstellung der Basisagglomerate dar, d. h. es resultiert ein erstes adsorptives System auf Basis des Bindemittelträgers und des ersten partikulären Adsorptionsmaterials (A), wie zuvor angeführt. Somit werden gemäß diesen Schritten des erfindungsgemäßen Verfahrens aus sphärischen Basispartikeln in Form des ersten partikulären Adsorptionsmaterials (A) und aus Bindemittelträgern, insbesondere in Form von Schmelzklebstoffen, insbesondere durch thermische und mechanische Behandlung der entsprechenden Basisagglomerate bzw. Zwischenprodukte hergestellt. Die so hergestellten Basisagglomerate können, wie zuvor angeführt, in weiteren sich anschließenden Schritten mit dem zweiten partikulären Adsorptionsmaterial (B) und gegebenenfalls mit weiteren Materialien belegt werden.

Dabei sollte in bezug auf die Herstellung der erfindungsgemäßen adsorptiven Systeme bzw. Agglomerate bzw. der erfindungsgemäßen Kompositadsorber die Partikelgrößenverteilung der sphärischen Basispartikel in Form des ersten partikuläre Adsorptionsmaterials (A) so gewählt werden, daß, wie zuvor angerührt, freie und somit für das zweite partikuläre Adsorptionsmaterial (B) zugängliche Kleberstellen in bezug auf den Bindemittelträger entstehen bzw. vorliegen, welche in nachfolgenden Schritten mit dem zweiten partikulären Adsorptionsmaterial (B) bzw. den gegebenenfalls weiteren Adsorptionsmaterialien belegt werden können. Insbesondere kann dabei auch die Partikelgröße bzw. die Teilchengröße und/oder der Teilchendurchmesser der Basispartikel bzw. des ersten partikulären Adsorptionsmaterials (A) in Abhängigkeit zur Partikelgröße bzw. zur Teilchengröße bzw. zu dem Teilchendurchmesser des zweiten partikulären Adsorptionsmaterials (B) verändert bzw. eingestellt werden. Mit fortlaufender Belegung sollten die jeweiligen Teilchengrößen der entsprechenden Materialien weiter abnehmen.

Was die thermische Behandlung der Schüttung anbelangt, so richtet sich diese insbesondere nach dem eingesetzten Bindemittelträger bzw. nach dem eingesetzten Klebertyp, wie zuvor angeführt. Dabei sollte die Zieltemperatur größer bzw. innerhalb der Schmelztemperatur des eingesetzten Bindemittelträgers liegen, insbesondere mit der Maßgabe, daß eine klebrige Oberfläche zur Haftung bzw. Fixierung der partikulären Materialien resultiert. Dabei sollte die Zieltemperatur sozusagen minimal gewählt werden, da eine weitergehende Temperaturerhöhung und somit eine weitergehende Verringerung der Viskosität des Klebstoffs bzw. des Bindemittelträgers bei bereits erreichter Schmelz- bzw. Erweichungstemperatur des vorliegenden Bindemittelträgers bzw. Klebstoffs zu einer verstärkten und somit unerwünschten Porenblockierung der Adsorberpartikel führen würde und gegebenenfalls die Adsorberpartikel zu tief in die Bindemittelmatrix eindringen könnten. Weiterhin ist beachtlich, daß im Rahmen des erfindungsgemäßen Verfahrens die jeweiligen Schüttungen (z.B. Bindemittelträger/Adsorptionsmaterial (A) einerseits und Zwischenprodukts bzw. Basisagglomerat/Adsorptionsmaterial (B) andererseits) auf die Zieltemperatur erhitzt werden sollte, so daß mit entsprechenden Haltezeiten hinsichtlich der eingestellten Temperatur gearbeitet werden sollte, um eine vollständige und homogene Erhitzung der gesamten Schüttung zu gewährleisten.

Was die mechanische Behandlung bzw. den Energieeintrag insbesondere in den Verfahrensschritten b) und/oder f) anbelangt, so sollte der entsprechende Energieeintrag durch Drehung eines zur Herstellung der erfindungsgemäßen adsorptiven Systeme eingesetzten Drehrohrreaktors bzw. Drehrohrofens erfolgen. Dies gewährleistet außerdem eine ausreichende Durchmischung der Schüttung sowie einen ausreichenden Wärmeeintrag in die Schüttung. Zudem kann auch im Schritt a) und/oder d) die Vermischung der Komponenten durch Energieeintrag, insbesondere Mischen, erfolgen. In bezug auf Verfahrensschritt (b) umfaßt die Schüttung vorzugsweise das erste partikuläre Adsorptionsmaterial (A) sowie die den Bindemittelträger, während in Schritt f) das Zwischenprodukt mit den zweiten Adsorptionsmaterial (B) vorliegt. Es wird in bezug auf Schritt b) ein ausreichender Kontakt zwischen Bindemittelträger bzw. Kleber einerseits und dem ersten partikulären Adsorptionsmaterial (A) erzeugt, wobei insbesondere zumindest im wesentlichen sämtliche für die entsprechende Partikelgrößenverteilung des ersten partikulären Adsorptionsmaterials (A) zugänglichen freien Kleberstellen des Bindemittelträgers insbesondere sukzessiv belegt werden, d. h. mit fortschreitender Drehdauer des Drehrohrofens erfolgt eine zunehmende Belegung des Bindemittelträgers mit den Basispartikeln bzw. mit dem ersten partikulären Adsorptionsmaterial (A). Wie zuvor angeführt, kann mit Hilfe einer erhöhten Drehgeschwindigkeit des Drehrohrofens die Agglomeratgrößenverteilung zielgerichtet bzw. definiert beeinflußt werden, insbesondere wobei eine erhöhte Drehgeschwindigkeit des Drehrohrofens bzw. Drehrohrreaktors zu kleineren Größen der Agglomerate führt. Entsprechendes gilt für die Fixierung von Adsorptionsmaterial (B).

Wie zuvor angeführt, kann in nachfolgenden Schritten gemäß dem erfindungsgemäßen Verfahren aus den bereits hergestellten Basisagglomeraten unter Verwendung eines zweiten partikulären Adsorptionsmaterials (B) und/oder von weiteren Materialien das erfindungsgemäße adsorptive System bzw. Agglomerat bzw. der erfindungsgemäße Kompositadsorber hergestellt werden, wobei das erfindungsgemäße Verfahren insbesondere im Batch bzw. batchweise durchgeführt werden kann.

Wie zuvor angeführt, sollte die Partikelgrößenverteilung bzw. die Teilchengröße bzw. der Teilchendurchmesser des zweiten partikulären Adsorptionsmaterials (B) so gewählt werden, daß die freien und belegbaren Stellen des Bindemittelträgers bzw. die diesbezüglichen Kleberstellen erreicht werden können bzw. von dem zweiten partikulären Adsorptionsmaterial (B) belegt werden können. Insbesondere vor diesem Hintergrund sollte das zweite partikuläre Adsorptionsmaterial (B) mit kleineren Teilchengrößen bzw. Teilchendurchmessern, wie zuvor angeführt, im Vergleich zu dem ersten partikulären Adsorptionsmaterial (A) vorliegen bzw. eingesetzt werden. Insbesondere kann die Partikelgröße der sphärischen Basispartikel bzw. des ersten partikulären Adsorptionsmaterials (A) in Abhängigkeit zu dem zweiten partikulären Adsorptionsmaterial (B) verändert bzw. abgestimmt werden bzw. *vice versa.*

Wie zuvor angeführt, können für das erste partikuläre Adsorptionsmaterial (A) und/oder für das zweite partikuläre Adsorptionsmaterial (B), unabhängig voneinander, eine Vielzahl von Materialien eingesetzt werden, wie z. B. sphärische Adsorbentien, insbesondere hinsichtlich des zweiten partikulären Adsorptionsmaterials (B) auch in Form von Mini-Beads sowie in Form von Adsorbern mit feiner und sehr feiner Korngröße; Aktivkohlen, wie körnige Aktivkohle, z. B. aus Kokosnußschalen, geformte und/oder extrudierte Aktivkohle, pulverförmige Aktivkohle; Zeolithe, wie natürliche Zeolithe und/oder synthetische Zeolithe; Molekularsiebe, wie zeolithische Molekularsiebe, synthetische Molekularsiebe auf Basis von Kohlenstoff, Oxiden oder Gläsern; Metalloxide oder Metalle, wie z. B. Nanopartikel in bezug auf das zweite partikuläre Adsorptionsmaterial (B); Ionenaustauscherharze, beispielsweise Kationen- und/oder Anionenaustauscher, welche polydispers und/oder monodispers, vom Geltyp und/oder vom makroporösen Typ ausgewählt sein können; sogenannte MOFs, COFs, ZIFs, POMs, OFCs und/oder poröse Polymere; Kronenether und Cryptanden.

Im Rahmen der vorliegenden Erfindung besteht insbesondere die Möglichkeit, durch sinnvolle Auswahl neben den partikulären Adsorptionsmaterialien (A) und (B) weitere Komponenten aufzubringen. Dabei sollte, wie zuvor angeführt, die Partikelgrößenverteilung der jeweiligen Materialien insbesondere mit jedem weiteren Schritt kleiner werden, insbesondere da immer wieder freie Stellen auf der Oberfläche des Bindemittelträgers zugänglich sein müssen.

Die gegebenenfalls durchgeführte erneute thermische Behandlung bzw. die weiterführende thermische Behandlung zur Fixierung des zweiten partikulären Adsorptionsmaterials (B) sollte sich gleichermaßen nach dem eingesetzten Bindemittelträger bzw. Klebertyp richten. Insbesondere wird in bezug auf die Herstellung der erfindungsgemäßen adsorptiven Systeme im gesamten Verfahren kein weiterer Kleber zur Herstellung der Kompositadsorber eingesetzt.

Wie zuvor angeführt, sollte die Zieltemperatur auch zur Fixierung des zweiten Adsorptionsmaterials (B) größer bzw. innerhalb des Schmelztemperaturbereichs des Klebers sein. Der bereits in den Basisagglomeraten mit dem ersten partikulären Adsorptionsmaterial (A) vorhandene Kleber wird dabei erneut angeschmolzen bzw. verbleibt angeschmolzen, so daß an den klebrigen freien Kleberstellen des Bindemittelträgers das zweite partikuläre Adsorptionsmaterial (B) fixiert werden kann. Diesbezüglich ist insbesondere beachtlich, daß insbesondere im Rahmen von Verfahrensschritt d) und/oder e) und/oder f) des erfindungsgemäßen Verfahrens eine Schüttung aus Basisagglomeraten, welche das erste partikulären Adsorptionsmaterial (A) und den Bindemittelträger enthalten, auf eine definierte Zieltemperatur erhitzt werden sollte. Diesbezüglich kann insbesondere mit entsprechenden Haltezeiten gearbeitet werden, um eine vollständige Erhitzung der gesamten Schüttung aus Basisagglomeraten und dem zweiten partikulären Adsorptionsmaterial (B) zu erreichen.

Wie zuvor angeführt, schließt sich gemäß Verfahrensschritt f) eine zweite mechanische Behandlung bzw. ein weiterer Energieeintrag an, welche bzw. welcher gleichermaßen durch die Drehung des eingesetzten Drehrohrofens bzw. Drehrohrreaktors gewährleistet werden kann, um eine ausreichende Durchmischung der Schüttung sowie einen ausreichenden Wärmeeintrag in die Schüttung zu ermöglichen. Dabei umfaßt die Schüttung, wie zuvor angeführt, Basisagglomerate auf Basis des ersten partikulären Adsorptionsmaterials (A) und dem Bindemittelträger und das zugegebene zweite Adsorptionsmaterial (B). Durch die Drehung des Drehrohrofens wird ein ausreichender Kontakt zwischen den Basisagglomeraten einerseits und dem zweiten partikulären Adsorptionsmaterial (B) bzw. den gegebenenfalls weiteren Materialien andererseits gewährleistet, wobei insbesondere die für die entsprechende Partikelgrößenverteilung des zweiten partikulären Adsorptionsmaterials (B) zugänglichen freien Kleberstellen des Bindemittelträgers sukzessiv belegt werden, so daß auf diese Weise die erfindungsgemäßen adsorptiven Systeme mit dem ersten partikulären Adsorptionsmaterial (A) und dem zweiten partikulären Adsorptionsmaterial (B) erhalten werden.

Wie zuvor angeführt, erfolgt abschließend gemäß Schritt g) des erfindungsgemäßen Verfahrens eine Abkühlung der erhaltenen Agglomerate nach der Erfindung.

Auf Basis des zuvor beschriebenen Verfahrens können somit die erfindungsgemäß adsorptiven Systeme erhalten werden.

Weiterer Gegenstand - gemäß einem **dritten** Aspekt der vorliegenden Erfindung - sind die Verwendungen der erfindungsgemäßen adsorptiven Systeme.

So können die erfindungsgemäßen adsorptiven Systeme, wie zuvor definiert, mit einer Vielzahl von Adsorberpartikeln (A) und (B) für die Adsorption von Giftstoffen, Schadstoffen und Gerüchen, insbesondere aus Gas- oder Luftströmen oder aber aus Flüssigkeiten, insbesondere Wasser, verwendet werden. Zudem können die erfindungsgemäßen adsorptiven Systeme, wie zuvor definiert, mit einer Vielzahl von Adsorberpartikeln (A) und (B) zur Reinigung oder Aufbereitung von Gasen, Gasströmen oder Gasgemischen, insbesondere Luft, oder von Flüssigkeiten, insbesondere Wasser, verwendet werden. Zudem können die erfindungsgemäßen adsorptiven Systeme, wie zuvor definiert, mit einer Vielzahl von Adsorberpartikeln (A) und (B) zur Verwendung in Adsorptionsfiltern und/oder zur Herstellung von Filtern, insbesondere Adsorptionsfiltern, verwendet werden.

Weiterhin können die erfindungsgemäßen adsorptiven Systeme, wie zuvor definiert, mit einer Vielzahl von Adsorberpartikeln (A) und (B), als Sorptionsspeicher für Gase, insbesondere Wasserstoff, verwendet werden.

Zudem können die erfindungsgemäßen adsorptiven Systeme, wie zuvor definiert, mit einer Vielzahl von Adsorberpartikeln (A) und (B) - gemäß einem **vierten** Aspekt der vorliegenden Erfindung - zur Herstellung von adsorptiven Formkörpern, insbesondere durch Verpressen, verwendet werden.

In bezug auf die vorgenannten Verwendungen können die adsorptiven Systeme nach der Erfindung insbesondere in loser Schüttung eingesetzt werden. Alternativ können die adsorptiven Systeme auch in Form eines hieraus insbesondere mittels Verpressens hergestellten Formkörpers eingesetzt werden. Typische Schüttungen und/oder Formkörper können dabei im allgemeinen eine Höhe von 1 bis 10 cm, insbesondere von 2 cm, und/oder einen Durchmesser von 1 bis 15 cm, insbesondere 5 cm, aufweisen.

Wiederum beschrieben ist ein Filter, welches die adsorptiven Systeme nach der Erfindung, wie zuvor definiert, mit einer Vielzahl von Adsorberpartikeln, vorzugsweise in loser Schüttung, enthält, wobei das Filter einen längenbezogenen Druckverlust bei einer Strömungsgeschwindigkeit von 0,2 m/s von höchstens 200 Pa/cm, insbesondere im Bereich von 5 bis 200 Pa/cm, aufweist. In diesem Zusammenhang sollte das Filter einen längenbezogenen Druckverlust bei einer Strömungsgeschwindigkeit von 0,2 m/s von höchstens 150 Pa/cm, vorzugsweise höchstens 100 Pa/cm, besonders bevorzugt höchstens 90 Pa/cm, ganz besonders bevorzugt höchstens 70 Pa/cm, noch mehr bevorzugt höchstens 50 Pa/cm, aufweisen. Typischerweise sollte das Filter einen längenbezogenen Druckverlust bei einer Strömungsgeschwindigkeit von 0,2 m/s im Bereich von 5 bis 150 Pa/cm, vorzugsweise 5 bis 100 Pa/cm, besonders bevorzugt 7,5 bis 90 Pa/cm, ganz besonders bevorzugt 10 bis 80 Pa/cm, aufweisen.

Für weitergehende Einzelheiten zu dem Filter kann auf die obigen Ausführungen zu den übrigen Erfindungsaspekten sowie auf nachfolgende Ausführungen verwiesen werden, welche entsprechend gelten.

Wiederum weiterer Gegenstand der vorliegenden Erfindung - gemäß einem **fünften** Aspekt der vorliegenden Erfindung - ist ein adsorptiver Formkörper, welcher aus einer Vielzahl adsorptiver Systeme, wie zuvor definiert, aufgebaut ist.

Der erfindungsgemäße Formkörper, wie zuvor definiert, kann mit einem Verfahren hergestellt werden, adsorptive Systeme nach der Erfindung, wie zuvor definiert, zusammengeführt, insbesondere verpreßt werden.

Schließlich ist ein weiterer Gegenstand der vorliegenden Erfindung - gemäß einem **sechsten** Aspekt der vorliegenden Erfindung - ein Filter, welches den zuvor angeführten adsorptiven Formkörper nach der Erfindung enthält.

In Ergänzung zu den vorgenannten partikulären Adsorptionsmaterialien kann das erfindungsgemäße adsorptive System im allgemeinen zudem noch faserartige Strukturen bzw. Fasern als solche aufweisen, wobei die entsprechenden Fasern gleichermaßen insbesondere auf der Oberfläche des Bindemittelträgers fixiert sein können. Durch die zusätzliche Ausrüstung des erfindungsgemäßen adsorptiven Systems mit Fasern kann zum einen eine zusätzliche Partikel- bzw. Aerosolfiltereigenschaft bereitgestellt werden. Zudem können die Fasern im Sinne von Abstandshaltern zur Beabstandung der erfindungsgemäßen Systeme beispielsweise im Rahmen einer losen Schüttung fungieren, um auf diese Weise das Durchströmverhalten zu verbessern, insbesondere einhergehend mit einem verminderte Druckverlust. In diesem Zusammenhang können dem Fachmann an sich bekannte Fasertypen eingesetzt werden, wie beispielsweise Naturfasern und/oder synthetische Fasern. Diesbezüglich können die Fasern beispielsweise Faserlängen von 0,1 bis 100 mm und/oder Faserdurchmesser von 100 nm bis 1 mm aufweisen.

Weitere vorteilhafte Eigenschaften, Aspekte und Merkmale der vorliegenden Erfindung ergeben sich aus der folgenden Beschreibung von in den Figuren dargestellten Ausführungsbeispielen. Es zeigen:
- Fig. 1A: eine schematische Querschnittsdarstellung eines erfindungsgemäßen adsorptiven Systems mit an einem Bindemittelträger fixierten Adsorbentien in Form eines ersten partikulären Adsorptionsmaterials (A) und eines zweiten partikulären Adsorptionsmaterials (B);
- Fig. 1B: eine schematische Draufsicht eines erfindungsgemäßen adsorptiven Systems mit auf einen Bindemittelträger aufgebrachten Adsorbentien in Form eines ersten partikulären Adsorptionsmaterials (A) und eines zweiten partikulären Adsorptionsmaterials (B);
- Fig. 1C: eine vergrößerte fotographische Darstellung eines erfindungsgemäßen adsorptiven Systems mit fixierten Adsorbentien in Form eines ersten partikulären Adsorptionsmaterials (A) und eines zweiten partikulären Adsorptionsmaterials (B);
- Fig. 1D: eine vergrößerte fotographische Darstellung eines weiteren adsorptiven Systems nach der Erfindung mit einem aufgebrachten ersten partikulären Adsorptionsmaterial (A) und einem zweiten partikulären Adsorptionsmaterial (B);
- Fig. 1E: eine vergrößerte fotographische Darstellung einer Vielzahl von erfindungsgemäßen adsorptiven Systemen, wobei die einzelnen adsorptiven Systeme nach der Erfindung jeweils ein erstes partikuläres Adsorptionsmaterial (A) sowie ein zweites partikuläres Adsorptionsmaterial (B) aufweisen;
- Fig. 2A: eine schematische Querschnittdarstellung eines adsorptiven Systems Z (Vergleich), wobei das adsorptive System ein erstes partikuläres Adsorptionsmaterial (A') und ein zweites partikuläres Adsorptionsmaterial (B'), welche jeweils an einem Bindemittelträger befestigt sind, aufweist;
- Fig. 2B: eine schematische Draufsicht eines adsorptiven Systems (Vergleich) mit einem ersten partikulären Adsorptionsmaterial (A') und einem zweiten partikulären Adsorptionsmaterial (B');
- Fig. 3A: eine Schemadarstellung des erfindungsgemäßen Verfahrens gemäß einer ersten Ausführungsform der vorliegenden Erfindung zur Herstellung der erfindungsgemäßen adsorptiven Systeme;
- Fig. 3B: eine Schemadarstellung eines Verfahrens zur Herstellung von adsorptiven Systemen (Vergleich).

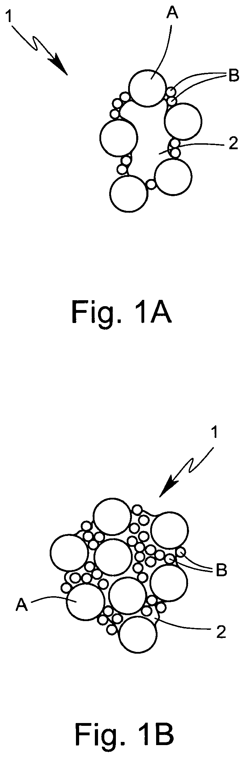

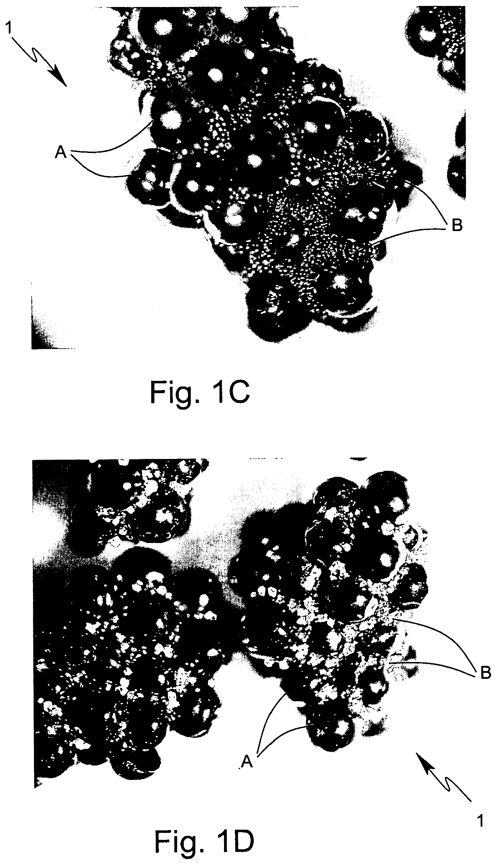

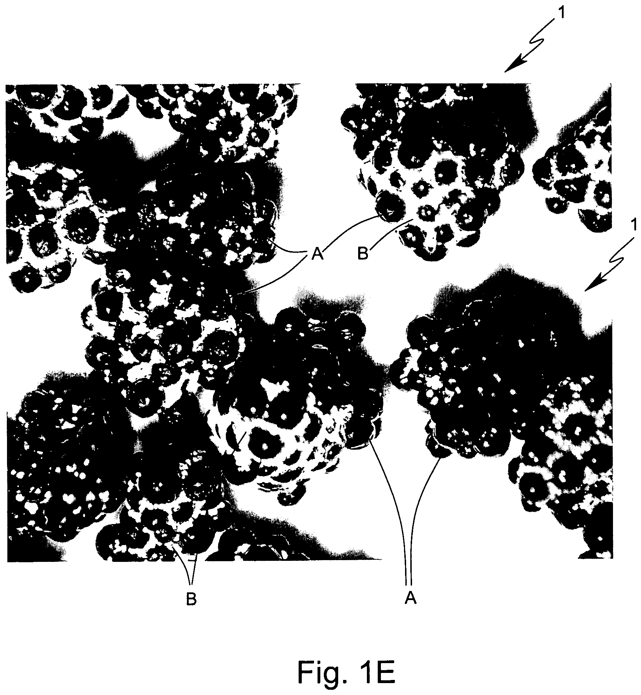

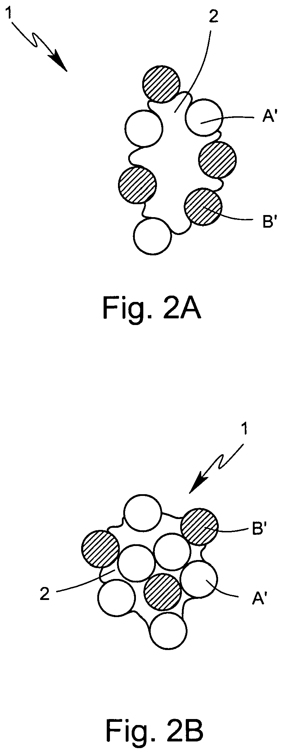

Fig. 1A bis 1E beziehen sich auf die erfindungsgemäß bevorzugte Ausführungsform, wonach die eingesetzten partikulären Adsorptionsmaterialien (A) und (B) zumindest voneinander verschiedene Teilchengrößen aufweisen. Fig. 2A und Fig. 2B beziehen sich einen Vergleich, wonach die eingesetzten partikulären Adsorptionsmaterialien zumindest im wesentlichen gleiche Teilchengrößen bzw. Teilchendurchmesser aufweisen, wobei sich die eingesetzten partikulären Adsorptionsmaterialien in mindestens einem physikalischen und/oder chemischen Parameter, wie zuvor definiert, voneinander unterscheiden.

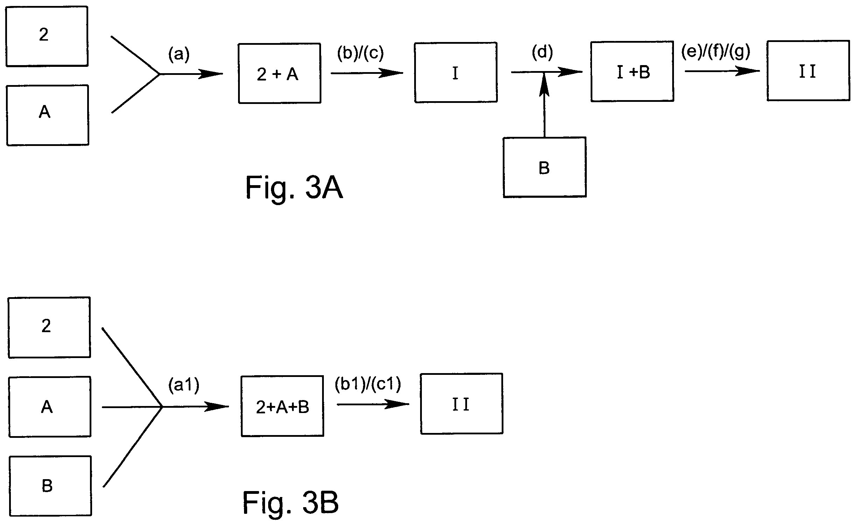

Fig. 3A schematisiert den Ablauf des erfindungsgemäßen Verfahrens zur Herstellung der adsorptiven Struktur (1) nach der Erfindung gemäß einer ersten Ausführungsform, wonach zunächst gemäß Schritt c) ein erstes partikuläres Adsorptionsmaterial (A) einerseits und ein Bindemittelträger 2 miteinander in Kontakt gebracht bzw. vermischt werden. Diesbezüglich kann das partikuläre Adsorptionsmaterial (A) als Basisadsorber mit definierten Eigenschaften eingesetzt werden. Der Bindemittelträger 2 sollte hinsichtlich seiner Partikelgröße an die Partikelgröße des verwendeten partikulären Adsorptionsmaterials (A) bzw. Basisadsorbers angepaßt werden, insbesondere wie zuvor definiert. Nach bzw. bei Inkontaktbringen der Komponenten erfolgt eine Erwärmung der resultierenden Mischung auf Temperaturen oberhalb der Schmelz- bzw. Erweichungstemperatur des Bindemittelträgers gemäß Schritt b), wobei die thermische Behandlung in Abhängigkeit von den diesbezüglichen Eigenschaften des eingesetzten Bindemittelträgers bzw. Klebers durchgeführt werden sollte. Durch den Eintrag von Energie im Sinne einer mechanischen Behandlung wird sozusagen der Kontakt zwischen Bindemittelträger einerseits und dem ersten partikulären Adsorptionsmaterial (A) andererseits hergestellt und die adsorptiven Partikel auf dem Bindemittelträger 2 fixiert bzw. zum Haften gebracht. Anschließend kann gemäß Schritt c) eine Abkühlung der resultierenden Zwischenprodukte in Form von Agglomeraten mit dem ersten partikulären Adsorptionsmaterial (A) zum Erhalt der Zwischenprodukte bzw. Agglomerate (I) erfolgen. In einem weiterführenden Schritt wird den Agglomeraten I gemäß Schritt d) das zweite partikuläre Adsorptionsmaterial (B) zugegeben. Gegebenenfalls erfolgt anschließend gemäß Schritt e) eine erneute Erwärmung; die Temperatur kann aber auch aufrechterhalten werden. Es erfolgt somit eine weitere thermische Behandlung, welche gleichermaßen in Abhängigkeit vom eingesetzten Bindemittelträger bzw. Kleber ausgeführt wird. Gemäß Schritt f) erfolgt nun ein weiterer Energieeintrag in Form einer mechanischen Behandlung, wobei der Kontakt zwischen dem zweiten partikulären Adsorptionsmaterial (B) und den ersten Agglomeraten I hergestellt wird und das zweite partikuläre Adsorptionssystem (B) auf den freien Stellen des Bindemittelträgers 2 fixiert bzw. zum Haften gebracht wird. Anschließend erfolgt gemäß Schritt g) eine Abkühlung zum Erhalt der erfindungsgemäßen adsorptiven Systeme 1 in Form von Kompositadsorbern (Adsorberagglomerate II).

Gemäß dem Schema nach Fig. 3B können adsorptive Systeme 1 nach einem Verfahren (Vergleich) hergestellt werden, wonach in einem ersten Schritt a1) sowohl das erste partikuläre Adsorptionsmaterial (A) als auch das zweite partikuläre Adsorptionsmaterial (B) einerseits und der Bindemittelträger 2 andererseits in partikulärer Form miteinander in Kontakt gebracht und vermischt werden. Nachfolgend oder während der Vermischung erfolgt gemäß Schritt b1) eine Temperaturbehandlung wobei die partikulären Adsorptionsmaterialien (A) und (B) insbesondere durch Energieeintrag auf den Teilchen des Bindemittelträgers 2 zum Haften gebracht werden. Anschließend erfolgt gemäß Schritt c1) eine Abkühlung zum Erhalt von adsorptiven Systemen in Form von Kompositagglomeraten II.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

Nachfolgend wird die Herstellung adsorptiver Systeme nach der Erfindung auf Basis von Agglomeraten unter Verwendung eines ersten partikulären Adsorptionsmaterials (A) und eines zweiten partikulären Adsorptionsmaterials (B) sowie der Herstellung von Vergleichssystemen beschrieben.

### 1. Erfindungsgemäße Agglomerate (A1)

Bei der Herstellung der erfindungsgemäßen adsorptiven Systeme bzw. Agglomerate A1 wird derart vorgegangen, daß zunächst Basispartikel bzw. das erste partikuläre Adsorptionsmaterial (A) in Form von Aktivkohle bereitgestellt wird. Dabei basiert das erste partikuläre Adsorptionsmaterial in Form von Aktivkohle auf einem polymeren Rohstoff, welcher einer Carbonisierung unterzogen wird. Das erste partikuläre Adsorptionsmaterial (A) weist ein Gesamtporenvolumen V₍ₜₒₜ₎ von 0,63 cm³/g sowie eine spezifische Oberfläche A_{(BET)} von 1.350 m²/g auf. Zudem weist das erste partikuläre Adsorptionsmaterial (A) eine polydisperse Partikelgrößenverteilung mit d_{(Partikel)} = 0,45 bis 0,71 mm auf. Ein derartiges partikuläres Adsorptionsmaterial (A) in Form von Aktivkohle kann beispielsweise von der Blücher GmbH, Erkrath, Deutschland, oder von der Adsor-Tech GmbH, Premnitz, Deutschland, erhalten werden.

In bezug auf den Bindemittelträger werden thermoplastische Schmelzklebstoffpartikel, mit Korngrößen im Bereich von 200 bis 1.000 µm in einem gewichtsbezogenen Klebereinsatzverhältnis (Bindemittelträger/Basispartikel-Verhältnis) von 1 : 7 verwendet. Der Schmelzklebstoff kann beispielsweise vom Typ 9EP sein, erhältlich von der EMS-Chemie AG, EMS-GRILLTECH, Schweiz.

Das partikuläre Adsorptionsmaterial (A) einerseits und die Bindemittelträger andererseits werden miteinander in Kontakt gebracht und in einem Drehrohr gemischt, wobei eine Erwärmung auf eine Zieltemperatur von T = 175 °C mit einem Gradienten zum Erreichen der Zieltemperatur von dT/dt = 2 °C/min durchgeführt wird. Die Haltezeit nach Erreichen der Zieltemperatur beträgt t = 30 min. Die Drehgeschwindigkeit des Drehrohrreaktors beträgt n = 5 U/min. Es erfolgt eine Agglomeratsiebung mit d_{(Agglomerat)} auf 1,25 bis 2,5 mm.

In einem weiteren Schritt werden die erfindungsgemäßen adsorptiven Systeme bzw. Kompositadsorber aus den zuvor erhaltenen Basisagglomeraten unter erneuter Erwärmung und Zugabe des zweiten partikulären Adsorptionsmaterials (B) erhalten. Das zweite partikuläre Adsorptionsmaterial (B) basiert dabei auf einem partikulären MOF-Material (Cu₃(BTC)₂). Das zweite partikuläre Adsorptionsmaterial (B) weist ein Gesamtvolumen V₍ₜₒₜ₎ von 0,58 cm³/g und eine spezifische Oberfläche A_{(BET)} von 1.427 m²/g auf. Die Partikelgrößenverteilung des zweiten partikulären Adsorptionsmaterials ist polydispers mit d_{(Partikel)} < 0,071 mm.

Das zweite partikuläre Adsorptionsmaterial (B) wird mit den Basisagglomeraten in Kontakt gebracht und gemischt, wobei die Mischung auf eine Zieltemperatur von T = 175 °C mit einem Gradienten zum Erreichen der Zieltemperatur von dT/dt = 2 °C/min erwärmt wird. Die Haltezeiten nach Erreichen der Zieltemperatur beträgt t = 30 min. Nach Abkühlen erfolgt eine Absiebung der Kompositadsorber mit d_{(Kompositadsorber)} von 1,25 bis 2,5 mm. Es resultieren somit erfindungsgemäße adsorptive Systeme A1 auf Basis eines ersten partikulären Adsorptionsmaterials (A) in Form von Aktivkohle einerseits und einem zweiten partikulären Adsorptionsmaterials (B) in Form eines MOF-Materials, wobei das zweite partikuläre Adsorptionsmaterial (B) kleinere Partikelgrößen aufweist als das erste partikuläre Adsorptionsmaterial (A).

### 2. Erfindungsgemäße Agglomerate (A2)

Zur Herstellung der zweiten erfindungsgemäßen adsorptiven Systeme bzw. Kompositagglomerate A2 wird, wie oben zu 1.) beschrieben, verfahren, wobei diesbezüglich auch ein erstes partikuläres Adsorptionsmaterial (A) in Form von Aktivkohle, wie unter 1.) beschrieben, eingesetzt wird. Als zweites partikuläres Adsorptionsmaterial (B) wird eine kugelförmige Aktivkohle, welche aus einem polymeren Rohstoff gewonnen wird, in Form kleiner Kügelchen bzw. sogenannter *Minibeads* mit einem Gesamtporenvolumen V₍ₜₒₜ₎ von 0,97 cm³/g und einer spezifischen Oberfläche A_{(BET)} von 1.613 m²/g eingesetzt. Das zweite partikuläre Adsorptionsmaterial (B) weist eine polydisperse Partikelgrößenverteilung mit d_{(Partikel)} < 0,15 mm auf. Es resultieren somit erfindungsgemäße adsorptive Systeme bzw. Kompositagglomerate A2, welche partikuläre Adsorptionsmaterialien (A) und (B) in Form von Aktivkohle mit voneinander verschiedenen Teilchengrößen, Gesamtporenvolumina und BET-Oberflächen enthalten.

### 3. Adsorptive Agglomerate (B1) (Vergleich)

Als Vergleich bzw. als nichterfindungsgemäßes Beispiel werden Agglomerate B1 hergestellt, welche lediglich ein einheitliches partikuläres Adsorptionsmaterial aufweisen. Diesbezüglich wird derart verfahren, daß zum Erhalt der nichterfindungsgemäßen Agglomerate (B1) ein partikuläres Adsorptionsmaterial (A) auf einem Bindemittelträger aufgebracht wird, wobei das partikuläre Adsorptionsmaterial (A) sowie der Bindemittelträger den zuvor in den erfindungsgemäßen Beispielen definierten Materialien entsprechen. Es resultieren nach Fixierung der Adsorberpartikel auf den Bindemittelträger nichterfindungsgemäße Agglomerate (B1).

### 4. Adsorptionspartikel (B2) (Vergleich):

Als weiteres Vergleichsbeispiel fungiert ein partikuläres Adsorptionsmaterials als solches, welches in Form einer losen Schüttung der jeweiligen Adsorberpartikel vorliegt. Die Adsorber B2 weisen eine Größe von etwa 0,3 bis etwa 0,6 mm auf.

### 5. Untersuchungen zum Druckverlust und zum Durchbruchsverhalten der Zusammensetzungen

a) In einem ersten Versuchsabschnitt wird der Druckverlust für den erfindungsgemäßen Kombiabsorber A1 sowie für einen weiteren erfindungsgemäßen Kombiadsorber A1a bestimmt, wobei die Agglomerate in Form von Schüttbetten eingesetzt werden. Der Kombiabsorber A1a nach der Erfindung entspricht dem erfindungsgemäßen Kombiadsorber A1 mit der Maßgabe, daß in bezug auf den Kombiadsorber A1a Teilchengrößen für die Agglomerate im Bereich von d_{(Partikel)} von 0,8 bis 1,25 mm vorliegen.

Die Messung des Druckverlustes führt zu den nachfolgend in Tabelle 1 angegebenen Werten:

Die folgende Tabelle stellt die Ergebnisse auf Basis von Durchbruchskurven dar.

**Tabelle 1: Druckverlustmessungen an verschiedenen adsorptiven Strukturen**

| Probe | | Agglomerat (A1) | Agglomerat (A1a) | Adsorber (B2) |
|---|---|---|---|---|
| Größe d_{(Partikel)} | | 1,25 bis 2,5 mm | 0,8 bis 1,25 mm | 0,3 bis 0,6 mm |
| Druckverlust | Pa/cm bei 0,1 m/s | 11 | 23 | 131 |

Die vorstehenden Ergebnisse zeigen, daß für die nichterfindungsgemäßen Adsorber B2 in Form einer losen Schüttung der höchste Druckverlust vorliegt, während im Hinblick auf die erfindungsgemäßen Kombiadsorber A1 und A1a geringere Druckverluste zu beobachten sind, wobei der Druckverlust mit zunehmender Agglomeratgröße weiter abnimmt.
b) In einem zweiten Versuch wird das Durchbruchsverhalten der erfindungsgemäßen Kombiadsorber A1 bzw. A2 im Vergleich zu den nichterfindungsgemäßen Agglomeraten B1 ermittelt.

In einer ersten Testreihe wird das Durchbruchsverhalten in bezug auf NH₃ untersucht. In diesem Zusammenhang gelten die folgenden Versuchsparameter:
- c (in, NH₃) = 1.000 ppm
- Durchbruchswert bzw. -kriterium (NH₃) = 25 ppm
- v (in) = 10 cm/s
- relative Feuchte (RH) = 70 %
- Temperatur T = 23 °C
- Probenhöhe h = 20 mm; Probendurchmesser d_{Probe} = 50 mm

**Tabelle 2: Meßergebnisse des Durchbruchsverhaltens**

| | Fraktion | Druckverlust | Durchbruchszeit NH₃ |
|---|---|---|---|
| | [mm] | [Pa/cm] bei 0,2 m/s | [min] |
| Kombiadsorber (A1) (mit MOFs) | 1,25 bis 2,5 | 32 | 6 |
| Adsorber (B1) | 1,25 bis 2,5 | 32 | 0,5 |

Weiterhin wurde das Durchbruchsverhalten des erfindungsgemäßen Kombiabsorbers A1 im Vergleich zu dem nichterfindungsgemäßen Adsorber B 1 in bezug auf C₇H₈ untersucht.

Hierzu wurden die folgenden Meßbedingungen eingestellt:
- C (in, C₇H₈) = 1.000 ppm
- Durchbruchswert bzw. -kriterium (C₇H₈) = 25 ppm
- v (in) = 10 cm/s
- relative Feuchtigkeit RH = 70 %
- Temperatur T = 23 °C
- Probenhöhe h = 20 mm; Probendurchmesser d_{Probe} = 50 mm

Die Meßergebnisse werden nachfolgend in Tabelle 3 zusammengefaßt.

**Tabelle 3: Durchbruchskurven C₇H₈**

| | Fraktion | Druckverlust | Durchbruchszeit C₇H₈ |
|---|---|---|---|
| | [mm] | [Pa/cm] bei 0,2 m/s | [min] |
| Kombiadsorber (A2) | 1,25 bis 2,5 | 32 | 155 |
| Kombiadsorber (B1) | 1,25 bis 2,5 | 32 | 146 |

Die oben angeführten Ergebnisse hinsichtlich des Durchbruchsverhaltens zeigen die signifikante Verbesserung der Adsorptionseigenschaften der erfindungsgemäßen Kompositadsorber im Vergleich zu Agglomeraten des Standes der Technik.

Im Ergebnis weisen die erfindungsgemäßen adsorptiven Systeme im Vergleich zum Stand der Technik deutlich verbesserte Eigenschaften hinsichtlich des Durchströmverhaltens und hinsichtlich der Adsorptionseigenschaften in bezug auf toxische Substanzen auf.

## Patentansprüche

1. Verfahren zur Herstellung von adsorptiven Systemen auf Basis eines Agglomerates, mit einer Vielzahl von Adsorberpartikeln,
wobei die Adsorberpartikel auf einem Bindemittelträger (2) fixiert und über den Bindemittelträger (2) zu dem adsorptiven System (1) auf Basis des Agglomerats verbunden sind, wobei der Bindemittelträger (2) mindestens einen Kern des jeweiligen adsorptiven Systems (1) bildet und wobei die jeweiligen Teilchen und/oder Partikel des ersten partikulären Adsorptionsmaterials (A) und des zweiten partikulären Adsorptionsmaterials (B) eines einzelnen adsorptiven Systems (1) jeweils an mindestens einen Kern in Form des Bindemittelträgers (2) angeordnet und/oder angelagert sind, und wobei die Adsorberpartikel ein erstes partikuläres Adsorptionsmaterial (A) und ein von dem ersten partikulären Adsorptionsmaterial (A) verschiedenes, zweites partikuläres Adsorptionsmaterial (B) aufweisen, wobei das erste partikuläre Adsorptionsmaterial (A) und das zweite partikuläre Adsorptionsmaterial (B) voneinander verschiedene Teilchendurchmesser aufweisen, wobei das erste partikuläre Adsorptionsmaterial (A) einen größeren mittleren Teilchendurchmesser D50 als das zweite partikuläre Adsorptionsmaterial (B) aufweist und wobei das Verhältnis des mittleren Teilchendurchmessers D50 des ersten partikulären Adsorptionsmaterials (A) zu dem mittleren Teilchendurchmesser D50 des zweiten partikulären Adsorptionsmaterials (B) mindestens 5 : 1 beträgt,
a) wobei zunächst das erste partikuläre Adsorptionsmaterial (A) einerseits und Partikel des Bindemittelträgers (2) andererseits miteinander in Kontakt gebracht und/oder vermischt werden,
b) wobei die resultierende Mischung nachfolgend auf Temperaturen oberhalb der Schmelz- oder Erweichungstemperatur des Bindemittelträgers (2) erwärmt wird und das erste partikuläre Adsorptionsmaterial (A) auf dem Bindemittelträger (2) zum Haften gebracht und/oder auf dem Bindemittelträger (2) fixiert wird und auf diese Weise Zwischenprodukte, welche das erste partikuläre Adsorptionsmaterial (A) und den Bindemittelträger (2) aufweisen, erhalten werden,
c) wobei gegebenenfalls anschließend die resultierenden Zwischenprodukte auf Temperaturen unterhalb der Schmelz- oder Erweichungstemperatur des Bindemittels des Bindemittelträgers (2) abgekühlt werden,
d) wobei anschließend das zweite partikuläre Adsorptionsmaterial (B) zu den Zwischenprodukten gegeben wird und/oder mit den Zwischenprodukten in Kontakt gebracht und/oder vermischt wird,
e) wobei gegebenenfalls die resultierende Mischung nachfolgend erneut auf Temperaturen oberhalb der Schmelz- oder Erweichungstemperatur des Bindemittels des Bindemittelträgers (2) erwärmt wird,
f) wobei das zweite partikuläre Adsorptionsmaterial (B) auf dem Bindemittelträger (2) zum Haften gebracht und/oder auf dem Bindemittelträger (2) fixiert wird und auf diese Weise Produkte, welche das erste partikuläre Adsorptionsmaterial (A), das zweiten partikuläre Adsorptionsmaterial (B) und den Bindemittelträger (2) aufweisen, erhalten werden, und
g) wobei schließlich die resultierenden Produkte auf Temperaturen unterhalb der Schmelz- oder Erweichungstemperatur des Bindemittels des Bindemittelträgers (2) zum Erhalt der diskreten adsorptiven Systeme (1) abgekühlt werden.

2. Verfahren nach Anspruch 1, wobei die in Schritt g) resultierenden adsorptiven Systeme (1) in einem nachfolgenden Schritt h) zu einem Formkörper verarbeitet werden, insbesondere unter Verpressen, insbesondere wobei die Verarbeitung zu Formkörpern unter Erwärmen, vorzugsweise auf Temperaturen unterhalb der Schmelz- oder Erweichungstemperatur des Bindemittelträgers (2), erfolgt.

3. Adsorptives System (1) auf Basis eines Agglomerats mit einer Vielzahl von Adsorberpartikeln, wobei das adsorptive System (1) erhältlich ist durch ein Verfahren nach Anspruch 1 oder 2.

4. Adsorptives System nach Anspruch 3, wobei die Teilchen und/oder Partikel des ersten partikulären Adsorptionsmaterials (A) auf dem Bindemittelträger (2) fixiert und über den Bindemittelträger (2) zu dem adsorptiven System (1) verbunden sind, wobei zwischen den Teilchen und/oder Partikeln des ersten partikulären Adsorptionsmaterials (A) verbleibende freie Bereiche des Bindemittelträgers (2) mit Teilchen und/oder Partikeln des zweiten partikulären Adsorptionsmaterials (B) beaufschlagt sind.

5. Adsorptives System nach einem der Anspruch 3 oder 4,
wobei der mittlere Teilchendurchmesser D50 des ersten partikulären Adsorptionsmaterials (A) um mindestens einen Faktor 10 größer ist als der mittlere Teilchendurchmesser D50 des zweiten partikulären Adsorptionsmaterials (B) oder wobei das Verhältnis des mittleren Teilchendurchmessers D50 des ersten partikulären Adsorptionsmaterials (A) zu dem mittleren Teilchendurchmesser D50 des zweiten partikulären Adsorptionsmaterials (B) mindestens 10:1 beträgt oder wobei das Verhältnis des mittleren Teilchendurchmessers D50 des ersten partikulären Adsorptionsmaterials (A) zu dem mittleren Teilchendurchmesser D50 des zweiten partikulären Adsorptionsmaterials (B) im Bereich von 5 : 1 bis 200 : 1, insbesondere 5 : 1 bis 100 : 1, vorzugsweise 5 : 1 bis 75 : 1, bevorzugt 5 : 1 bis 50 : 1, besonders bevorzugt 5 : 1 bis 30 : 1, ganz besonders bevorzugt 5 : 1 bis 15 : 1, liegt.

6. Adsorptives System nach einem der Ansprüche 3 bis 5, wobei das erste partikuläre Adsorptionsmaterial (A) einen mittleren Teilchendurchmesser D50 von mindestens 0,02 mm, insbesondere mindestens 0,08 mm, vorzugsweise mindestens 0,1 mm, bevorzugt mindestens 0,3 mm, besonders bevorzugt mindestens 0,5 mm, aufweist und/oder wobei das erste partikuläre Adsorptionsmaterial (A) einen mittleren Teilchendurchmesser D50 im Bereich von 0,05 bis 4 mm, insbesondere 0,1 bis 2 mm, vorzugsweise 0,15 bis 1,5 mm, bevorzugt 0,3 bis 1,2 mm, besonders bevorzugt 0,5 bis 1 mm, aufweist und/oder wobei das zweite partikuläre Adsorptionsmaterial (B) einen mittleren Teilchendurchmesser D50 von höchstens 1,8 mm, insbesondere höchstens 0,8 mm, vorzugsweise höchstens 0,4 mm, bevorzugt höchstens 0,2 mm, besonders bevorzugt höchstens 0,1 mm, aufweist und/oder wobei das zweite partikuläre Adsorptionsmaterial (B) einen mittleren Teilchendurchmesser D50 im Bereich von 0,005 bis 1,5 mm, insbesondere 0,01 bis 1,2 mm, vorzugsweise 0,02 bis 1 mm, bevorzugt 0,06 bis 0,6 mm, besonders bevorzugt 0,15 bis 0,4 mm, aufweist.

7. Adsorptives System nach einem der Ansprüche 3 bis 6, wobei das partikelbildende Material des ersten partikulären Adsorptionsmaterial (A) und/oder des zweiten partikulären Adsorptionsmaterials (B), unabhängig voneinander, ausgewählt ist aus der Gruppe von
(i) Aktivkohle, insbesondere kornförmiger Aktivkohle, vorzugsweise kugelförmiger Aktivkohle und/oder insbesondere geformter und/oder extrudierter Aktivkohle und/oder pulverförmiger Aktivkohle;
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) lonenaustauscherharzen, insbesondere polydispersen und/oder monodispersen Kationen- und/oder Anionenaustauscher, insbesondere vom Geltyp und/oder makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren und/oder metallorganischen Gerüstmaterialien, insbesondere MOFs *(Metall Organic Framework),* COFs *(C1ovalent Organic Framework),* ZIFs (*Zeolithe Imidazolate Framework),* POMs *(Polymer Organic Material* und/oder OFCs;
(viii) mineralischen Granulaten;
(ix) Klathraten; sowie
(x) deren Mischungen und/oder Kombinationen; oder
wobei das partikelbildende Material des ersten partikulären Adsorptionsmaterial (A) und/oder das partikelbildende Material des zweiten partikulären Adsorptionsmaterials (B), unabhängig voneinander, aus Aktivkohle, insbesondere aus kornförmiger, vorzugsweise kugelförmiger Aktivkohle gebildet ist.

8. Adsorptives System nach einem der Ansprüche 3 bis 7, wobei das erste partikuläre Adsorptionsmaterial (A) und das zweite partikuläre Adsorptionsmaterial (B) jeweils identische partikelbildende Materialien, wie in Anspruch 7 definiert, aufweisen oder hieraus bestehen, insbesondere mit der Maßgabe, dass sich im übrigen das erste partikuläre Adsorptionsmaterial (A) und das zweite partikuläre Adsorptionsmaterials (B) in mindestens einem physikalischen und/oder chemischen Parameter unterscheiden,
wobei der physikalische und/oder chemische Parameter ausgewählt ist aus der Gruppe von (i) spezifischer Oberfläche, insbesondere BET-Oberfläche; (ii) Porenvolumen, insbesondere Adsorptionsvolumen und/oder Gesamtporenvolumen; (iii) Porosität und/oder Porenverteilung, insbesondere Mikroporenvolumenanteil am Gesamtporenvolumen und/oder mittlerem Porendurchmesser; (iv) Imprägnierung und/oder katalytischer Ausrüstung sowie (v) Teilchenform, insbesondere wobei das erste partikuläre Adsorptionsmaterial (A) und das zweite partikuläre Adsorptionsmaterial (B) aus Aktivkohle bestehen und wobei das erste partikuläre Adsorptionsmaterial (A) und das zweite partikuläre Adsorptionsmaterial (B) unterschiedliche Porenverteilungen, insbesondere unterschiedliche Mikroporenvolumenanteile am Gesamtporenvolumen und/oder mittlerem Porendurchmesser, aufweisen.

9. Adsorptives System nach einem der Ansprüche 3 bis 7, wobei das erste partikuläre Adsorptionsmaterial (A) und das zweite partikuläre Adsorptionsmaterial (B) voneinander verschiedene partikelbildende Materialien, wie in Anspruch 7 definiert, aufweisen oder hieraus bestehen, insbesondere wobei das erste partikuläre Adsorptionsmaterial (A) und das zweite partikuläre Adsorptionsmaterial (B) sich in mindestens einem weiteren physikalischen und/oder chemischen Parameter unterscheiden, wobei der physikalische und/oder chemische Parameter ausgewählt ist aus der Gruppe von (i) spezifischer Oberfläche, insbesondere BET-Oberfläche; (ii) Porenvolumen, insbesondere Adsorptionsvolumen und/oder Gesamtporenvolumen; (iii) Porosität und/oder Porenverteilung, insbesondere Mikroporenvolumenanteil am Gesamtporenvolumen und/oder mittlerem Porendurchmesser; (iv) Imprägnierung und/oder katalytischer Ausrüstung sowie (v) Teilchenform.

10. Adsorptives System nach einem der Ansprüche 3 bis 9, wobei die einzelnen Agglomerate jeweils einen oder mehrere Kerne in Form des Bindemittelträgers (2) umfassen und/oder
wobei der Bindemittelträger (2) und/oder der Kern in Form des Bindemittelträgers (2) eine Größe von 100 bis 2.000 µm, insbesondere 150 bis 1.500 µm, vorzugsweise 200 bis 1.000 µm, besitzt und/oder wobei das Größenverhältnis von Bindemittelträger (2) und/oder Kern in Form des Bindemittelträgers (2) zu einzelnem Adsorberpartikel mindestens 1 : 1, insbesondere mindestens 1,25 : 1, vorzugsweise mindestens 1,5 : 1, besonders bevorzugt mindestens 2 : 1, ganz besonders bevorzugt mindestens 3 : 1, beträgt und/oder
wobei das adsorptive System (1) mindestens 5 Adsorberpartikel (A) und/oder (B), insbesondere mindestens 10 Adsorberpartikel (A) und/oder (B), vorzugsweise mindestens 15 Adsorberpartikel (A) und/oder (B), besonders bevorzugt mindestens 20 Adsorberpartikel (A) und/oder (B), umfasst und/oder wobei das adsorptive System (1) und/oder die einzelnen Agglomerate jeweils bis zu 50 Adsorberpartikel (A) und/oder (B), insbesondere bis zu 75 Adsorberpartikel (A) und/oder (B), vorzugsweise bis zu 100 Adsorberpartikel (A) und/oder (B) oder mehr, umfassen und/oder
wobei das adsorptive System (1) das erste partikuläre Adsorptionsmaterial (A) und das zweite partikuläre Adsorptionsmaterial (B) in einem Gewichtsverhältnis von erstem partikulären Adsorptionsmaterial (A) zu zweitem partikulären Adsorptionsmaterial (B) von mindestens 1 : 1, insbesondere mindestens 1,2: 1, vorzugsweise mindestens 1,5: 1, besonders bevorzugt mindestens 2 : 1, aufweist und/oder
wobei das adsorptive System (1) teilchenförmig ausgebildet ist, insbesondere wobei das adsorptive System (1) mittleren Teilchendurchmesser D50 im Bereich von 0,01 bis 20 mm, insbesondere 0,05 bis 15 mm, vorzugsweise 0,1 bis 10 mm, besonders bevorzugt 0,2 bis 7,5 mm, ganz besonders bevorzugt 0,5 bis 5 mm, aufweist.

11. Adsorptives System nach einem der Ansprüche 3 bis 10, wobei das Bindemittel (2) auf Basis eines organischen Polymers ausgebildet ist oder hieraus besteht, insbesondere wobei das organische Polymer thermoplastisch ausgebildet ist und/oder wobei das organische Polymer hitzeklebrig ausgebildet ist und/oder wobei das organische Polymer aus Polymeren aus der Gruppe von Polyestern, Polyamiden, Polyethern, Polyetherestern und/oder Polyurethanen sowie deren Mischungen und Copolymeren ausgewählt ist, insbesondere wobei das organische Polymer, insbesondere das Bindemittel, vorzugsweise der Schmelzklebstoff, bei 25 °C und Atmosphärendruck fest ist und/oder dass das organische Polymer, insbesondere das Bindemittel, vorzugsweise der Schmelzklebstoff, einen Schmelz- oder Erweichungsbereich oberhalb von 100 °C, vorzugsweise oberhalb von 110 °C, insbesondere oberhalb von 120 °C, aufweist und/oder dass das organische Polymer, insbesondere das Bindemittel, vorzugsweise der Schmelzklebstoff, eine Temperaturbeständigkeit von mindestens 100 °C, vorzugsweise mindestens 125 °C, insbesondere mindestens 150 °C, aufweist.

12. Verwendung von adsorptiven Systemen (1), wie in den Ansprüchen 3 bis 11 definiert, mit einer Vielzahl von Adsorberpartikeln für die Adsorption von Giftstoffen, Schadstoffen und Gerüchen, insbesondere aus Gas- oder Luftströmen oder aber aus Flüssigkeiten, insbesondere Wasser, oder
zur Reinigung oder Aufbereitung von Gasen, Gasströmen oder Gasgemischen, insbesondere Luft, oder von Flüssigkeiten, insbesondere Wasser, oder
zur Verwendung in Adsorptionsfiltern und/oder zur Herstellung von Filtern, insbesondere Adsorptionsfiltern, oder
als Sorptionsspeicher für Gase, insbesondere Wasserstoff, oder
zur Herstellung von adsorptiven Formkörpern, insbesondere durch Verpressen

13. Adsorptiver Formkörper, aufgebaut aus einer Vielzahl adsorptiver Systeme (1), wie in den Ansprüchen 3 bis 11 definiert.

14. Filter, umfassend einen adsorptiven Formkörper gemäß Anspruch 13.

## Claims

1. Method for the production of adsorptive systems based on an agglomerate, comprising a plurality of adsorber particles,
wherein the adsorber particles are fixed on a binder carrier (2) and are connected to the adsorptive system (1) based on the agglomerate via the binder carrier (2), wherein the binder carrier (2) forms at least one core of the respective adsorptive system (1), and wherein the respective particle(s) of the first particulate adsorption material (A) and the second particulate adsorption material (B) of a single adsorptive system (1) are arranged and/or deposited on at least one core in the form of the binder carrier (2), and wherein the adsorber particles comprise a first particulate material (A) and a second particulate material (B) being different from the first particulate material (A),
wherein the first particulate adsorption material (A) and the second particulate adsorption material (B) have particle diameters that are different from each other, wherein the first particulate adsorption material (A) has a larger average particle diameter D50 than the second particulate adsorption material (B) and wherein the ratio of the average particle diameter D50 of the first particulate adsorption material (A) and the average particle diameter D50 of the second particulate adsorption material (B) is at least 5: 1,
a) wherein firstly, the first particulate adsorption material (A), on the one hand, and particles of the binder carrier (2), on the other hand, are first brought into contact with one another and/or mixed,
b) wherein the resulting mixture is subsequently heated to temperatures above the melting or softening temperature of the binder carrier (2), and the first particulate adsorption material (A) is brought into contact with the binder carrier (2) for adherence, and/or fixed to the binder carrier (2), and intermediate products comprising the first particulate adsorption material (A) and the binder carrier (2) are obtained in this way,
c) wherein, if necessary, the resulting intermediate products are subsequently cooled to temperatures below the melting or softening temperature of the binding agent of the binder carrier (2)
d) wherein subsequently the second particulate adsorption material (B) is added to the intermediate products and/or is brought into contact with the intermediate products and/or mixed,
e) wherein, if necessary, the resulting mixture is subsequently heated again to temperatures above the melting or softening temperature of the binding agent of the binder carrier (2)
f) wherein the second particulate adsorption material (B) is brought into contact with the binder carrier (2) for adherence and/or fixed to the binder carrier (2), and wherein products comprising the first particulate adsorption material (A), the second particulate adsorption material (B), and the binder carrier (2) are obtained in this way, and
g) wherein, finally, the resulting products are cooled to temperatures below the melting or softening temperature of the binding agent of the binder carrier (2) to obtain the discrete adsorptive systems (1).

2. Method according to claim 1, wherein the adsorptive systems (1) resulting in step (g) are processed in a subsequent step (h) into a shaped body, in particular by compression, in particular wherein the processing to shaped bodies is carried out under heating, preferably at temperatures below the melting point or softening temperature of the binder carrier (2).

3. Adsorptive system (1) based on an agglomerate having a plurality of adsorber particles, wherein the adsorptive system (1) is obtainable by a method according to claim 1 or 2.

4. Adsorptive system according to claim 3, wherein the particle(s) of the first particulate adsorption material (A) are fixed on the binder carrier (2) and are connected to the adsorptive system (1) via the binder carrier (2), and/or particles of the first particulate adsorption material (A) are applied to the remaining free regions of the binder carrier (2) of the second particulate adsorption material (B).

5. Adsorptive system according to one of the claims 3 or 4, wherein the average particle diameter D50 of the first particulate adsorption material (A) is at least 10 fold greater than the average particle diameter D50 of the second particulate adsorption material (B), or wherein the ratio of the average particle diameter D50 of the first particulate adsorption material (A) to the average particle diameter D50 of the second particulate adsorption material (B) is at least 10 : 1, or wherein the ratio of the average particle diameter D50 of the first particulate adsorption material (A) to the average particle diameter D50 of the second particulate adsorption material (B) is in the range of 5 : 1 to 200 : 1, in particular 5 : 1 to 100 : 1, preferably 5 : 1 to 75 : 1, more preferably 5 : 1 to 50 : 1, particularly preferably 5 : 1 to 30 : 1, most preferably 5 : 1 to 15 : 1.

6. Adsorptive system according to one of the claims 3 to 5, wherein the first particulate adsorption material (A) has an average particle diameter D50 of at least 0.02 mm, in particular at least 0.08 mm, preferably at least 0.1 mm, more preferably at least 0.3 mm, particularly preferably 0.5 mm, and/or wherein the first particulate adsorption material (A) has an average particle diameter D50 in the range of 0.05 to 4 mm, in particular 0.1 to 2 mm, preferably 0.15 to 1.5 mm, more preferably 0.3 to 1.2 mm, particularly preferably 0.5 to 1 mm, and/or
wherein the second particulate adsorption material (B) has an average particle diameter D50 of at most 1.8 mm, in particular at most 0.8 mm, preferably at most 0.4 mm, more preferably at most 0.2 mm, particularly preferably at most 0.1 mm, and/or wherein the second particulate adsorption material (B) has an average particle diameter D50 in the range from 0.005 to 1.5 mm, in particular 0.01 to 1.2 mm, preferably 0.02 to 1 mm, more preferably 0.06 to 0.6 mm, particularly preferably 0.15 to 0.4 mm.

7. Adsorptive system according to one of the claims 3 to 6, wherein the particle-forming material of the first particulate adsorption material (A) and/or the second particulate adsorption material (B), independently of one another, is selected from the group consisting of
(i) activated carbon, in particular grain-shaped activated carbon, preferably spherical activated carbon and/or in particular shaped and/or extruded activated carbon and/or powdery activated carbon;
(ii) zeolites, in particular natural and/or synthetic zeolites;
(iii) molecular sieves, in particular zeolitic molecular sieves, synthetic molecular sieves and/or in particular synthetic molecular sieves based on carbon, oxides and/or glasses;
(iv) metal oxide and/or metal particles;
(v) ion exchange resins, in particular polydisperse and/or monodisperse cation and/or anion exchangers, in particular gel-type and/or macroporous type;
(vi) inorganic oxides, in particular silicon dioxides, silica gels and/or aluminum oxides;
(vii) porous organic polymers and/or porous organic-inorganic hybrid polymers and/or organometallic framework materials, in particular MOFs (*Metal Organic Framework),* COFs *(Covalent Organic Framework).* ZIFs (*Zeolite Imidazolate Framework),* POMs (*Polymer Organic Material*) and/or OFCs;
(viii) mineral granules;
(ix) clathrates; as well as
(x) their mixtures and/or combinations; or
wherein the particle-forming material of the first particulate adsorption material (A) and/or the particle-forming material of the second particulate adsorption material (B) are formed independently of one another of activated carbon, in particular of granular, preferably spherical activated carbon.

8. Adsorptive system according to one of the 3 to 7, wherein the first particulate adsorption material (A) and the second particulate adsorption material (B) each comprise or consist of identical particle-forming materials as defined in claim 7, with the proviso that the first particulate adsorption material (A) and the second particulate adsorption material (B) differ in at least one physical and/or chemical parameter, wherein the physical and/or chemical parameter is selected from the group of (i) specific surface, in particular BET surface area; (ii) pore volume, in particular adsorption volume and/or total pore volume; (iii) porosity and/or pore distribution, in particular microporous volume fraction of the total pore volume and/or average pore diameter; (iv) impregnation and/or catalytic equipment as well as (v) particulate form, in particular wherein the first particulate adsorption material (A) and the second particulate adsorption material (B) consist of activated carbon and wherein the first particulate adsorption material (A) and the second particulate adsorption material (B) have different pore distributions, in particular different microporous volume fractions of the total pore volume and/or average pore diameter.

9. Adsorptive system according to one of the claims 3 to 7, wherein the first particulate adsorption material (A) and the second particulate adsorption material (B) independently comprise or form different particle-forming materials as defined in claim 7, in particular wherein the first particulate adsorption material (A) and the second particulate adsorption material (B) differ in at least one further physical and/or chemical parameter, wherein the physical and/or chemical parameter is selected from the group of (i) specific surface area, in particular BET surface area; (ii) pore volume, in particular adsorption volume and/or total pore volume; (iii) porosity and/or pore distribution, in particular microporous volume fraction of the total pore volume and/or average pore diameter; (iv) impregnation and/or catalytic equipment, as well as (v) particulate form.

10. Adsorptive system according to one of the claims 3 to 9, wherein the individual agglomerates each comprise one or more cores in the form of the binder carrier (2) and/or
wherein the binder carrier (2) and/or the core has a size of 100 to 2,000 µm, in particular 150 to 1,500 µm, preferably 200 to 1,000 µm, and/or wherein the form of the binder carrier (2) and/or core is in the size ratio of the binder carrier (2) and/or core of the binder carrier (2) to a single adsorber particle is at least 1 : 1, in particular at least 1.25 : 1, preferably at least 1.5 : 1, particularly preferably at least 2 : 1, most preferably at least 3 : 1, and/or
wherein the adsorptive system (1) comprises 5 adsorber particles (A) and/or (B), in particular at least 10 adsorber particles (A) and/or (B), preferably at least 15 adsorber particles (A) and/or (B), particularly preferably at least 20 adsorber particles (A) and/or (B), and/or wherein the adsorptive system (1) and/or the individual agglomerates respectively comprise up to 50 adsorber particles (A) and/or (B), in particular up to 75 adsorber particles (A) and/or (B), preferably up to 100 adsorber particles (A) and/or (B) or more, and/or
wherein the adsorptive system (1) comprises the first particulate adsorption material (A) and the second particulate adsorption material (B) in a weight ratio of the first particulate adsorption material (A) to the second particulate adsorption material (B) of at least 1 : 1, in particular at least 1.2 : 1, preferably at least 1.5 : 1, particularly preferably at least 2 : 1, and/or
wherein the adsorptive system (1) is particulate, in particular wherein the adsorptive system (1) has an average particle diameter D50 in the range from 0.01 to 20 mm, in particular 0.05 to 15 mm, preferably 0.1 to 10 mm, particularly preferably 0.2 to 7.5 mm, very particularly preferably 0.5 to 5 mm.

11. Adsorptive system according to claims 3 to 10, wherein the binder (2) is based on or consists of an organic polymer, in particular wherein the organic polymer is made of polymers of the group consisting of polyesters, polyamides, polyethers, polyether esters and/or polyurethanes, and mixtures thereof and/or copolymers thereof,
wherein the organic polymer, in particular the binder, preferably the hotmelt adhesive, is solid at 25 °C and atmospheric pressure, and/or the organic polymer, in particular the binder, preferably the hotmelt adhesive, has a melting or softening range above 100 °C., preferably above 110 °C, in particular above 120 °C, and/or wherein the organic polymer, in particular the binder, preferably the hot-melt adhesive, has a temperature resistance of at least 100 °C., preferably at least 125 °C., in particular at least 150 °C.

12. Use of adsorptive systems (1) as defined in claims 3 to 11, with a plurality of adsorber particles for the adsorption of toxins, pollutants and odors, in particular from gas or air streams or else from liquids, in particular water,
or for the purification or treatment of gases, gas streams or gas mixtures, in particular air, or of liquids, in particular water,
or for use in adsorption filters and/or for the production of filters, in particular adsorption filters, or
as sorption storage for gases, in particular hydrogen, or
for the production of adsorptive moldings, in particular by compression.

13. Adsorptive shaped body composed of a plurality of adsorptive systems (1) as defined in claims 3 to 11.

14. Filter comprising an adsorptive shaped body according to claim 13.

## Revendications

1. Procédé de fabrication de systèmes adsorbants à base d'un agglomérat, comprenant un grand nombre de particules d'adsorbant,
dans lequel les particules d'adsorbant sont fixées sur un support de liant (2) et, par l'intermédiaire du support de liant (2), sont reliées au système adsorbant (1) à base de l'agglomérat, le support de liant (2) formant au moins un noyau de chaque système adsorbant (1), et les grains et/ou particules du premier matériau d'adsorption particulaire (A) et du deuxième matériau d'adsorption particulaire (B) d'un système adsorbant unique (1) étant chacun disposés et/ou rapportés contre au moins un noyau sous forme d'un support de liant (2), et les particules d'adsorbant comprenant un premier matériau d'adsorption particulaire (A) et un deuxième matériau d'adsorption particulaire (B), différent du premier matériau d'adsorption particulaire (A), le premier matériau d'adsorption particulaire (A) et le deuxième matériau d'adsorption particulaire (B) présentant des diamètres de particules différents les uns des autres, le premier matériau d'adsorption particulaire (A) présentant un diamètre moyen des particules D50 plus grand que le deuxième matériau d'adsorption particulaire (B), et le rapport entre le diamètre moyen des particules D50 du premier matériau d'adsorption particulaire (A) et le diamètre moyen des particules D50 du deuxième matériau d'adsorption particulaire (B) étant d'au moins 5:1,
a) dans lequel on met d'abord en contact et/ou on mélange l'un avec l'autre d'une part le premier matériau d'adsorption particulaire (A) et d'autre part les particules du support de liant (2),
b) dans lequel le mélange obtenu est ensuite chauffé à des températures supérieures à la température de fusion ou de ramollissement du support de liant (2), et le premier matériau d'adsorption particulaire (A) est mis à adhérer au support de liant (2) et/ou est fixé sur le support de liant (2), et on obtient de cette manière des produits intermédiaires qui comprennent le premier matériau d'adsorption particulaire (A) et le support de liant (2),
c) dans lequel on refroidit ensuite, éventuellement, les produits intermédiaires obtenus, à des températures inférieures à la température de fusion ou de ramollissement du liant du support de liant (2),
d) dans lequel on ajoute ensuite le deuxième matériau d'adsorption particulaire (B) aux produits intermédiaires, et/ou on le met en contact et/ou on le mélange avec les produits intermédiaires,
e) dans lequel, ensuite, on chauffe éventuellement de nouveau le mélange obtenu à des températures supérieures à la température de fusion ou de ramollissement du liant du support de liant (2),
f) dans lequel on met à adhérer sur le support de liant (2) et/ou on fixe sur le support de liant (2) le deuxième matériau d'adsorption particulaire (B), et on obtient de cette manière des produits qui comprennent le premier matériau d'adsorption particulaire (A), le deuxième matériau d'adsorption particulaire (B) et le support de liant (2), et
g) dans lequel finalement les produits obtenus sont refroidis à des températures inférieures à la température de fusion ou de ramollissement du liant du support de liant (2), pour obtenir le système adsorbant discret (1).

2. Procédé selon la revendication 1, dans lequel les systèmes adsorbants (1) obtenus dans l'étape g) sont, dans une étape ultérieure h), mis en oeuvre pour donner un objet façonné, en particulier par compression, en particulier dans lequel la mise en oeuvre conduisant à des objets façonnés est réalisée par chauffage, de préférence à des températures inférieures à la température de fusion ou de ramollissement du support de liant (2).

3. Système adsorbant (1) à base d'un agglomérat, comprenant un grand nombre de particules d'adsorbant, le système adsorbant (1) pouvant être obtenu par un procédé selon la revendication 1 ou 2.

4. Système adsorbant selon la revendication 3, dans lequel les grains et/ou les particules du premier matériau d'adsorption particulaire (A) sont fixés sur le support de liant (2) et sont reliés par l'intermédiaire du support de liant (2) au système adsorbant (1), les domaines libres du support de liant (2), restant entre les particules et/ou les grains du premier matériau d'adsorption particulaire (A), se voyant appliquer des grains et/ou des particules du deuxième matériau d'adsorption particulaire (B).

5. Système adsorbant selon l'une des revendications 3 ou 4,
dans lequel le diamètre moyen des particules D50 du premier matériau d'adsorption particulaire (A) est d'au moins un facteur de 10 supérieur au diamètre moyen des particules D50 du deuxième matériau d'adsorption particulaire (B), ou dans lequel le rapport entre le diamètre moyen des particules D50 du premier matériau d'adsorption particulaire (A) et le diamètre moyen des particules D50 du deuxième matériau d'adsorption particulaire (B) est d'au moins 10:1, ou dans lequel le rapport entre le diamètre moyen des particules D50 du premier matériau d'adsorption particulaire (A) et le diamètre moyen des particules D50 du deuxième matériau d'adsorption particulaire (B) est compris dans la plage de 5:1 à 200:1, en particulier de 5:1 à 100:1, de préférence de 5:1 à 75:1, préférentiellement de 5:1 à 50:1, d'une manière particulièrement préférée de 5:1 à 30:1, d'une manière tout particulièrement préférée de 5:1 à 15:1.

6. Système adsorbant selon l'une des revendications 3 à 5,
dans lequel le premier matériau d'adsorption particulaire (A) présente un diamètre moyen des particules D50 d'au moins 0,02 mm, en particulier d'au moins 0,08 mm, de préférence d'au moins 0,1 mm, préférentiellement d'au moins 0,3 mm, d'une manière particulièrement préférée d'au moins 0,5 mm, et/ou dans lequel le premier matériau d'adsorption particulaire (A) présente un diamètre moyen des particules D50 compris dans la plage de 0,05 à 4 mm, en particulier de 0,1 à 2 mm, de préférence de 0,15 à 1,5 mm, préférentiellement de 0,3 à 1,2 mm, d'une manière particulièrement préférée de 0,5 à 1 mm, et/ou dans lequel le deuxième matériau d'adsorption particulaire (B) présente un diamètre moyen des particules D50 d'au plus 1,8 mm, en particulier d'au plus 0,8 mm, de préférence d'au plus 0,4 mm, préférentiellement d'au plus 0,2 mm, d'une manière particulièrement préférée d'au plus 0,1 mm, et/ou dans lequel le deuxième matériau d'adsorption particulaire (B) présente un diamètre moyen des particules D50 compris dans la plage de 0,005 à 1,5 mm, en particulier de 0,01 à 1,2 mm, de préférence de 0,02 à 1 mm, préférentiellement de 0,06 à 0,6 mm, d'une manière particulièrement préférée de 0,15 à 0,4 mm.

7. Système adsorbant selon l'une des revendications 3 à 6,
dans lequel le matériau formant des particules du premier matériau d'adsorption particulaire (A) et/ou du deuxième matériau d'adsorption particulaire (B) est, indépendamment l'un de l'autre, choisi dans le groupe consistant en :
(i) le charbon actif, en particulier le charbon actif granulaire, de préférence le charbon actif sphérique et/ou le charbon actif en particulier façonné et/ou extrudé et/ou le charbon actif pulvérulent ;
(ii) les zéolites, en particulier les zéolites naturelles et/ou synthétiques ;
(iii) les tamis moléculaires, en particulier les tamis moléculaires zéolitiques, les tamis moléculaires synthétiques et/ou en particulier les tamis moléculaires synthétiques à base de carbone, d'oxydes et/ou de verres ;
(iv) les particules d'oxydes métalliques et/ou de métaux ;
(v) les résines échangeuses d'ions, en particulier les échangeurs de cations et/ou d'anions polydispersés ou monodispersés, en particulier du type gel et/ou du type macroporeux ;
(vi) les oxydes inorganiques, en particulier les dioxydes de silicium, les gels de silice et/ou les oxydes d'aluminium ;
(vii) les polymères organiques poreux et/ou les polymères hybrides organiques-inorganiques poreux et/ou les solides organométalliques poreux, en particulier les MOF (*Metall Organic Framework*)*,* les COF *(Covalent Organic Framework),* les ZIF (*Zeolithe Imidazolate Framework),* les POM *(Polymer Organic Material)* et/ou les OFC ;
(viii) les granulés minéraux ;
(ix) les clathrates ; ainsi que
(x) les mélanges et/ou combinaisons de ceux-ci ; ou
dans lequel le matériau formant des particules du premier matériau d'adsorption particulaire (A) et/ou le matériau formant des particules du deuxième matériau d'adsorption particulaire (B) sont, indépendamment l'un de l'autre, formés de charbon actif, en particulier de charbon actif granulaire, de préférence sphérique.

8. Système adsorbant selon l'une des revendications 3 à 7,
dans lequel le premier matériau d'adsorption particulaire (A) et le deuxième matériau d'adsorption particulaire (B) comprennent chacun des matériaux identiques formant des particules, tels que définis dans la revendication 7, ou en sont constitués, en particulier à la condition que pour le reste le premier matériau d'adsorption particulaire (A) et le deuxième matériau d'adsorption particulaire (B) se distinguent par au moins un paramètre physique et/ou chimique, dans lequel le paramètre physique et/ou chimique est choisi dans le groupe consistant en (i) l'aire spécifique, en particulier l'aire BET ; (ii) le volume des pores, en particulier le volume d'adsorption et/ou le volume total des pores ; (iii) la porosité et/ou la distribution des pores, en particulier la proportion volumique des micropores par rapport au volume total des pores et/ou le diamètre moyen des pores ; (iv) l'imprégnation et/ou l'équipement catalytique, ainsi que (v) la forme des particules, en particulier dans lequel le premier matériau d'adsorption particulaire (A) et le deuxième matériau d'adsorption particulaire (B) sont constitués de charbon actif, et dans lequel le premier matériau d'adsorption particulaire (A) et le deuxième matériau d'adsorption particulaire (B) présentent des distributions des pores différentes, en particulier des proportions volumiques différentes des micropores par rapport au volume total des pores et/ou le diamètre moyen des pores.

9. Système adsorbant selon l'une des revendications 3 à 7,
dans lequel le premier matériau d'adsorption particulaire (A) et le deuxième matériau d'adsorption particulaire (B) comprennent des matériaux différents formant des particules, tels que définis dans la revendication 7, ou en sont constitués, en particulier dans lequel le premier matériau d'adsorption particulaire (A) et le deuxième matériau d'adsorption particulaire (B) se distinguent par au moins un paramètre physique et/ou chimique supplémentaire, le paramètre physique et/ou chimique étant choisi dans le groupe consistant en (i) l'aire spécifique, en particulier l'aire BET ; (ii) le volume des pores, en particulier le volume d'adsorption et/ou le volume total des pores ; (iii) la porosité et/ou la distribution des pores, en particulier la proportion volumique des micropores par rapport au volume total des pores, et/ou le diamètre moyen des pores ; (iv) l'imprégnation et/ou l'équipement catalytique ainsi que (v) la forme des particules.

10. Système adsorbant selon l'une des revendications 3 à 9, dans lequel chacun des agglomérats individuels comprend un ou plusieurs noyaux sous forme du support de liant (2), et/ou
dans lequel le support de liant (2) et/ou le noyau sous forme du support de liant (2) présente une grosseur de 100 à 2000 µm, en particulier de 150 à 1500 µm, de préférence de 200 à 1000 µm, et/ou dans lequel le rapport entre la grosseur du support de liant (2) et/ou du noyau sous forme du support de liant (2) et les particules d'adsorbant individuelles est d'au moins 1:1, en particulier d'au moins 1,25:1, de préférence d'au moins 1,5:1, d'une manière particulièrement préférée d'au moins 2:1, d'une manière tout particulièrement préférée d'au moins 3:1, et/ou
dans lequel le système adsorbant (1) comprend au moins 5 particules d'adsorbant (A) et/ou (B), en particulier au moins 10 particules d'adsorbant (A) et/ou (B), de préférence au moins 15 particules d'adsorbant (A) et/ou (B), d'une manière particulièrement préférée au moins 20 particules d'adsorbant (A) et/ou (B), et/ou dans lequel le système adsorbant (1) et/ou chacun des agglomérats individuels comprenne jusqu'à 50 particules d'adsorbant (A) et/ou (B), en particulier jusqu'à 75 particules d'adsorbant (A) et/ou (B), de préférence jusqu'à 100 particules d'adsorbant (A) et/ou (B), ou plus, et/ou
dans lequel le système adsorbant (1) comprend le premier matériau d'adsorption particulaire (A) et le deuxième matériau d'adsorption particulaire (B) selon un rapport en poids entre le premier matériau d'adsorption particulaire (A) et le deuxième matériau d'adsorption particulaire (B) d'au moins 1:1, en particulier d'au moins 1,2:1, de préférence d'au moins 1,5:1, d'une manière particulièrement préférée d'au moins 2:1, et/ou
dans lequel le système adsorbant (1) est conçu sous forme particulaire, en particulier dans lequel le système adsorbant (1) présente un diamètre moyen des particules D50 compris dans la plage de 0,01 à 20 mm, en particulier de 0,05 à 15 mm, de préférence de 0,1 à 10 mm, d'une manière particulièrement préférée de 0,2 à 7,5 mm, d'une manière tout particulièrement préférée de 0,5 à 5 mm.

11. Système adsorbant selon l'une des revendications 3 à 10,
dans lequel le liant (2) est constitué à base d'un polymère organique ou en est constitué, en particulier dans lequel le polymère organique est conçu en étant thermoplastique et/ou dans lequel le polymère organique est conçu comme étant collant à chaud et/ou dans lequel le polymère organique est choisi parmi les polymères du groupe consistant en les polyesters, les polyamides, les polyéthers, les polyétheresters et/ou les polyuréthannes, ainsi que les mélanges et copolymères de ceux-ci, en particulier dans lequel le polymère organique, en particulier le liant, de préférence l'adhésif fusible, est solide à 25°C et sous la pression atmosphérique, et/ou le polymère organique, en particulier le liant, de préférence l'adhésif fusible, présente une plage de fusion ou de ramollissement supérieure à 100°C, de préférence supérieure à 110°C, en particulier supérieure à 120°C, et/ou le polymère organique, en particulier le liant, de préférence l'adhésif fusible, présente une résistance à la chaleur d'au moins 100°C, de préférence d'au moins 125°C, en particulier d'au moins 150°C.

12. Utilisation de systèmes adsorbants (1) tels que définis dans les revendications 3 à 11, comprenant un grand nombre de particules d'adsorbant, pour l'adsorption de poisons, de polluants et d'odeurs, provenant en particulier de courants de gaz ou d'air, ou aussi de liquides, en particulier l'eau, ou
pour la purification ou la préparation de gaz, de courants de gaz ou de mélanges gazeux, en particulier d'air, ou de liquides, en particulier l'eau, ou
pour une utilisation dans les filtres à adsorption et/ou pour fabriquer des filtres, en particulier des filtres à adsorption, ou
en tant qu'accumulateur à sorption pour des gaz, en particulier l'hydrogène, ou
pour la fabrication d'objets façonnés adsorbants, en particulier par compression.

13. Objet moulé adsorbant, constitué d'un grand nombre de systèmes adsorbants (1) tels que définis dans les revendications 3 à 11.

14. Filtre comprenant un objet façonné adsorbant selon la revendication 13.
